# EUROPEAN PATENT APPLICATION

(11) **EP 4 694 467 A1**
(43) Date of publication of application: **11.02.2026**
(21) Application number: 23944676.8
(22) Date of filing: 12.07.2023
(51) Int. Cl.: H04W 72/12

(54) **WIRELESS COMMUNICATION METHOD, COMMUNICATION DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Taor, Simon Edward William
(86) International application number: PCT/CN2023/106983
(87) International publication number: WO 2025/010656

(57) **Abstract**

The present application provides a wireless communication method, a device, and a storage medium. The method comprises: if a terminal device determines on the basis of a first time domain resource and a second time domain resource that a first downlink transmission and a first uplink transmission collide in the time domain, performing communication on the basis of a target mode, wherein the first time domain resource is used for the first downlink transmission, the second time domain resource is used for the first uplink transmission, and the second time domain resource is determined on the basis of timing advance (TA) of the terminal device.

## Description

### TECHNICAL FIELD

Embodiments of the disclosure relate to the technical field of mobile communications, and in particular to, a method for wireless communication, a communication device, and a storage medium.

### BACKGROUND

A Non Terrestrial Network (NTN) provides communication services to ground users by satellite communication. Compared with a ground cellular network communication, the satellite communication has many unique advantages, for example, it is not limited by the users' geographical areas, and has a long communication distance and a high stability, etc.

An NTN system in the related art supports only terminal devices with high processing capabilities. If a compact terminal with reduced capability is introduced into the NTN system, how to control communication between the terminal device and a network device is a problem that needs to be solved, in view of the fact that the compact terminal does not support characteristics of receiving and sending simultaneously.

### SUMMARY

The embodiments of the disclosure provide a method and device for wireless communication, and a storage medium.

A method for wireless communication provided in an embodiment of the disclosure includes the following operations.

A terminal device performs communication based on a target mode if collision of a first downlink (DL) transmission with a first uplink (UL) transmission in a time domain is determined by the terminal device according to a first time domain resource and a second time domain resource. The first time domain resource is used for the first DL transmission, the second time domain resource is used for the first UL transmission, and the second time domain resource is determined based on Timing Advance (TA) of the terminal device.

A method for wireless communication provided in an embodiment of the disclosure includes the following operations.

A network device sends a first DL transmission and receives a first UL transmission.

Or, the network device performs communication based on a target mode if the collision of the first DL transmission with the first UL transmission in a time domain is determined by the network device according to a first time domain resource and a second time domain resource.

The first time domain resource is a time domain resource for a terminal device to receive the first DL transmission, the second time domain resource is a time domain resource for the terminal device to send the first UL transmission, and the second time domain resource is determined based on TA of the terminal device.

A terminal device provided in an embodiment of the disclosure includes a first communication unit.

The first communication unit is configured to perform communication based on a target mode if collision of a first DL transmission with a first UL transmission in a time domain is determined according to a first time domain resource and a second time domain resource. The first time domain resource is used for the first DL transmission, the second time domain resource is used for the first UL transmission, and the second time domain resource is determined based on TA of the terminal device.

A network device provided in an embodiment of the disclosure includes a second communication unit.

The second communication unit is configured to:
send a first DL transmission and receive a first UL transmission; or
perform communication based on a target mode if the collision of the first DL transmission with the first UL transmission in a time domain is determined according to a first time domain resource and a second time domain resource.

The first time domain resource is a time domain resource for a terminal device to receive the first DL transmission, the second time domain resource is a time domain resource for the terminal device to send the first UL transmission, and the second time domain resource is determined based on TA of the terminal device.

A communication device provided in an embodiment of the disclosure may be the terminal device in the above solution or the network device in the above solution, and the communication device includes a processor and a memory. The memory is configured to store a computer program, and the processor is configured to invoke and run the computer program stored in the memory, to perform the above method for wireless communication.

A chip provided in an embodiment of the disclosure is configured to implement the above method for wireless communication.

Specifically, the chip includes a processor, the processor is configured to invoke and run a computer program from a memory, such that a device mounted with the chip performs the above method for wireless communication.

A computer-readable storage medium provided in an embodiment of the disclosure is configured to store a computer program, the computer program enables a computer to perform the above method for wireless communication.

A computer program product provided in an embodiment of the disclosure includes computer program instructions, the computer program instructions enable a computer to perform the above method for wireless communication.

A computer program provided in an embodiment of the disclosure enables a computer to perform the above method for wireless communication, when it is executed on the computer.

According to the above technical solutions, time domain resources of the terminal device used for the UL transmission are determined based on the TA of the terminal device, therefore influence of the TA on the UL transmission of the terminal device is considered, and communication behaviors of the terminal device in case that the UL transmission collides with the DL transmission in the time domain are regulated. Thus, the compact terminal that does not support characteristics of receiving and sending simultaneously, that is, a half-duplex terminal (a half-duplex User Equipment (HD-UE)), is especially enabled to perform communication normally, thereby achieving a better data transmission throughput, and improving communication reliability and efficiency.

### BRIEF DESCRIPTION OF THE DRAWINGS

The drawings described here are intended to provide further understanding of the disclosure, and constitute a part of the disclosure. Exemplary embodiments of the disclosure and descriptions thereof are intended to explain the disclosure, and do not constitute undue limitation of the disclosure. In the drawings:
FIG. 1 is a schematic diagram of an application scenario according to an embodiment of the disclosure;
FIG. 2 is a schematic diagram of an architecture of another communication system provided in an embodiment of the disclosure;
FIG. 3 is a schematic diagram of an architecture of another communication system provided in an embodiment of the disclosure;
FIG. 4 is a schematic diagram of an NTN scenario based on a transparent payload satellite provided in an embodiment of the disclosure;
FIG. 5 is a schematic diagram of an NTN scenario based on a regenerative payload satellite provided in an embodiment of the disclosure;
FIG. 6 is an optional schematic flowchart of a method for wireless communication provided in an embodiment of the disclosure;
FIG. 7 is an optional schematic flowchart of a method for wireless communication provided in an embodiment of the disclosure;
FIG. 8 is an optional schematic diagram of TA-based time domain resource adjustment provided in an embodiment of the disclosure;
FIG. 9 is an optional schematic diagram of a scheduling time sequence provided in an embodiment of the disclosure;
FIG. 10 is an optional schematic diagram showing collision of a UL transmission with a DL transmission in a time domain provided in an embodiment of the disclosure;
FIG. 11 is an optional schematic diagram of a scheduling time sequence provided in an embodiment of the disclosure;
FIG. 12 is an optional schematic diagram showing collision of a UL transmission with a DL transmission in a time domain provided in an embodiment of the disclosure;
FIG. 13 is an optional schematic diagram showing collision of a UL transmission with a DL transmission in a time domain provided in an embodiment of the disclosure;
FIG. 14 is an optional schematic diagram of a scheduling time sequence provided in an embodiment of the disclosure;
FIG. 15 is an optional schematic diagram of a scheduling time sequence provided in an embodiment of the disclosure;
FIG. 16 is an optional schematic diagram of a scheduling time sequence provided in an embodiment of the disclosure;
FIG. 17 is an optional schematic diagram of a scheduling time sequence provided in an embodiment of the disclosure;
FIG. 18 is an optional schematic diagram of a scheduling time sequence provided in an embodiment of the disclosure;
FIG. 19 is an optional schematic diagram of a scheduling time sequence provided in an embodiment of the disclosure;
FIG. 20A is an optional schematic flowchart of a method for wireless communication provided in an embodiment of the disclosure;
FIG. 20B is an optional schematic flowchart of a method for wireless communication provided in an embodiment of the disclosure;
FIG. 21 is an optional schematic structural diagram of a terminal device provided in an embodiment of the disclosure;
FIG. 22 is an optional schematic structural diagram of a network device provided in an embodiment of the disclosure;
FIG. 23 is a schematic structural diagram of a communication device provided in an embodiment of the disclosure;
FIG. 24 is a schematic structural diagram of a chip according to an embodiment of the disclosure; and
FIG. 25 is a schematic block diagram of a communication system provided in an embodiment of the disclosure.

### DETAILED DESCRIPTION

Technical solutions in the embodiments of the disclosure will be described below with reference to the drawings in the embodiments of the disclosure. It is apparent that the described embodiments are part of the embodiments of the disclosure, rather than all of the embodiments. Based on the embodiments in the disclosure, all other embodiments obtained by those of ordinary skill in the art without paying any creative work belong to the scope of protection of the disclosure.

Communication system scenarios include a Terrestrial Network (TN) and a Non Terrestrial Network (NTN). The NTN usually provides communication services to ground users by satellite communication. At present, NTN systems include a New Radio Non Terrestrial Network (NR-NTN) system and an Internet of Things Non Terrestrial Network (IoT-NTN) system, and may further include other NTN systems in the future.

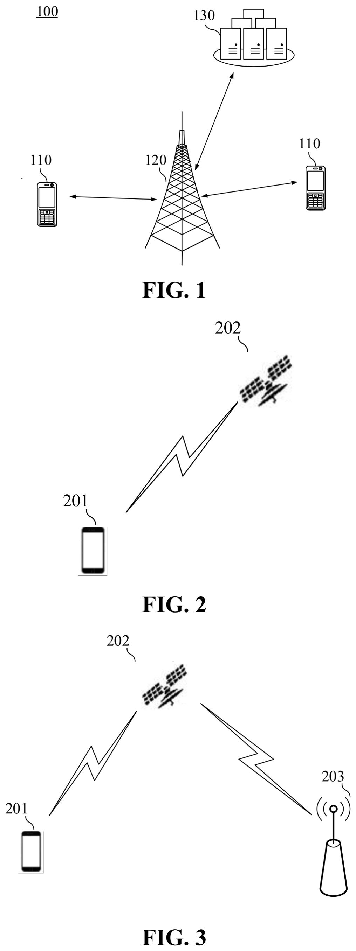

FIG. 1 is a schematic diagram of an architecture of a communication system provided in an embodiment of the disclosure. As shown in FIG. 1, a communication system 100 may include terminal devices 110 and a network device 120. The network device 120 may communicate with the terminal devices 110 through air interfaces. The terminal devices 110 and the network device 120 support multi-service transmission there-between.

It should be understood that the embodiments of the disclosure are only exemplified by the communication system 100, however, the embodiments of the disclosure are not limited thereto. That is, the technical solutions in the embodiments of the disclosure may be applied to various communication systems, such as a Long Term Evolution (LTE) system, an LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or a future communication system, etc.

In the communication system 100 shown in FIG. 1, the network device 120 may be an access network device that communicates with the terminal devices 110. The access network device may provide communication coverage for a specific geographical area, and may communicate with the terminal devices 110 (such as User Equipment (UE)) located in the coverage area.

The network device 120 may be an Evolutional Node B (eNB or eNodeB) in an LTE system, or a Next Generation Radio Access Network (NG RAN) device, or a base station (a global NodeB (gNB)) in an NR system, or a wireless controller in a Cloud Radio Access Network (CRAN); or, the network device 120 may be a relay station, an access point, a vehicle-mounted device, a wearable device, a hub, a switch, a network bridge, a router, or a network device in a future evolved Public Land Mobile Network (PLMN), etc.

The terminal device 110 may be any terminal device, which includes, but is not limited to a terminal device connected to the network device 120 or other terminal devices through a wired or wireless connection.

For example, the terminal device 110 may refer to an access terminal, UE, a user unit, a user station, a mobile station, a mobile radio station, a remote station, a remote terminal, a mobile device, a user terminal, a terminal, a device for wireless communication, a user agent or a user device. The access terminal may be a cellphone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device or other processing devices connected to a wireless modem, a vehicle-mounted device, a wearable device, a terminal device in a 5G network, or a terminal device in a future evolved network, etc.

The terminal device 110 may be used for Device to Device (D2D) communication.

The system for wireless communication 100 may further include a core network device 130 that communicates with the base station, the core network device 130 may be a 5G Core (5GC) device, for example, an Access and Mobility Management Function (AMF), and for another example, an Authentication Server Function (AUSF), and for another example, a User Plane Function (UPF), and for another example, a Session Management Function (SMF). Optionally, the core network device 130 may also be an Evolved Packet Core (EPC) device of an LTE network, such as a Session Management Function + Core Packet Gateway (SMF + PGW-C) device. It should be understood that SMF + PGW-C may simultaneously implement functions that SMF and PGW-C may implement. In a process of network evolution, the above core network device may also be referred by other names, or a new network entity may be formed by dividing functions of the core network, which is not limited in the embodiments of the disclosure.

Various functional units in the communication system 100 may also establish connections there-between through a next generation (NG) interface, to achieve communication.

For example, the terminal device establishes an air interface connection with the access network device through an Uu interface, to transmit user plane data and control plane signaling; the terminal device may establish a control plane signaling connection with the AMF through an NG interface 1 (abbreviated as N1); the access network device, such as a next generation wireless access base station (gNB), may establish a user plane data connection with the UPF through an NG interface 3 (abbreviated as N3); the access network device may establish a control plane signaling connection with the AMF through an NG interface 2 (abbreviated as N2); the UPF may establish a control plane signaling connection with the SMF through an NG interface 4 (abbreviated as N4); the UPF may exchange user plane data with a data network through an NG interface 6 (abbreviated as N6); the AMF may establish a control plane signaling connection with the SMF through an NG interface 11 (abbreviated as N11); the SMF may establish a control plane signaling connection with a Packet Control Function (PCF) through an NG interface 7 (abbreviated as N7).

One base station, one core network device and two terminal devices are exemplarily shown in FIG. 1. Optionally, the system for wireless communication 100 may include multiple base station devices, and another number of terminal devices may be included in the coverage of each base station, which is not limited in the embodiments of the disclosure.

The NTN generally provides communication services to ground users by satellite communication. Compared with a ground cellular network communication, the satellite communication has many unique advantages. First, the satellite communication is not limited by the users' geographical areas. For example, a usual terrestrial communication cannot cover areas such as oceans, mountains, deserts or the like where communication devices cannot be set up, or cannot cover areas where there is no communication coverage due to a sparse population. As to the satellite communication, since a large ground may be covered by one satellite, and the satellite may make an orbital motion around the earth, then every corner of the earth may be covered by the satellite communication theoretically. Secondly, the satellite communication has a great social value. Remote mountainous areas, poor and backward countries or regions may be covered by the satellite communication at a low cost, such that people in these areas may enjoy advanced voice communications and mobile Internet technologies, which is beneficial to narrow digital divide with developed regions and promote development of these areas. Thirdly, the satellite communication has a long distance, and communication cost does not increase significantly as the communication distance increases. Finally, the satellite communication has a high stability, and is not limited by natural disasters.

An NTN technology may be combined with various communication systems. For example, the NTN technology may be combined with the NR system to form an NR-NTN system. For another example, the NTN technology may be combined with the IoT system to form an IoT-NTN system. As an example, the IoT-NTN system may include an NB-IoT-NTN system and an eMTC-NTN system.

FIG. 2 is a schematic diagram of an architecture of another communication system provided in an embodiment of the disclosure.

As shown in FIG. 2, a terminal device 201 and a satellite 202 are included, and wireless communication may be performed between the terminal device 201 and the satellite 202. A network formed between the terminal device 201 and the satellite 202 may also be referred to as an NTN. In the architecture of the communication system shown in FIG. 2, the satellite 202 may have functions of a base station, and the terminal device 201 and the satellite 202 may directly communicate there-between. Under the architecture of the system, the satellite 202 may be referred to as a network device. In some embodiments of the disclosure, multiple network devices 1102 may be included in the communication system, and another number of terminal devices may be included in the coverage of each network device 1102, which is not limited in the embodiments of the disclosure.

FIG. 3 is a schematic diagram of an architecture of another communication system provided in an embodiment of the disclosure.

As shown in FIG. 3, a terminal device 201, a satellite 202 and a base station 203 are included, wireless communication may be performed between the terminal device 201 and the satellite 202, and the satellite 202 and the base station 203 may communicate there-between. A network formed between the terminal device 201, the satellite 202 and the base station 203 may also be referred to as an NTN. In the architecture of the communication system shown in FIG. 3, the satellite 202 may not have functions of a base station, and communicate between the terminal device 201 and the base station 203 needs to be transferred through the satellite 202. Under the architecture of the system, the base station 203 may be referred to as a network device. In some embodiments of the disclosure, multiple base stations 203 may be included in the communication system, and another number of terminal devices may be included in the coverage of each base station 203, which is not limited in the embodiments of the disclosure. The base station 203 may be the network device 120 in FIG. 1.

It should be understood that the above satellite 202 includes, but is not limited to:
a Low-Earth Orbit (LEO) satellite, a Medium-Earth Orbit (MEO) satellite, a Geostationary Earth Orbit (GEO) satellite, a High Elliptical Orbit (HEO) satellite, etc. The satellite may cover the ground by multiple beams. For example, one satellite may form dozens or even hundreds of beams to cover the ground. In other words, one satellite beam may cover a ground area with a diameter of tens to hundreds of kilometers, to ensure coverage of the satellite and improve a system capacity of the entire satellite communication system.

As an example, an altitude range of the LEO satellite may be 500 km to 1500 km, a corresponding orbital period may be about 1.5 hours to 2 hours, a signal propagation latency of single-hop communication between users may usually be less than 20 ms, a maximum satellite visibility time may be 20 minutes, the LEO satellite has a shot signal propagation distance and a small link loss, and its requirement on transmission power of the user terminal is not high. An orbital altitude of the GEO satellite may be 35786 km, a period of rotating around the earth may be 24 hours, and a signal propagation latency of single-hop communication between users may usually be 250 ms.

In order to ensure coverage of the satellite and improve the system capacity of the entire satellite communication system, the satellite covers the ground by multiple beams. One satellite may form dozens or even hundreds of beams to cover the ground, and one satellite beam may cover a ground area with a diameter of tens to hundreds of kilometers.

It should be noted that FIG. 1 to FIG. 3 only show the system to which the disclosure is applicable by way of example. Of course, methods shown in the embodiments of the disclosure may also be applicable to other systems. Furthermore, terms "system" and "network" in the disclosure may usually be used interchangeably in the disclosure. In the disclosure, term "and/or" is only an association relationship describing associated objects, and represents that three relationships may exist. For example, A and/or B may represent three situations, that is, existence of A alone, existence of both A and B, and existence of B alone. Furthermore, character "/" in the disclosure usually represents that anterior and posterior associated objects are in an "or" relationship. It should also be understood that "indicate" mentioned in the embodiments of the disclosure may be a direct indication or an indirect indication, or may represent existence of an association relationship. For example, A indicates B, which may represent that A directly indicates B, for example, B may be obtained through A; or may represent that A indirectly indicates B, for example, A indicates C, B may be obtained through C; or may represent that there is an association relationship between A and B. It should also be understood that "correspond" mentioned in the embodiments of the disclosure may represent that there is a direct or indirect correspondence between two objects, or may represent that there is an association relationship between two objects, or may represent an indicating and indicated relationship, a configuring and configured relationship, etc. It should also be understood that "predefined" or "predefined rule" mentioned in the embodiments of the disclosure may be implemented by pre-saving corresponding codes, tables in a device (for example, including the terminal device and the network device) or in other manners that may indicate relevant information, and specific implementation thereof is not limited in the disclosure. For example, "predefined" may refer to "defined" in a protocol. It should also be understood that in the embodiments of the disclosure, the "protocol" may refer to a standard protocol in the field of communications, for example, may include an LTE protocol, an NR protocol, and relevant protocols applied to future communication systems, which is not limited in the disclosure.

Satellites may be divided into two types of satellites based on functions they provide: a transparent payload satellite and a regenerative payload satellite. The transparent payload satellite provides only functions of wireless frequency filtering, frequency conversion and amplification, and provides only transparent payload of a signal, without changing a waveform of the signal it forwards. The regenerative payload satellite may provide functions of demodulation/decoding, routing/conversion and encoding/modulation, in addition to the functions of wireless frequency filtering, frequency conversion and amplification, and has part or all of functions of a base station.

In the NTN, the following network elements may be included: one or more gateways, feeder links, service links, satellites, and inter-satellite links. The gateway is used for communication between the satellite and a terrestrial public network, or used for communication between gNB on the satellite and the core network, or used for communication between a gNB distribution unit (DU) on the satellite and a gNB base station central unit (CU) on the ground. The feeder link is a link for communication between the gateway and the satellite. The service link is a link for communication between the terminal device and the satellite. Satellites may be divided into two types of satellites based on functions they provide: a transparent payload satellite and a regenerative payload satellite. The transparent payload satellite provides only functions of wireless frequency filtering, frequency conversion and amplification, and provides only transparent payload of a signal, without changing a waveform of the signal it forwards. The regenerative payload satellite may provide functions of demodulation/decoding, routing/conversion and encoding/modulation, in addition to the functions of wireless frequency filtering, frequency conversion and amplification. The regenerative payload satellite has part or all of functions of a base station. The inter-satellite link is a link present between satellites in a regenerative payload network architecture, for communication between the satellites.

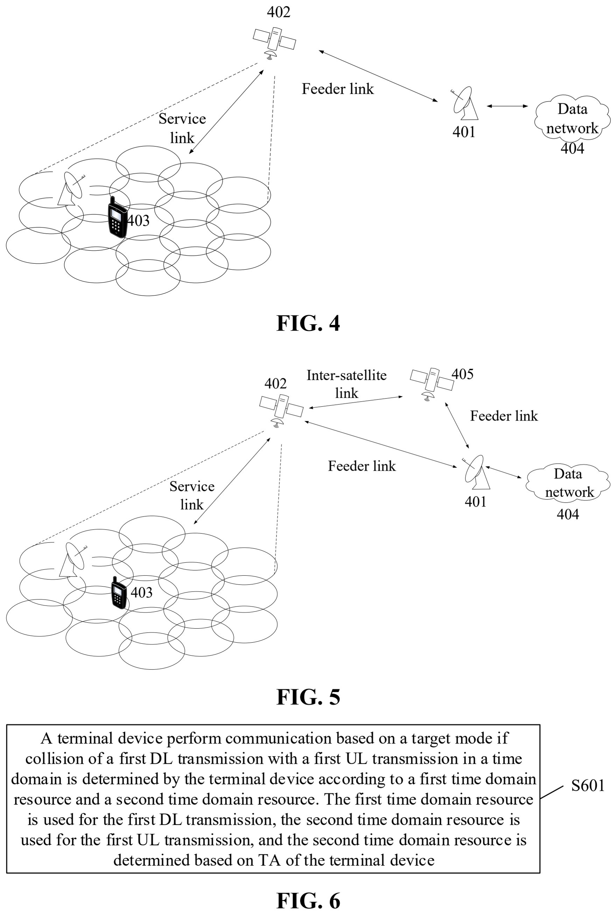

FIG. 4 and FIG. 5 show schematic diagrams of an NTN scenario based on a transparent payload satellite and an NTN scenario based on a regenerative payload satellite respectively.

As shown in FIG. 4, in the NTN scenario based on a transparent payload satellite, a gateway 401 and a satellite 402 communicate there-between through a feeder link, and the satellite 402 and a terminal 403 may communicate there-between through a service link, here the gateway 401 is connected to a data network 404. As shown in FIG. 5, in the NTN scenario based on a regenerative payload satellite, a satellite 402 and a satellite 405 communicate there-between through an inter-satellite link, a gateway 401 and the satellite 402 or the satellite 405 communicate there-between through a feeder link, and the satellite 402 and a terminal 403 may communicate there-between through a service link.

In order to facilitate understanding the technical solutions in the embodiments of the disclosure, relevant technologies related to the embodiments of the disclosure will be described below. As optional solutions, the following relevant technologies may be arbitrarily combined with the technical solutions in the embodiments of the disclosure, and all of them belong to the scope of protection of the embodiments of the disclosure.

### Compact terminal device

In the NR system, a compact terminal with reduced capability is supported in addition to supporting a terminal device with an extremely high peak rate and a high processing capability. The compact terminal is also referred to as a Reduced Capability (RedCap) terminal in standardization, and may usually be applicable to an application scenario with low processing capacity and speed requirements, such as applications of the IoT, industrial automation and the wearable device. Communication hardware of the compact terminal has a small volume and low power consumption, and does not support some complex functional groups, such as high reliability, low latency, Carrier Aggregation (CA), etc. Lightweight capability requirements are characteristics of this type of terminal.

In order to reduce complexity, a half-duplex (HD) compact terminal which is also referred to as a half-duplex UE (HD-UE) is supported in the NR system. When a serving cell operates in a Frequency Division Duplex (FDD) mode, the HD-UE cannot perform operations of receiving and sending simultaneously on the serving cell. Due to such characteristics of inability of receiving and sending simultaneously, the HD-UE is limited to a certain extent when it performs communication in the serving cell operated in the FDD mode. Collision between an uplink (UL) transmission and a downlink (DL) transmission of the HD-UE may include the following situations 1 to 7.

### Situation 1: collision between a dynamically scheduled DL transmission and a dynamically scheduled UL transmission

The dynamically scheduled DL transmission includes a Physical Downlink Shared Channel (PDSCH) scheduled in a Downlink Control Information (DCI) format, or a Channel Status Indicator Reference Signal (CSI-RS) scheduled in the DCI format. The dynamically scheduled UL transmission includes a Physical Uplink Shared Channel (PUSCH) scheduled in a DCI format, a Physical Uplink Control Channel (PUCCH) scheduled in the DCI format, a Physical Random Access Channel (PRACH) scheduled in the DCI format, or a Sounding Reference Signal (SRS) scheduled in the DCI format.

Occurrence of such collision is not expected by the terminal device; in other words, if such collision occurs, the terminal device considers that it is an erroneous scheduling.

### Situation 2: collision between a semi-statically configured DL transmission and a semi-statically configured UL transmission

The semi-statically configured DL transmission includes a Physical Downlink Control Channel (PDCCH) configured by a higher layer, a PDSCH configured by the higher layer, a CSI-RS configured by the higher layer, or a DL Positioning Reference Signal (PRS) configured by the higher layer, here the PDCCH configured by the higher layer includes a PDCCH in a Type-0/0A/1/2-PDCCH Common Search Space (CSS) configured by common higher-layer parameters, in addition to a PDCCH configured by dedicated higher-layer parameters. The semi-statically configured UL transmission includes an SRS configured by a higher layer, a PUCCH configured by the higher layer, or a PUSCH configured by the higher layer.

Occurrence of such collision is not expected by the terminal device; in other words, if such collision occurs, the terminal device considers that it is an erroneous scheduling.

### Situation 3: collision between a dynamically scheduled DL transmission and a semi-statically configured UL transmission

The dynamically scheduled DL transmission includes a PDSCH scheduled in a DCI format, or a CSI-RS scheduled in the DCI format. The semi-statically configured UL transmission includes an SRS configured by a higher layer, a PUCCH configured by the higher layer, or a PUSCH configured by the higher layer.

If collision in this situation occurs, when the semi-statically configured UL transmission includes the PUCCH or the PUSCH configured by the higher layer, if a first symbol configured to transmit the PUCCH or the PUSCH is in a processing time T_{proc,2} relative to a last symbol of a control resource set CORESET where the above DCI format is detected, it is not expected by the terminal device to cancel transmission of the PUCCH or the PUSCH; otherwise, the terminal device cancels the PUCCH or the PUSCH or a repeated copy in the PUSCH; when the semi-statically configured UL transmission includes the SRS configured by the higher layer, if a symbol configured to transmit the SRS is in the processing time T_{proc,2} relative to the last symbol of CORESET where the above DCI format is detected, it is not expected by the terminal device to cancel transmission of the SRS, and the terminal device cancels transmission at other SRS symbols.

### Situation 4: collision between a semi-statically configured DL transmission and a dynamically scheduled UL transmission

The semi-statically configured DL transmission includes a PDCCH configured by a higher layer, a PDSCH configured by the higher layer, a CSI-RS configured by the higher layer, or a DL PRS configured by the higher layer. The dynamically scheduled UL transmission includes a PUSCH scheduled in a DCI format, a PUCCH scheduled in the DCI format, a PRACH scheduled in the DCI format, or an SRS scheduled in the DCI format.

If the terminal device does not receive the dynamically scheduled UL transmission, the terminal device receives the semi-statically configured DL transmission; otherwise, the terminal device does not receive the semi-statically configured DL transmission.

### Situation 5: collision between a Synchronization signal/Physical broadcast channel block (SS/PBCH block (SSB)) and a dynamically scheduled or semi-statically configured UL transmission

The dynamically scheduled or semi-statically configured UL transmission includes a PUSCH, a PUCCH, an SRS, or a PRACH scheduled in a DCI format.

If collision in this situation occurs, the terminal device does not send the PUSCH, or the PUCCH, or an SRS on an overlapped symbol, or the PRACH scheduled in the DCI format.

### Situation 6: collision between a dynamically scheduled or semi-statically configured DL transmission and a UL transmission on a valid Random Access Channel transmission Occasion (RACH Occasion (RO)).

The UL transmission on the valid RO includes a PRACH triggered by a higher layer or a MsgA PUSCH triggered by the higher layer. The dynamically scheduled or semi-statically configured DL transmission includes a PDCCH, a PDSCH, a CSI-RS, a DL PRS, or an SSB.

If collision in this situation occurs, the terminal device determines to send the UL transmission on the valid RO or to receive the dynamically scheduled or semi-statically configured DL transmission, based on its own implementation.

### Situation 7: collision caused by a switching time from UL to DL or from DL to UL

If a time interval between a last symbol of the UL transmission and a first symbol of a next earliest SSB does not exceed a first switching time, the terminal device does not send the UL transmission, the UL transmission includes a PUCCH configured by a higher layer, a PUSCH configured by the higher layer, or an SRS symbol meeting condition(s), and the first switching time includes a switching time from sending to receiving.

If a time interval between a first symbol of the UL transmission and a last symbol of a previous latest SSB does not exceed a second switching time, the terminal device does not send the UL transmission, the UL transmission includes a PUCCH configured by a higher layer, a PUSCH configured by the higher layer, or an SRS symbol meeting condition(s), and the second switching time includes a switching time from receiving to sending.

If a time interval between a start symbol of the UL transmission and an end symbol of the DL transmission does not exceed the second switching time, or if a time interval between an end symbol of the UL transmission and a start symbol of the DL transmission does not exceed the first switching time, the terminal device determines, based on its own implementation, to send the UL transmission or receive the DL transmission, the first switching time includes the switching time from sending to receiving, the second switching time includes the switching time from receiving to sending, the UL transmission includes a PRACH triggered by a higher layer or a MsgA PUSCH triggered by the higher layer, and the DL transmission includes a PDCCH, a PDSCH, a CSI-RS, a DL PRS, or an SSB.

### Enhancement of a scheduling time sequence in an NR-NTN Network

In the NR-NTN system, in order to overcome a large transmission latency in the NTN system, a UL transmission time sequence relationship in the NR system is enhanced. In the NR system, the terminal device receives a DL transmission on a slot n, and the DL transmission may schedule a UL transmission on a slot n+k. In the NR-NTN system, the terminal device receives a DL transmission on a slot n, and the DL transmission may schedule a UL transmission on a slot n+k+K_{offset}, here K_{offset} is an offset parameter introduced to overcome the large transmission latency in the NTN system. Specifically, K_{offset} = K_{cell,offset} - K_{UE,offset}, here K_{cell,offset} is a common higher-layer parameter such as an offset parameter configured in a system message, and K_{UE,offset} is a dedicated higher-layer parameter such as an offset parameter configured by a differential Koffset Media Access Control Control Element (MAC CE) command. If there is no corresponding configuration, K_{cell,offset} or K_{UE,offset} takes a value of 0 correspondingly.

The DL transmission includes a PDCCH, and the UL transmission includes a PUSCH scheduled by the PDCCH; or, the DL transmission includes a PDCCH, and the UL transmission includes a Hybrid Automatic Repeat reQuest Acknowledgement (HARQ-ACK) feedback corresponding to a PDSCH scheduled by the PDCCH; or, the DL transmission includes Random Access Response (RAR) grant information, and the UL transmission includes a PUSCH scheduled by the RAR grant information.

Furthermore, in the NR-NTN system, the network device may also configure a parameter Kmac for the terminal device. Kmac is a common higher-layer parameter such as an offset parameter configured in a system message, and represents a round-trip transmission latency between a Reference Point (RP) and the network device. Slots of the DL transmission and the UL transmission in the network are aligned at the RP.

Only terminal devices with high processing capabilities are supported in the above NR-NTN system. If a compact terminal is introduced into the NR-NTN system, it is unclear how to regulate communication behaviors of the HD-UE such that the HD-UE may perform communication normally in the serving cell operated in the FDD mode, in view of the fact that the compact terminal does not support characteristics of receiving and sending simultaneously.

In order to facilitate understanding the technical solutions in the embodiments of the disclosure, the technical solutions of the disclosure will be described in detail below through specific embodiments. As optional solutions, the above relevant technologies may be arbitrarily combined with the technical solutions in the embodiments of the disclosure, and all of them belong to the scope of protection of the embodiments of the disclosure. The embodiments of the disclosure include at least a part of the following contents.

A method for wireless communication provided in an embodiment of the disclosure is shown in FIG. 6, is applied to a terminal device, and includes the following operation S601.

In operation S601, a terminal device performs communication based on a target mode if collision of a first DL transmission with a first UL transmission in a time domain is determined by the terminal device according to a first time domain resource and a second time domain resource. The first time domain resource is used for the first DL transmission, the second time domain resource is used for the first UL transmission, and the second time domain resource is determined based on Timing Advance (TA) of the terminal device.

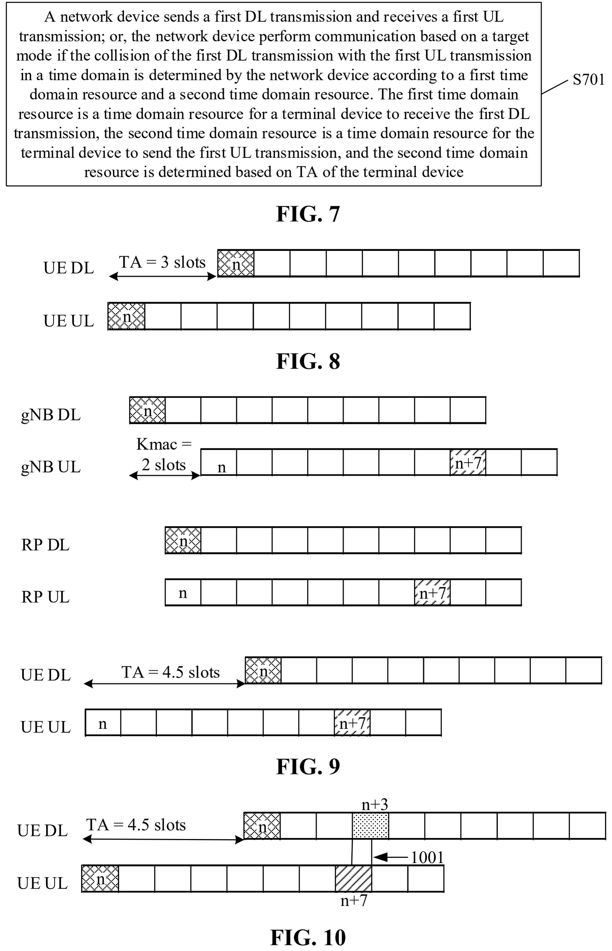

A method for wireless communication provided in an embodiment of the disclosure is shown in FIG. 7, is applied to a network device, and includes the following operation S701.

In operation S701, a network device sends a first DL transmission and receives a first UL transmission. Or, the network device performs communication based on a target mode if the collision of the first DL transmission with the first UL transmission in a time domain is determined by the network device according to a first time domain resource and a second time domain resource. The first time domain resource is a time domain resource for a terminal device to receive the first DL transmission, the second time domain resource is a time domain resource for the terminal device to send the first UL transmission, and the second time domain resource is determined based on TA of the terminal device.

The methods for wireless communication shown in FIG. 6 and FIG. 7 provided in the embodiments of the disclosure will be described below.

The first time domain resource may be understood as using for reception of the first DL transmission of the terminal device, or as a time domain resource for the terminal device to receive the first DL transmission. The second time domain resource may be understood as using for sending of the first UL transmission of the terminal device, or as a time domain resource for the terminal device to send the first UL transmission. The second time domain resource is a time domain resource after the TA of the terminal device is considered.

In some embodiments, the first time domain resource is determined according to a DL receiving time unit of the terminal device, the second time domain resource is determined according to a UL sending time unit of the terminal device. The collision of the first DL transmission with the first UL transmission in the time domain means that from the perspective of the terminal device, the first DL transmission received by the terminal device on the first time domain resource may collide with the first UL transmission sent by the terminal device on the second time domain resource in the time domain. It may be understood that the first DL transmission may not or may collide with the first UL transmission in a frequency domain, which is not limited in the disclosure.

In an example, as shown in FIG. 8, the UL sending time unit of the terminal device is advanced by 3 slots relative to the DL receiving time unit of the terminal device. It may be understood that relative to the DL receiving time unit of the terminal device, influence of the TA of the terminal device is taken into consideration for the UL sending time unit of the terminal device.

In an example, in the NR-NTN system, when the terminal device does not support simultaneous receiving and sending, for example, when the terminal device is an HD-UE, it needs to consider influence of a scheduling time sequence on transmission of the terminal device. FIG. 9 gives a schematic diagram of a scheduling time sequence in the NR-NTN system. As shown in FIG. 9, assuming that a UL time unit and a DL time unit in the NTN network are aligned at a RP, a round-trip transmission latency Kmac between the network device and the RP in the NTN network is 2 slots, and a round-trip transmission latency between the terminal device and the RP, that is, a value of the TA is 4.5 slots, then when the network device schedules the terminal device to perform a UL transmission, a value of K_{offse}t configured by the network device for the terminal device should be equal to or greater than the value of the TA of the terminal device. In the example of FIG. 9, a value of k is 2 and the value of K_{offse}t is 5, which meets this condition. The terminal device receives a DL transmission at a slot n, and the DL transmission schedules the terminal device to send the UL transmission at a slot n+7. Considering the TA, a UL slot n of the terminal device is advanced by 4.5 slots relative to a DL slot n of the terminal device.

It may be understood that as to the network device, the first time domain resource or the second time domain resource is a time domain resource calculated by the network device from the perspective of the terminal device, rather than a time domain resource for the network device to send the DL transmission actually or a time domain resource for the network device to receive the UL transmission actually. For example, the network device schedules the terminal device to receive the first DL transmission on the first time domain resource and send the first UL transmission on the second time domain resource. From the perspective of the network device, the first DL transmission does not collide with the first UL transmission in the time domain; however, it does not mean that from the perspective of the terminal device, the first DL transmission does not collide with the first UL transmission in the time domain, either. If the network device may acquire TA information of the terminal device (for example, the terminal device reports its own TA information to the network device), the network device may calculate, based on the TA information of the terminal device, time domain positions of the first time domain resource and the second time domain resource determined from the perspective of the terminal device, thereby determining whether the first DL transmission on the first time domain resource collides with the first UL transmission on the second time domain resource in the time domain from the perspective of the terminal device.

In some embodiments, the TA of the terminal device is determined based on at least one of the following information:
synchronization assistance information sent by a network device;
a TA command sent by the network device; or
Global Navigation Satellite System (GNSS) positioning information of the terminal device.

Optionally, the synchronization assistance information includes at least one of the following information: satellite ephemeris information, common TA parameters, reference time indication information (an epoch time, configured to determine a time t0), or a duration of a target timer. The satellite ephemeris information is configured to acquire a position and/or speed of a satellite in the NTN network, the common TA parameters are configured to acquire a value of TA of the feeder link in the NTN network, the reference time indication information is configured to indicate a reference time t0 associated with the synchronization assistance information (such as satellite ephemeris information of a service satellite and the common TA parameters), and the duration of the target timer is used by the terminal device to determine a time period during which the synchronization assistance information acquired by the terminal device is valid.

Optionally, the TA takes Ts or Tc as a unit, here Tc = 1/(480000 * 4096) seconds, Ts = 1/(15000 * 2048) seconds. It may be understood that in order to facilitate descriptions, the TA may be described as an integer number of slots and/or a fractional number of slots.

If the collision of the first DL transmission with the first UL transmission is determined by the terminal device according to the first time domain resource and the second time domain resource, the terminal device performs communication based on the target mode.

In the embodiments of the disclosure, the terminal device may be a compact terminal device; or, the terminal device may be a non-compact terminal device, which is not limited in the disclosure.

In the embodiments of the disclosure, the terminal device may be an HD terminal device that does not support receiving and sending simultaneously; or, the terminal device may be a full-duplex terminal device that supports receiving and sending simultaneously, which is not limited in the disclosure.

In an example, assuming that the terminal device does not support receiving and sending simultaneously, the terminal device cannot receive the DL transmission on DL symbols overlapped with its own UL transmission; and/or, the terminal device cannot receive the DL transmission in a second switching time before a start symbol of the UL transmission.

In the embodiments of the disclosure, the terminal device and the network device may belong to the NTN network.

In the embodiments of the disclosure, the terminal device may be a terminal device in the serving cell operated in the FDD mode; or, the terminal device may be a terminal device in a service cell operated in a TDD mode, which is not limited in the disclosure.

As an example, the terminal device is a HD terminal device that does not support receiving and sending simultaneously in the serving cell operated in the FDD mode. As another example, the terminal device is a terminal device in the service cell operated in the TDD mode, here the terminal device may be a HD terminal device that does not support receiving and sending simultaneously, or may be a full-duplex terminal device that supports receiving and sending simultaneously.

In the embodiments of the disclosure, the network device may perform one of the following two transmission modes 1 and 2.

Transmission mode 1: the network device sends the first DL transmission and receives the first UL transmission.

Transmission mode 2: the network device performs communication based on the target mode if the collision of the first DL transmission with the first UL transmission in the time domain is determined by the network device according to the first time domain resource and the second time domain resource.

In the transmission mode 1, the network device does not care about or does not know whether the terminal device receives the first DL transmission and whether the terminal device sends the first UL transmission, and the network device directly receives the first UL transmission and sends the first DL transmission.

In the transmission mode 2, the network device determines processing behaviors of the terminal device on the first DL transmission and the first UL transmission from the perspective of the terminal device, and performs corresponding processing behaviors according to the processing behaviors of the terminal device, that is, determines that the first DL transmission collides with the first UL transmission, and then performs communication based on the target mode.

In some embodiments, the collision of the first DL transmission with the first UL transmission may also mean that the first time domain resource collides with the second time domain resource.

In some embodiments, collision modes in which the first DL transmission collides with the first UL transmission include one of the following collision modes 1 and 2.

Collision mode 1: the first time domain resource is overlapped with the second time domain resource in the time domain, here a third time domain resource includes an overlapped part between the first time domain resource and the second time domain resource.

Collision mode 2: a time interval between the first time domain resource and the second time domain resource is less than a transition time, the transition time is a time required for switching between receiving and sending or between sending and receiving, here the first time domain resource is not overlapped with the second time domain resource in the time domain.

In the collision mode 1, the third time domain resource is used for both the first DL transmission and the first UL transmission.

As to at least a part of terminal devices in the embodiments of the disclosure, such as the terminal device that does not support receiving and sending simultaneously, it is unable to receive the first DL transmission and send the first UL transmission on the third time domain resource.

In some embodiments, in the collision mode 1, the fact that the third time domain resource includes the overlapped part between the first time domain resource and the second time domain resource in the time domain includes that:
the third time domain resource is the overlapped part between the first time domain resource and the second time domain resource in the time domain; or
the third time domain resource is a time unit including the overlapped part between the first time domain resource and the second time domain resource in the time domain.

The time unit may include a subframe, a slot, or a symbol, etc. It may be understood that the time domain resource may take a symbol, a slot or a subframe as a unit.

In an example, assuming that the TA is 3 slots, the first time domain resource includes a DL receiving slot n of the terminal device, that is, a DL slot n, and the second time domain resource includes a UL sending slot n+3 of the terminal device, that is, a UL slot n+3, then the first time domain resource is overlapped with the second time domain resource on the DL slot n of the terminal device or the UL slot n+3 of the terminal device, and the third time domain resource includes the DL slot n of the terminal device or the UL slot n+3 of the terminal device.

In an example, assuming that the TA is 2 slots, the first time domain resource is symbols 0 to 10 in a DL slot n of the terminal device, the second time domain resource is symbols 4 to 12 in a UL slot n+2 of the terminal device, then the first time domain resource is overlapped with the second time domain resource on symbols 4 to 10 in the DL slot n of the terminal device or on symbols 4 to 10 in the UL slot n+2 of the terminal device, the third time domain resource is the symbols 4 to 10 in the DL slot n of the terminal device or the symbols 4 to 10 in the UL slot n+2 of the terminal device, or the third time domain resource is the DL slot n or the UL slot n+2 of the terminal device.

In an example, as shown in FIG. 10, the first time domain resource is a DL slot n+3 of the terminal device, and the TA is 4.5 slots, a second slot resource is a UL slot n+7 of the terminal device (it is overlapped with DL slots n+2.5 to 3.5 of the terminal device), and the third time domain resource is UL slots 6.5 to 6 of the terminal device or DL slots n+3 to n+3.5 of the terminal device shown in an area 901, or the third time domain resource is a time unit including an area 1001. When the time unit is a slot, the third time domain resource is the UL slot n+7 of the terminal device or the DL slot n+3 of the terminal device including the area 901.

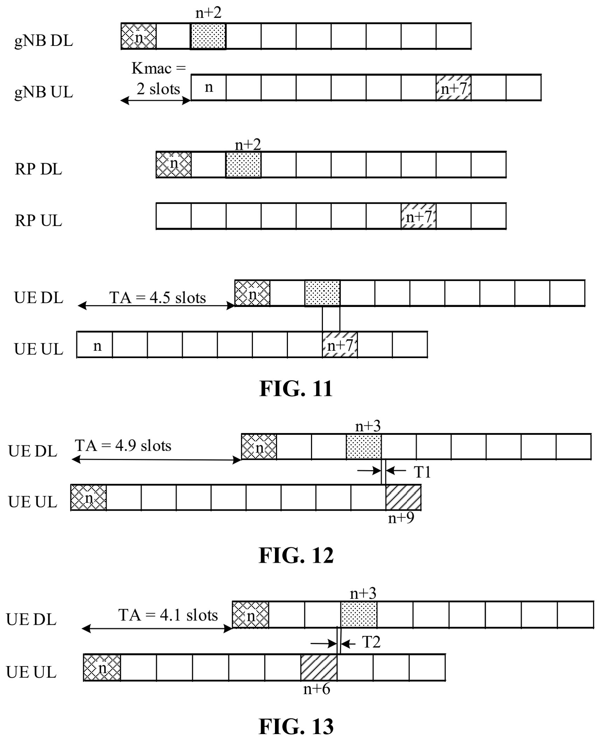

In an example, as shown in FIG. 11, assuming that a UL time unit and a DL time unit in the NTN network are aligned at a RP, a round-trip transmission latency Kmac between the network device and the RP is 2 slots, and a round-trip transmission latency between the terminal device and the RP, that is, a value of the TA is 4.5 slots, then the network device schedules the terminal device to receive the first DL transmission in a DL slot n+2 and send the first UL transmission in a UL slot n+7. In this example, the first time domain resource is the DL slot n+2 determined according to a DL slot of the terminal device, the second time domain resource is the UL slot n+7 determined according to a UL slot of the terminal device, the DL slot n+2 of the terminal device is overlapped with the UL slot n+7 of the terminal device in the time domain, and the third time domain resource includes the overlapped part, that is, the third time domain resource includes a second half of the DL slot n+2 of the terminal device, or the third time domain resource includes a first half of the UL slot n+7 of the terminal device.

An example that a symbol is taken as a unit of the time domain resource is taken, the first time domain resource overlapped with the second time domain resource includes at least one of:
the first UL transmission after influence of the TA is considered is overlapped with at least one symbol from a first group of symbols of the first DL transmission; or
the first DL transmission is overlapped with at least one symbol from a first group of symbols of the first UL transmission after influence of the TA is considered.

The fact that the first UL transmission after influence of the TA is considered is overlapped with at least one symbol from the first group of symbols of the first DL transmission includes that: the first UL transmission after influence of the TA is considered is overlapped with any symbol from the first group of symbols; or, the first UL transmission after influence of the TA is considered is overlapped with part of symbols from the first group of symbols; or, the first UL transmission after influence of the TA is considered is overlapped with all symbols from the first group of symbols.

The fact that the first DL transmission is overlapped with at least one symbol from the first group of symbols of the first UL transmission after influence of the TA is considered includes that: the first DL transmission is overlapped with any symbol from the first group of symbols after influence of the TA is considered; or, the first DL transmission is overlapped with part of symbols from the first group of symbols after influence of the TA is considered; or, the first DL transmission is overlapped with all symbols from the first group of symbols after influence of the TA is considered.

In the collision mode 2, the time interval between the first time domain resource and the second time domain resource is less than a time required for transition of the terminal device between receiving and sending. Therefore, the terminal device does not have enough time to send the first UL transmission or receive the first DL transmission after completing receiving the first DL transmission or sending the first UL transmission.

In some embodiments, in the collision mode 2, the time interval between the first time domain resource and the second time domain resource is 0; in other words, the first time domain resource and the second time domain resource are neighboring time domain resources in the time domain.

In some embodiments, in the collision mode 2, the collision of the first DL transmission with the first UL transmission in the time domain includes:
a time interval between an end position of the first time domain resource and a start position of the second time domain resource is less than a second duration; or
a time interval between an end position of the second time domain resource and a start position of the first time domain resource is less than a third duration.

If the first time domain resource is prior to the second time domain resource, the first DL transmission is prior to the first UL transmission, and the time interval between the end position of the first time domain resource and the start position of the second time domain resource is less than the second duration, then it may be considered that a time interval between the first DL transmission and the first UL transmission is less than a transition time from receiving to sending, and the terminal device does not have enough time to perform transition from receiving to sending.

In an example, as shown in FIG. 12, the first time domain resource is a DL slot n+3 of the terminal device, and the TA is 4.9 slots, a second slot resource is a UL slot n+9 of the terminal device (it is overlapped with DL slots n+3.1 to n+4.1 of the terminal device), then the time interval T1 between the end position of the first time domain resource and the start position of the second time domain resource is 0.1 slot. If 0.1 slot is less than the second duration, it is considered that the first DL transmission collides with the first UL transmission. If 0.1 slot is equal to or greater than the second duration, it is considered that the first DL transmission does not collide with the first UL transmission.

If the second time domain resource is prior to the first time domain resource, the first DL transmission is located after the first UL transmission, and the time interval between the end position of the second time domain resource and the start position of the first time domain resource is less than the third duration, then it may be considered that a time interval between the first UL transmission and the first DL transmission is less than a transition time from sending to receiving, and the terminal device does not have enough time to perform transition from sending to receiving.

In an example, as shown in FIG. 13, the first time domain resource is a DL slot n+3 of the terminal device, and the TA is 4.1 slots, a second slot resource is a UL slot n+6 of the terminal device (it is overlapped with DL slots n+1.9 to n+2.9 of the terminal device), then the time interval T2 between the end position of the second time domain resource and the start position of the first time domain resource is 0.1 slot. If 0.1 slot is less than the third duration, it is considered that the first DL transmission collides with the first UL transmission. If 0.1 slot is equal to or greater than the third duration, it is considered that the first DL transmission does not collide with the first UL transmission.

In some embodiments, the second duration is a length of a transition time for switching from receiving to sending.

And/or, the third duration is a length of a transition time for switching from sending to receiving.

Optionally, the length of the second duration is 25600 * Tc or 13792 * Tc. For example, when an operation band of the serving cell is FR1, the length of the second duration is 25600 * Tc; when the operation band of the serving cell is FR2, the length of the second duration is 13792 * Tc.

Optionally, the length of the third duration is 25600 * Tc or 13792 * Tc. For example, when an operation band of the serving cell is FR1, the length of the third duration is 25600 * Tc; when the operation band of the serving cell is FR2, the length of the third duration is 13792 * Tc.

In some embodiments, the length of the second duration is the same as the length of the third duration.

In the embodiments of the disclosure, when the first DL transmission is a dynamically scheduled DL transmission, a time domain resource occupied by first DCI that schedules the first DL transmission may be referred to as a fourth time domain resource. From the perspective of the terminal, the fourth time domain resource is used for transmission of the first DCI, and from the perspective of the network device, the fourth time domain resource is a time domain resource for the terminal device to receive the first DCI. As an example, the fourth time domain resource includes time domain resource(s) occupied by a control resource set (CORESET) where the first DCI is detected, and an end position of the fourth time domain resource includes a last symbol of the CORESET carrying the first DCI.

In the embodiments of the disclosure, the first DL transmission belongs to one of a DL transmission scheduled by first DCI, a semi-statically configured DL transmission, or an SSB.

In some embodiments, the DL transmission scheduled by the first DCI includes at least one of the following situations:
a PDSCH scheduled in a DCI format; or
a CSI-RS scheduled in the DCI format.

In some embodiments, the semi-statically configured DL transmission includes at least one of the following situations:
a PDCCH configured by a higher layer;
a PDSCH configured by the higher layer;
a CSI-RS configured by the higher layer; or
a DL PRS configured by the higher layer.

In some embodiments, the PDCCH configured by the higher layer includes a PDCCH configured by dedicated higher-layer parameters and/or a PDCCH in a Type-0/0A/1/2-PDCCH CSS configured by common higher-layer parameters.

In the embodiments of the disclosure, the first UL transmission belongs to one of a UL transmission scheduled by second DCI, a semi-statically configured UL transmission, or a UL transmission on RO.

In some embodiments, the UL transmission scheduled by the second DCI includes at least one of the following situations:
a PUSCH scheduled in a DCI format;
a PUCCH scheduled in the DCI format;
a PRACH scheduled in the DCI format; or
an SRS scheduled in the DCI format.

In some embodiments, the semi-statically configured UL transmission includes at least one of the following situations:
an SRS configured by a higher layer;
a PUCCH configured by the higher layer; or
a PUSCH configured by the higher layer.

In some embodiments, the UL transmission on the RO may be a UL transmission on a valid RO.

In the embodiments of the disclosure, when the collision of the first DL transmission with the first UL transmission in the time domain is determined by the terminal device according to the first time domain resource and the second time domain resource, it includes one of the following situations A to F.

Situation A: the DL transmission scheduled by the first DCI collides with the UL transmission scheduled by the second DCI after influence of the TA is considered, in the time domain.

Situation B: the semi-statically configured DL transmission collides with the semi-statically configured UL transmission after influence of the TA is considered, in the time domain.

Situation C: the DL transmission scheduled by the first DCI collides with the semi-statically configured UL transmission after influence of the TA is considered, in the time domain.

Situation D: the semi-statically configured DL transmission collides with the UL transmission scheduled by the second DCI after influence of the TA is considered, in the time domain.

Situation E: the SSB collides with the UL transmission scheduled by the second DCI or the semi-statically configured UL transmission after influence of the TA is considered, in the time domain.

Situation F: the DL transmission scheduled by the first DCI or the semi-statically configured DL transmission collides with the UL transmission on the RO after influence of the TA is considered, in the time domain.

Optionally, in the situation A, the dynamically scheduled DL transmission includes at least one of a PDSCH scheduled in a DCI format or a CSI-RS scheduled in the DCI format. The dynamically scheduled UL transmission includes at least one of a PUSCH scheduled in a DCI format, a PUCCH scheduled in the DCI format, a PRACH scheduled in the DCI format, or an SRS scheduled in the DCI format.

Optionally, in the situation B, the semi-statically configured DL transmission includes at least one of a PDCCH configured by a higher layer, a PDSCH configured by the higher layer, a CSI-RS configured by the higher layer, or a DL PRS configured by the higher layer. Optionally, the PDCCH configured by the higher layer includes a PDCCH configured by dedicated higher-layer parameters and/or a PDCCH in a Type-0/0A/1/2-PDCCH CSS configured by common higher-layer parameters. The semi-statically configured UL transmission includes at least one of an SRS configured by a higher layer, a PUCCH configured by the higher layer, or a PUSCH configured by the higher layer.

Optionally, in the situation C, the dynamically scheduled DL transmission includes at least one of a PDSCH scheduled in a DCI format or a CSI-RS scheduled in the DCI format. The semi-statically configured UL transmission includes at least one of an SRS configured by a higher layer, a PUCCH configured by the higher layer, or a PUSCH configured by the higher layer.

Optionally, in the situation D, the semi-statically configured DL transmission includes at least one of a PDCCH configured by a higher layer, a PDSCH configured by the higher layer, a CSI-RS configured by the higher layer, or a DL PRS configured by the higher layer. Optionally, the PDCCH configured by the higher layer includes a PDCCH configured by dedicated higher-layer parameters and/or a PDCCH in a Type-0/0A/1/2-PDCCH CSS configured by common higher-layer parameters. The dynamically scheduled UL transmission includes at least one of a PUSCH scheduled in a DCI format, a PUCCH scheduled in the DCI format, a PRACH scheduled in the DCI format, or an SRS scheduled in the DCI format.

Optionally, in the situation E, the dynamically scheduled or semi-statically configured UL transmission includes at least one of a PUSCH, a PUCCH, an SRS, or a PRACH scheduled in a DCI format.

Optionally, in the situation F, the UL transmission on the RO is a UL transmission on a valid RO.

Optionally, the UL transmission on the valid RO includes a PRACH triggered by a higher layer or a MsgA PUSCH triggered by the higher layer. The dynamically scheduled or semi-statically configured DL transmission includes at least one of a PDCCH, a PDSCH, a CSI-RS, a DL PRS, or an SSB.

In the embodiments of the disclosure, at least one of the collision mode 1 or the collision mode 2 is included in each of the above situations.

When the terminal device does not support receiving and sending simultaneously, as shown in FIG. 9, DL symbols are overlapped with the UL transmission of the terminal device. If the DL transmission of the terminal device is scheduled on these DL symbols, the terminal device requires a clear rule to regulate behaviors of the terminal device.

An implementation is that the network device avoids the UL transmission of the terminal device from colliding with the DL transmission of the terminal device during scheduling. For example, in the TN network, occurrence of collision between the DL transmission dynamically scheduled by the network device and the UL transmission dynamically scheduled by the network device is not expected by the terminal device, and if such collision occurs, the terminal device may consider it as an erroneous scheduling situation, for example, the terminal device neither performs the DL transmission nor the UL transmission. However, in the NR-NTN network, influence of the TA of the terminal device cannot be ignored due to a large transmission latency of a signal, therefore it becomes difficult for the network device to avoid the UL transmission of the terminal device from colliding with the DL transmission of the terminal device through scheduling.

In the embodiments of the disclosure, when the first time domain resource collides with the second time domain resource after the TA is considered, the terminal device performs communication based on the target mode.

Different collision modes and processing behaviors of the terminal device in different situations will be described below respectively.

### Situation A for collision mode 1

In some embodiments, the operation of performing, by the terminal device, communication based on the target mode includes the following mode 1-1.

Mode 1-1: the terminal device sends the first UL transmission on the third time domain resource, and/or the terminal device does not receive the first DL transmission on the third time domain resource.

Here, it may be considered that priority of the UL transmission is higher than that of the DL transmission.

In the mode 1-1, if the terminal device receives dynamic scheduling of a DL transmission and dynamic scheduling of a UL transmission, here time domain resources occupied by the UL transmission after influence of the TA is considered are partially or completely overlapped with time domain resources occupied by the DL transmission, and the third time domain resource includes the overlapped part, then the terminal device sends the dynamically scheduled UL transmission on the third time domain resource, and/or the terminal device does not receive the dynamically scheduled DL transmission on the third time domain resource.

In an example, if the terminal device detects first DCI for scheduling to receive the first DL transmission on a first group of symbols, the terminal device detects second DCI for scheduling to send the first UL transmission, and the first UL transmission after influence of the TA is considered is overlapped with at least one symbol from the first group of symbols, then the terminal device sends the first UL transmission on the overlapped symbols, and/or the terminal device does not receive the first DL transmission on the overlapped symbols.

In some embodiments, the operation of performing, by the terminal device, communication based on the target mode includes one of the following situations or modes 1-2 to 1-6.

Mode 1-2: the terminal device does not send the first UL transmission on the third time domain resource, and/or the terminal device receives the first DL transmission on the third time domain resource.

Mode 1-3: when a time interval between an end position of a fourth time domain resource and a start position of the second time domain resource is less than a first duration, the terminal device sends the first UL transmission on the third time domain resource, and/or the terminal device does not receive the first DL transmission on the third time domain resource.

Mode 1-4: when the time interval between the end position of the fourth time domain resource and the start position of the second time domain resource is equal to or greater than the first duration, the terminal device does not send the first UL transmission on the third time domain resource, and/or the terminal device receives the first DL transmission on the third time domain resource.

Mode 1-5: when a time interval between the end position of the fourth time domain resource and a start position of the third time domain resource is less than the first duration, the terminal device sends the first UL transmission on the third time domain resource, and/or the terminal device does not receive the first DL transmission on the third time domain resource.

Mode 1-6: when the time interval between the end position of the fourth time domain resource and the start position of the third time domain resource is equal to or greater than the first duration, the terminal device does not send the first UL transmission on the third time domain resource, and/or the terminal device receives the first DL transmission on the third time domain resource.

In the mode 1-2, if the terminal device receives dynamic scheduling of a DL transmission and dynamic scheduling of a UL transmission, here time domain resources occupied by the UL transmission after influence of the TA is considered are partially or completely overlapped with time domain resources occupied by the DL transmission, and the third time domain resource includes the overlapped part, then the terminal device receives the dynamically scheduled DL transmission on the third time domain resource, and/or the terminal device does not send the dynamically scheduled UL transmission on the third time domain resource.

In the mode 1-2, it may be considered that priority of the DL transmission is higher than that of the UL transmission.

In an example, if the terminal device detects first DCI for scheduling to receive the first DL transmission on a first group of symbols, the terminal device detects second DCI for scheduling to send the first UL transmission, and the first UL transmission after influence of the TA is considered is overlapped with at least one symbol from the first group of symbols, then the terminal device does not send the first UL transmission on the overlapped symbols, and/or the terminal device receives the first DL transmission on the overlapped symbols.

Optionally, in the mode 1-3 or the mode 1-4, the end position of the fourth time domain resource may be a position of the last symbol of the CORESET where the first DCI is detected, and the start position of the second time domain resource may be a first symbol of the second time domain resource.

In an example, if the terminal device receives dynamic scheduling of a DL transmission and dynamic scheduling of a UL transmission, here time domain resources occupied by the UL transmission after influence of the TA is considered are partially or completely overlapped with time domain resources occupied by the DL transmission, and the third time domain resource includes the overlapped part, then: if relative to the last symbol of the CORESET where the first DCI for dynamically scheduling the DL transmission is detected, a first symbol for transmitting the dynamically scheduled UL transmission after influence of the TA is considered is in the first duration, then the terminal device sends the dynamically scheduled UL transmission on the third time domain resource, and/or the terminal device does not receive the dynamically scheduled DL transmission on the third time domain resource; otherwise, the terminal device does not send the dynamically scheduled UL transmission on the third time domain resource, and/or the terminal device receives the dynamically scheduled DL transmission on the third time domain resource.

Here, it may be considered that in a normal case, priority of the DL transmission is higher than that of the UL transmission. If the time interval between the end position of the fourth time domain resource and the start position of the second time domain resource is less than the first duration, it may be considered that the terminal device has begun to prepare for the UL transmission, then the priority of the UL transmission is higher than that of the DL transmission, the UL transmission cannot be cancelled, and the terminal device sends the UL transmission on the third time domain resource; otherwise, it belongs to a normal case where the priority of the DL transmission is higher than that of the UL transmission, the UL transmission is allowed to be cancelled, and the terminal device receives the DL transmission on the third time domain resource.

In the embodiments of the disclosure, optionally, the first duration is determined according to a processing time of UL channel transmission. For example, the first duration is a processing time T_{proc,2}, and the processing time T_{proc,2} is determined according to at least one of a PUSCH preparation time (also referred to as a processing time N2, or N2), a subcarrier spacing configuration of a PDCCH for scheduling the UL transmission, a subcarrier spacing configuration of the UL transmission, a switching time of a bandwidth part (BWP), or whether a first symbol in the UL transmission is used for transmitting only a DeModulation Reference Signal (DMRS). The processing time N2 is related to processing capability of the terminal device, and the processing time N2 is different for terminal devices with different processing capabilities.

In an example, if the terminal device detects second DCI for scheduling a UL transmission and detects first DCI for scheduling a DL transmission, the UL transmission after influence of the TA is considered occupies a first group of symbols, and the first group of symbols is overlapped with at least one symbol in time domain resources occupied by the DL transmission, then when a time distance between a first symbol from the first group of symbols and the last symbol of the control resource set CORESET where the first DCI format is detected is less than the first duration, the terminal device sends the first UL transmission on the overlapped symbols, and/or the terminal device does not receive the first DL transmission on the overlapped symbols; or when the time distance between the first symbol from the first group of symbols and the last symbol of the CORESET where the first DCI format is detected is equal to or greater than the first duration, the terminal device does not send the first UL transmission on the overlapped symbols, and/or the terminal device receives the first DL transmission on the overlapped symbols.

As an example, if the terminal device detects second DCI for scheduling to send the first UL transmission on a first group of symbols after influence of the TA is considered, the terminal device detects first DCI for scheduling to receive the first DL transmission, and the first DL transmission is overlapped with at least one symbol from the first group of symbols, then when a time distance between a first symbol from the first group of symbols and the last symbol of the control resource set CORESET where the first DCI format is detected is less than the first duration, the terminal device sends the first UL transmission, and/or the terminal device does not receive the first DL transmission; or when the time distance between the first symbol from the first group of symbols and the last symbol of the CORESET where the first DCI format is detected is equal to or greater than the first duration, the terminal device does not send the first UL transmission, and/or the terminal device receives the first DL transmission.

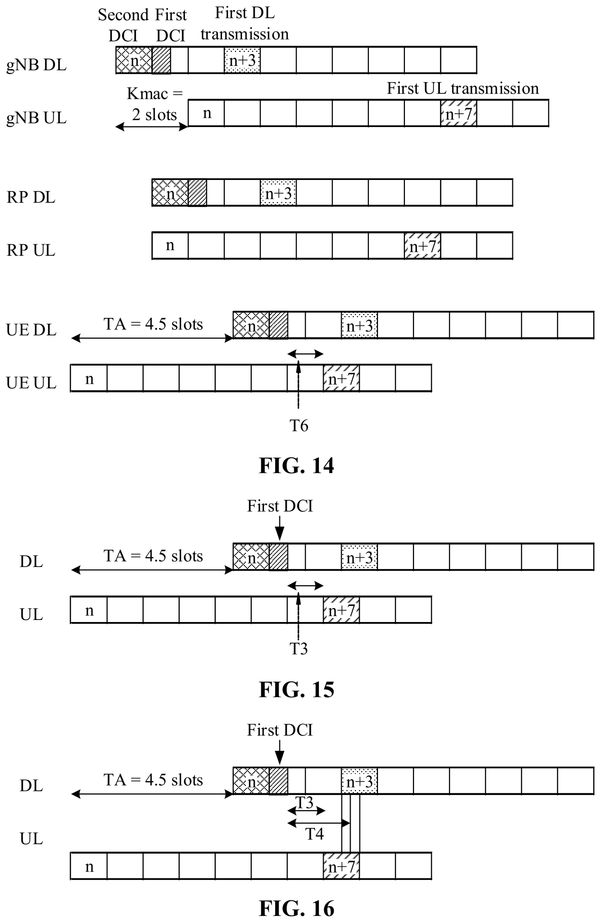

FIG. 14 gives a schematic diagram of this example. In FIG. 14, the second DCI in slot n schedules the terminal device to send the first UL transmission through symbols in slot n+7, the first DCI in slot n+1 schedules the terminal device to receive the first DL transmission through symbols in slot n+3, and the first group of symbols includes symbols in slot n+7 after influence of the TA is considered, that is, the first group of symbols includes symbols in a UL slot n+7 of the terminal device. When a time distance T6 between the last symbol of the CORESET carrying the first DCI and a first symbol in the UL slot n+7 of the terminal device is less than the first duration, the terminal device does not cancel the first UL transmission; otherwise, the terminal device cancels the first UL transmission.

In the embodiments of the disclosure, the operation of sending, by the terminal device, the first UL transmission on the third time domain resource may be understood as one of the following operations.

The terminal device does not cancel the first UL transmission on the second time domain resource.

The terminal device does not cancel the first UL transmission on the third time domain resource.

The terminal device does not cancel the first UL transmission on a fifth time domain resource from the third time domain resource, and a distance between a time unit in the fifth time domain resource and the end position of the fourth time domain resource is less than the first duration.

In case that the terminal device does not cancel the first UL transmission on the fifth time domain resource from the third time domain resource, the terminal device cancels the first UL transmission on a sixth time domain resource from the third time domain resource, and a distance between a time unit in the sixth time domain resource and the end position of the fourth time domain resource is greater than the first duration.

In an example, as shown in FIG. 15, a time interval T3 between a last symbol of the fourth time domain resource used by the first DCI from DL time domain resources of the terminal device and a first symbol of the second time domain resource (the UL slot n+7 of the terminal device) from UL time domain resources of the terminal device is less than the first duration, and the terminal device sends the UL transmission or does not receive the DL transmission on the third time domain resource (the overlapped part between the DL slot n+3 of the terminal device and the UL slot n+7 of the terminal device).

In another example, as shown in FIG. 16, a time interval T3 between a last symbol of the fourth time domain resource occupied by the first DCI from DL time domain resources of the terminal device and a first symbol of the second time domain resource (the UL slot n+7 of the terminal device) from a UL link is less than the first duration, the third time domain resource is the overlapped part between the DL slot n+3 of the terminal device and the UL slot n+7 of the terminal device, here a time interval T4 between a symbol in the third time domain resource and the end position of the fourth time domain resource is the first duration, then a time domain area before this symbol in the third time domain resource is the fifth time domain resource, a time domain interval after this symbol in the third time domain resource is the sixth time domain resource, a time interval between a symbol in the fifth time domain resource and the end position of the fourth time domain resource is less than the first duration, and a time interval between a symbol in the sixth time domain resource and the end position of the fourth time domain resource is equal to or greater than the first duration, then the terminal device sends the UL transmission on the fifth time domain resource and receives the DL transmission on the sixth time domain resource.

In yet another example, symbols in the UL slot n+7 of the terminal device are used for sending the first UL transmission, the first DCI in the DL slot n+1 of the terminal device schedules the terminal device to receive the first DL transmission through symbols in the DL slot n+3, and the first group of symbols includes symbols after influence of the TA is considered, that is, the first group of symbols includes the symbols in the UL slot n+7 of the terminal device. When a time distance between the last symbol of the CORESET carrying the first DCI and a first symbol in the UL slot n+7 of the terminal device is less than the first duration, the terminal device does not cancel the first UL transmission; otherwise, the terminal device cancels the first UL transmission.

Optionally, if part of symbols in time domain resources occupied by a UL channel or signal in the first UL transmission are cancelled, the UL channel or signal is cancelled.

In an example, the first UL transmission includes a UL channel or signal. If the terminal device does not send the UL transmission on the third time domain resource, the terminal device does not send the UL transmission on the second time domain resource.

In an example, the first UL transmission includes three UL channels or signals. If the terminal device does not send the UL transmission on the fifth time domain resource, and time domain resources of a channel 2 from the three UL channels or signals include symbols in the fifth time domain resource, the terminal device does not send the channel 2.

In the mode 1-5 and the mode 1-6, if the terminal device receives dynamic scheduling of a DL transmission and dynamic scheduling of a UL transmission, here time domain resources occupied by the UL transmission after influence of the TA is considered are partially or completely overlapped with time domain resources occupied by the DL transmission, and the third time domain resource includes the overlapped part, then: if relative to the last symbol of the CORESET where the first DCI for dynamically scheduling the DL transmission is detected, a first symbol of the third time domain resource is in the first duration, then the terminal device sends the dynamically scheduled UL transmission on the third time domain resource, and/or the terminal device does not receive the dynamically scheduled DL transmission on the third time domain resource; otherwise, the terminal device does not send the dynamically scheduled UL transmission on the third time domain resource, and/or the terminal device receives the dynamically scheduled DL transmission on the third time domain resource.

Here, it may be considered that in a normal case, priority of the DL transmission is higher than that of the UL transmission. If the time interval between the end position of the fourth time domain resource and the start position of the third time domain resource is less than the first duration, it may be considered that the terminal device has begun to prepare for the UL transmission, then the priority of the UL transmission is higher than that of the DL transmission, the UL transmission cannot be cancelled, and the terminal device sends the UL transmission on the third time domain resource; otherwise, it belongs to a normal case where the priority of the DL transmission is higher than that of the UL transmission, the UL transmission is allowed to be cancelled, and the terminal device receives the DL transmission on the third time domain resource. The priority of the DL transmission is higher than that of the UL transmission. In case that a processing time of the terminal device preparing for the UL transmission is considered, part of the UL transmission is allowed to be cancelled.

In an example, if the terminal device detects second DCI for scheduling a UL transmission and detects first DCI for scheduling the first DL transmission, the UL transmission after influence of the TA is considered occupies a first group of symbols, and the first group of symbols is overlapped with at least one symbol in time domain resources occupied by the DL transmission, then when a time distance between the overlapped symbol from the first group of symbols and the last symbol of the CORESET where the first DCI is detected is less than the first duration, the terminal device sends the first UL transmission on the overlapped symbol, and/or the terminal device does not receive the first DL transmission on the overlapped symbol; or when the time distance between the overlapped symbol from the first group of symbols and the last symbol of the CORESET where the first DCI is detected is equal to or greater than the first duration, the terminal device does not send the first UL transmission on the overlapped symbol, and/or the terminal device receives the first DL transmission on the overlapped symbol.

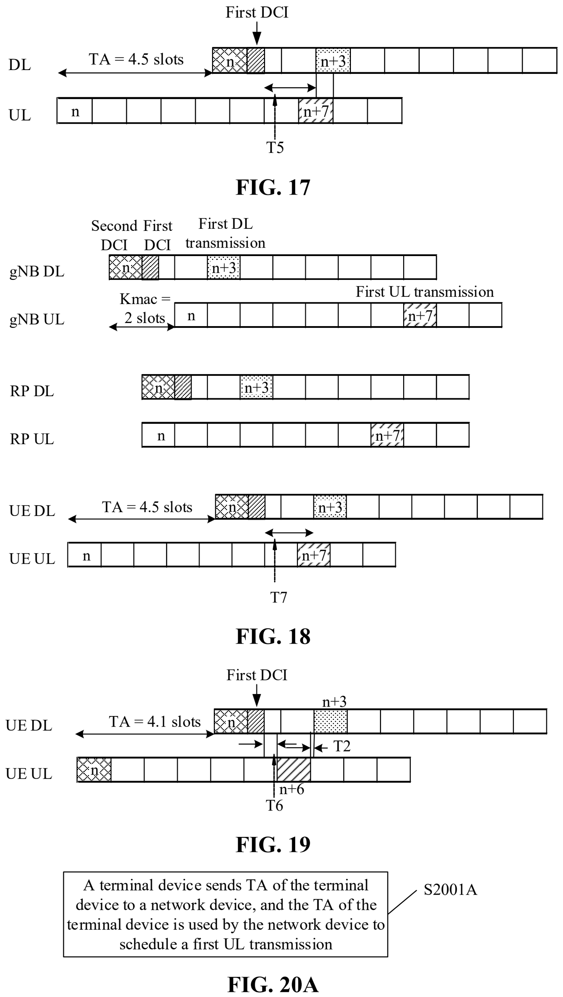

In an example, as shown in FIG. 17, a time interval T5 between a last symbol of the fourth time domain resource used by the first DCI from a DL link of the terminal device and a first symbol of the third time domain resource (the overlapped part between the DL slot n+3 of the terminal device and the UL slot n+7 of the terminal device) is less than the first duration, then the terminal device sends the UL transmission or does not receive the DL transmission on the third time domain resource; if T5 is greater than the first duration, the terminal device receives the DL transmission on the third time domain resource.

In yet another example, a time interval T5 between a last symbol of the fourth time domain resource used by the first DCI from a DL link of the terminal device and a first symbol of the third time domain resource (the overlapped part between the DL slot n+3 of the terminal device and the UL slot n+7 of the terminal device) is less than the first duration, the third time domain resource includes a fifth time domain resource and a sixth time domain resource, a time interval between a symbol in the fifth time domain resource and the end position of the fourth time domain resource is less than the first duration, and a time interval between a symbol in the sixth time domain resource and the end position of the fourth time domain resource is equal to or greater than the first duration, then the terminal device sends the UL transmission on the fifth time domain resource and receives the DL transmission on the sixth time domain resource.

In yet another example, symbols in the UL slot n+7 of the terminal device after influence of the TA is considered are used for sending the UL transmission, the first DCI in the DL slot n+1 of the terminal device schedules the terminal device to receive the first DL transmission through symbols in the DL slot n+3, the first group of symbols includes symbols in the slot n+7, that is, the first group of symbols includes the symbols in the UL slot n+7 of the terminal device, and the first DL transmission is overlapped with symbols from the first group of symbols, as overlapped symbols between the DL slot n+3 of the terminal device and the UL slot n+7 of the terminal device. When a time distance between the last symbol of the CORESET carrying the first DCI and the above overlapped symbol is less than the first duration, the terminal device does not cancel the first UL transmission on the overlapped symbols; otherwise, the terminal device cancels the first UL transmission on the overlapped symbols.

FIG. 18 gives an example of this situation. In FIG. 18, the second DCI in slot n schedules the terminal device to send the first UL transmission through symbols in slot n+7, the first DCI in slot n+1 schedules the terminal device to receive the first DL transmission through symbols in slot n+3, the first group of symbols includes symbols in slot n+7 after influence of the TA is considered, that is, the first group of symbols includes symbols in a UL slot n+7 of the terminal device, and the first DL transmission is overlapped with symbols from the first group of symbols, as overlapped symbols between the DL slot n+3 of the terminal device and the UL slot n+7 of the terminal device. When a time distance T7 between the last symbol of the CORESET carrying the first DCI and the above overlapped symbol is less than the first duration, the terminal device does not cancel the first UL transmission on the overlapped symbols; otherwise, the terminal device cancels the first UL transmission on the overlapped symbols.

In some embodiments, the operation of performing, by the terminal device, communication based on the target mode includes the following mode 1-7.

Mode 1-7: the terminal device determines whether to send the first UL transmission or to receive the first DL transmission on the third time domain resource, based on implementation of the terminal device.

In the mode 1-7, if the terminal device receives dynamic scheduling of a DL transmission and dynamic scheduling of a UL transmission, here time domain resources occupied by the UL transmission after influence of the TA is considered are partially or completely overlapped with time domain resources occupied by the DL transmission, then the terminal device determines to send the dynamically scheduled UL transmission or receive the dynamically scheduled DL transmission on the third time domain resource, based on its own implementation.

In the mode 1-7, it may be considered that priority of the UL transmission or the DL transmission is determined by the terminal device itself.

In an example, if the terminal device detects second DCI for scheduling a UL transmission and detects first DCI for scheduling the first DL transmission, the UL transmission after influence of the TA is considered occupies a first group of symbols, and the first DL transmission is overlapped with at least one symbol from the first group of symbols, then the terminal device determines to send the first UL transmission or receive the first DL transmission, based on its own implementation.

### Situation B for collision mode 1

In some embodiments, the operation of performing, by the terminal device, communication based on the target mode includes the following situations or modes 2-1 to 2-3.

Mode 2-1: the terminal device sends the first UL transmission on the third time domain resource, and/or the terminal device does not receive the first DL transmission on the third time domain resource.

Mode 2-2: the terminal device does not send the first UL transmission on the third time domain resource, and/or the terminal device receives the first DL transmission on the third time domain resource.

Mode 2-3: the terminal device determines whether to send the first UL transmission or to receive the first DL transmission on the third time domain resource, based on implementation of the terminal device.

In the mode 2-1, the terminal device is semi-statically configured with a DL transmission and a UL transmission, here time domain resources occupied by the semi-statically configured UL transmission after influence of the TA is considered are partially or completely overlapped with time domain resources occupied by the semi-statically configured DL transmission, and the third time domain resource includes the overlapped part, then the terminal device sends the semi-statically configured UL transmission on the third time domain resource, and/or the terminal device does not receive the semi-statically configured DL transmission on the third time domain resource.

In the mode 2-1, it may be considered that priority of the UL transmission is higher than that of the DL transmission.

In an example, if the terminal device is configured by higher-layer parameters to receive the first DL transmission on a first group of symbols, the terminal device is configured by higher-layer parameters to send the first UL transmission, and the first UL transmission after influence of the TA is considered is overlapped with at least one symbol from the first group of symbols, then the terminal device sends the first UL transmission on the overlapped symbols, and/or the terminal device does not receive the first DL transmission on the overlapped symbols.

In the mode 2-2, if the terminal device is semi-statically configured with a DL transmission and a UL transmission, here time domain resources occupied by the semi-statically configured UL transmission after influence of the TA is considered are partially or completely overlapped with time domain resources occupied by the semi-statically configured DL transmission, and the third time domain resource includes the overlapped part, then the terminal device does not send the semi-statically configured UL transmission on the third time domain resource, and/or the terminal device receives the semi-statically configured DL transmission on the third time domain resource.

In the mode 2-2, it may be considered that priority of the DL transmission is higher than that of the UL transmission.

In an example, if the terminal device is configured by higher-layer parameters to receive the first DL transmission on a first group of symbols, the terminal device is configured by higher-layer parameters to send the first UL transmission, and the first UL transmission after influence of the TA is considered is overlapped with at least one symbol from the first group of symbols, then the terminal device does not send the first UL transmission on the overlapped symbols, and/or the terminal device receives the first DL transmission on the overlapped symbols.

In the mode 2-3, the terminal device is semi-statically configured with a DL transmission and a UL transmission, here time domain resources occupied by the semi-statically configured UL transmission after influence of the TA is considered are partially or completely overlapped with time domain resources occupied by the semi-statically configured DL transmission, and the third time domain resource includes the overlapped part, then the terminal device determines to send the semi-statically configured UL transmission or receive the semi-statically configured DL transmission on the third time domain resource, based on its own implementation.

In the mode 2-3, it may be considered that priority of the UL transmission or the DL transmission is determined by the terminal device itself.

In an example, if the terminal device is configured by higher-layer parameters to receive the first DL transmission on a first group of symbols, the terminal device is configured by higher-layer parameters to send the first UL transmission, and the first UL transmission after influence of the TA is considered is overlapped with at least one symbol from the first group of symbols, then the terminal device determines to send the first UL transmission or receive the first DL transmission on the overlapped symbols, based on its own implementation.

### Situation C for collision mode 1

In some embodiments, the operation of performing, by the terminal device, communication based on the target mode includes the following situations or modes 3-1 to 3-5.

Mode 3-1: the terminal device does not send the first UL transmission on the third time domain resource, and/or the terminal device receives the first DL transmission on the third time domain resource.

Mode 3-2: when a time interval between an end position of a fourth time domain resource and a start position of the second time domain resource is less than a first duration, the terminal device sends the first UL transmission on the third time domain resource, and/or the terminal device does not receive the first DL transmission on the third time domain resource.

Mode 3-3: when the time interval between the end position of the fourth time domain resource and the start position of the second time domain resource is equal to or greater than the first duration, the terminal device does not send the first UL transmission on the third time domain resource, and/or the terminal device receives the first DL transmission on the third time domain resource.

Mode 3-4: when a time interval between the end position of the fourth time domain resource and a start position of the third time domain resource is less than the first duration, the terminal device sends the first UL transmission on the third time domain resource, and/or the terminal device does not receive the first DL transmission on the third time domain resource.

Mode 3-5: when the time interval between the end position of the fourth time domain resource and the start position of the third time domain resource is equal to or greater than the first duration, the terminal device does not send the first UL transmission on the third time domain resource, and/or the terminal device receives the first DL transmission on the third time domain resource.

In the mode 3-1, if the terminal device receives dynamic scheduling of a DL transmission and the terminal device is semi-statically configured with a UL transmission, here time domain resources occupied by the semi-statically configured UL transmission after influence of the TA is considered are partially or completely overlapped with time domain resources occupied by the dynamically scheduled DL transmission, and the third time domain resource includes the overlapped part, then the terminal device does not send the semi-statically configured UL transmission on the third time domain resource, and/or the terminal device receives the dynamically scheduled DL transmission on the third time domain resource.

In the mode 3-1, it may be considered that priority of the DL transmission is higher than that of the UL transmission.

In an example, if the terminal device detects first DCI format for scheduling to receive the first DL transmission on a first group of symbols, the terminal device is configured by higher-layer parameters to send the first UL transmission, and the first UL transmission after influence of the TA is considered is overlapped with at least one symbol from the first group of symbols, then the terminal device does not send the first UL transmission on the overlapped symbols, and/or the terminal device receives the first DL transmission on the overlapped symbols.

In the mode 3-2 and the mode 3-3, the terminal device receives dynamic scheduling of a DL transmission and the terminal device is semi-statically configured with a UL transmission, here time domain resources occupied by the semi-statically configured UL transmission after influence of the TA is considered are partially or completely overlapped with time domain resources occupied by the dynamically scheduled DL transmission, and the third time domain resource includes the overlapped part, then: if relative to the last symbol of the CORESET where the first DCI for dynamically scheduling the DL transmission is detected, a first symbol for transmitting the semi-statically configured UL transmission after influence of the TA is considered is in the first duration, then the terminal device sends the semi-statically configured UL transmission on the third time domain resource, and/or the terminal device does not receive the dynamically scheduled DL transmission on the third time domain resource; otherwise, the terminal device does not send a statically configured UL transmission on the third time domain resource, and/or the terminal device receives the dynamically scheduled DL transmission on the third time domain resource.

Here, it may be considered that in a normal case, priority of the DL transmission is higher than that of the UL transmission. If the time interval between the end position of the fourth time domain resource and the start position of the second time domain resource is less than the first duration, it may be considered that the terminal device has begun to prepare for the UL transmission, then the priority of the UL transmission is higher than that of the DL transmission, the UL transmission cannot be cancelled, and the terminal device sends the UL transmission on the third time domain resource; otherwise, it belongs to a normal case where the priority of the DL transmission is higher than that of the UL transmission, the UL transmission is allowed to be cancelled, and the terminal device receives the DL transmission on the third time domain resource.

In the mode 3-4 and the mode 3-5, the terminal device receives dynamic scheduling of a DL transmission and the terminal device is semi-statically configured with a UL transmission, here time domain resources occupied by the semi-statically configured UL transmission after influence of the TA is considered are partially or completely overlapped with time domain resources occupied by the dynamically scheduled DL transmission, and the third time domain resource includes the overlapped part, then: if relative to the last symbol of the CORESET where the first DCI for dynamically scheduling the DL transmission is detected, a first symbol of the third time domain resource is in the first duration, then the terminal device sends the semi-statically configured UL transmission on the third time domain resource, and/or the terminal device does not receive the dynamically scheduled DL transmission on the third time domain resource; otherwise, the terminal device does not send the semi-statically configured UL transmission on the third time domain resource, and/or the terminal device receives the dynamically scheduled DL transmission on the third time domain resource.

Here, it may be considered that in a normal case, priority of the DL transmission is higher than that of the UL transmission. If the time interval between the end position of the fourth time domain resource and the start position of the third time domain resource is less than the first duration, it may be considered that the terminal device has begun to prepare for the UL transmission, then the priority of the UL transmission is higher than that of the DL transmission, the UL transmission cannot be cancelled, and the terminal device sends the UL transmission on the third time domain resource; otherwise, it belongs to a normal case where the priority of the DL transmission is higher than that of the UL transmission, the UL transmission is allowed to be cancelled, and the terminal device receives the DL transmission on the third time domain resource.

### Situation D for collision mode 1

In some embodiments, the operation of performing, by the terminal device, communication based on the target mode includes the following mode 4-1.

Mode 4-1: the terminal device sends the first UL transmission on the third time domain resource, and/or the terminal device does not receive the first DL transmission on the third time domain resource.

In the mode 4-1, if the terminal device is semi-statically configured with a DL transmission, and the terminal device receives dynamic scheduling of a UL transmission, here time domain resources occupied by the UL transmission after influence of the TA is considered are partially or completely overlapped with time domain resources occupied by the semi-statically configured DL transmission, and the third time domain resource includes the overlapped part, then the terminal device sends the dynamically scheduled UL transmission on the third time domain resource, and/or the terminal device does not receive the semi-statically configured DL transmission on the third time domain resource.

In the mode 4-1, it may be considered that priority of the UL transmission is higher than that of the DL transmission.

In an example, if the terminal device is configured by higher-layer parameters to receive the first DL transmission on a first group of symbols, the terminal device detects second DCI for scheduling to send the first UL transmission, and the first UL transmission after influence of the TA is considered is overlapped with at least one symbol from the first group of symbols, then the terminal device sends the first UL transmission on the overlapped symbols, and/or the terminal device does not receive the first DL transmission on the overlapped symbols.

In some embodiments, if the terminal device is semi-statically configured with a DL transmission, and the terminal device does not receive any dynamic scheduling of a UL transmission whose time domain resources occupied after influence of the TA is considered are partially or completely overlapped with time domain resources occupied by the semi-statically configured DL transmission, then the terminal device receives the semi-statically configured DL transmission.

As an example, if the terminal device is configured by higher-layer parameters to receive the first DL transmission on a first group of symbols, and the terminal device does not detect a DCI format for scheduling a UL transmission after influence of the TA is considered that is overlapped with at least one symbol from the first group of symbols, then the terminal device receives the first DL transmission.

### Situation E for collision mode 1

In some embodiments, the operation of performing, by the terminal device, communication based on the target mode includes the following mode 5-1.

Mode 5-1: the terminal device does not send the first UL transmission on the third time domain resource, and/or the terminal device receives the first DL transmission on the third time domain resource.

In the mode 5-1, if the terminal device is instructed to transmit an SSB, and the terminal device is semi-statically configured with a UL transmission or receives dynamic scheduling of a UL transmission, here time domain resources occupied by the dynamically scheduled or semi-statically configured UL transmission after influence of the TA is considered are partially or completely overlapped with time domain resources occupied by transmission of the SSB, and the third time domain resource includes the overlapped part, then the terminal device does not send the dynamically scheduled or semi-statically configured UL transmission on the third time domain resource, and/or the terminal device receives the SSB on the third time domain resource.

In the mode 5-1, it may be considered that priority of the SSB is higher than that of the UL transmission.

### Situation F for collision mode 1

In some embodiments, in the situation F, the UL transmission on the RO may refer to the UL transmission on the valid RO.

In some embodiments, the operation of performing, by the terminal device, communication based on the target mode includes the following situations or modes 6-1 to 6-3.

Mode 6-1: the terminal device sends the first UL transmission on the third time domain resource, and/or the terminal device does not receive the first DL transmission on the third time domain resource.

Mode 6-2: the terminal device does not send the first UL transmission on the third time domain resource, and/or the terminal device receives the first DL transmission on the third time domain resource.

Mode 6-3: the terminal device determines whether to send the first UL transmission or to receive the first DL transmission on the third time domain resource, based on implementation of the terminal device.

In the mode 6-1, if the terminal device is semi-statically configured with a DL transmission or receives dynamic scheduling of a DL transmission, and the terminal device is triggered by a higher layer to perform a UL transmission on a valid RO, here time domain resources occupied by the dynamically scheduled or semi-statically configured DL transmission are partially or completely overlapped with time domain resources occupied by the UL transmission on the valid RO after influence of the TA is considered, and the third time domain resource includes the overlapped part, then the terminal device sends the UL transmission on the valid RO on the third time domain resource, and/or the terminal device does not receive the dynamically scheduled or semi-statically configured DL transmission on the third time domain resource.

In the mode 6-1, it may be considered that priority of the UL transmission on the RO is higher than that of the DL transmission.

In an example, if the terminal device is triggered by the higher layer to send the first UL transmission on a first group of symbols after influence of the TA is considered, the terminal device is dynamically scheduled or semi-statically configured to receive the first DL transmission, and the first DL transmission is overlapped with at least one symbol from the first group of symbols, then the terminal device sends the UL transmission on the valid RO on the overlapped symbols, and/or the terminal device does not receive the dynamically scheduled or semi-statically configured DL transmission on the overlapped symbols.

In the mode 6-2, if the terminal device is semi-statically configured with a DL transmission or receives dynamic scheduling of a DL transmission, and the terminal device is triggered by a higher layer to perform a UL transmission on a valid RO, here time domain resources occupied by the dynamically scheduled or semi-statically configured DL transmission are partially or completely overlapped with time domain resources occupied by the UL transmission on the valid RO after influence of the TA is considered, and the third time domain resource includes the overlapped part, then the terminal device does not send the UL transmission on the valid RO on the third time domain resource, and/or the terminal device receives the dynamically scheduled or semi-statically configured DL transmission on the third time domain resource.

In the mode 6-2, it may be considered that priority of the DL transmission is higher than that of the UL transmission on the RO.

In an example, if the terminal device is triggered by the higher layer to send the first UL transmission on a first group of symbols after influence of the TA is considered, the terminal device is dynamically scheduled or semi-statically configured to receive the first DL transmission, and the first DL transmission is overlapped with at least one symbol from the first group of symbols, then the terminal device does not send the UL transmission on the valid RO on the overlapped symbols, and/or the terminal device receives the dynamically scheduled or semi-statically configured DL transmission on the overlapped symbols.

In the mode 6-3, if the terminal device is semi-statically configured with a DL transmission or receives dynamic scheduling of a DL transmission, and the terminal device is triggered by a higher layer to perform a UL transmission on a valid RO, here time domain resources occupied by the dynamically scheduled or semi-statically configured DL transmission are partially or completely overlapped with time domain resources occupied by the UL transmission on the valid RO after influence of the TA is considered, then the terminal device determines to send the UL transmission on the valid RO or receive the dynamically scheduled or semi-statically configured DL transmission, based on its own implementation.

In some embodiments, in case of the collision mode 1, the operation of not receiving, by the terminal device, the first DL transmission on the third time domain resource includes the following operations.

The terminal device does not receive the first DL transmission on the first time domain resource.

Or, the terminal device does not receive a symbol of the first DL transmission located on the third time domain resource.

Or, the terminal device does not receive a DL channel or signal of the first DL transmission including the third time domain resource.

Optionally, the operation of not receiving, by the terminal device, the first DL transmission on the first time domain resource includes the following operation. The terminal device does not receive the first DL transmission on the first group of symbols for the first DL transmission.

An example that the terminal device does not receive the symbol of the first DL transmission located on the third time domain resource is taken, the terminal device does not receive the first DL transmission on symbols, which are overlapped with the first UL transmission, among the first group of symbols for the first DL transmission.

In an example, the first DL transmission includes 4 symbols, here 3^{rd} and 4^{th} symbols are symbols on the third time domain resource, then the terminal device does not receive the 3^{rd} and 4^{th} symbols, while still receives 1^{st} and 4^{th} symbols.

An example that the terminal device does not receive the DL channel or signal of the first DL transmission including the third time domain resource is taken, the terminal device does not receive a channel or signal including any symbol from the first group of symbols for the first DL transmission, from the first DL transmission; or, the terminal device does not receive a channel or signal including symbols from the first group of symbols overlapped with the first UL transmission, from the first DL transmission.

In an example, the first DL transmission includes 4 channels, here time domain resources of a 3^{rd} channel include the third time domain resource, then the terminal device does not receive the 3^{rd} channel, while receives 1^{st}, 2^{nd} and 4^{th} channels.

In an example, the first DL transmission includes 4 PDSCHs, here a 3^{rd} PDSCH includes any symbol from the first group of symbols, then the terminal device does not receive the 3^{rd} PDSCH from the 4 PDSCHs.

In an example, the first DL transmission includes 4 PDSCHs, here a 3^{rd} PDSCH includes symbols from the first group of symbols overlapped with the first UL transmission, then the terminal device does not receive the 3^{rd} PDSCH from the 4 PDSCHs.

In some embodiments, in case of the collision mode 1, the operation of not sending, by the terminal device, the first UL transmission on the third time domain resource includes the following operations.

The terminal device does not send the first UL transmission on the second time domain resource.

Or, the terminal device does not send a symbol of the first UL transmission located on the third time domain resource.

Or, the terminal device does not send a UL channel or signal of the first UL transmission including the third time domain resource.

An example that the terminal device does not send the symbol of the first UL transmission located on the third time domain resource is taken, the terminal device does not send the first UL transmission on symbols overlapped with the first DL transmission.

In an example, the first UL transmission includes 4 symbols, here 3^{rd} and 4^{th} symbols are symbols on the third time domain resource, then the terminal device does not send the 3^{rd} and 4^{th} symbols, while still sends 1^{st} and 2^{nd} symbols.

In an example, the first UL transmission includes 4 SRS symbols, here 3^{rd} and 4^{th} SRS symbols are symbols overlapped with the first DL transmission, then the terminal device does not send the 3^{rd} and 4^{th} SRS symbols, while still sends 1^{st} and 2^{nd} SRS symbols.

An example that the terminal device does not send the UL channel or signal of the first UL transmission including the third time domain resource is taken, the terminal device does not send a channel or signal of the first UL transmission including any symbol from the first group of symbols.

In an example, the first UL transmission includes 4 channels, here time domain resources of a 3^{rd} channel include the third time domain resource, then the terminal device does not send the 3^{rd} channel, while sends 1^{st}, 2^{nd} and 4^{th} channels.

In an example, the first UL transmission includes 4 PUSCHs, here a 3^{rd} PUSCH includes any symbol from the first group of symbols, then the terminal device does not send the 3^{rd} PUSCH from the 4 PUSCHs.

Optionally, in all the embodiments of the disclosure, the operation of not sending, by the terminal device, the UL transmission includes that the terminal device cancels the UL transmission. For example, the operation of not sending, by the terminal device, the dynamically scheduled UL transmission may be replaced by that the terminal device cancels the dynamically scheduled UL transmission. For another example, the operation of not sending, by the terminal device, the semi-statically configured UL transmission may be replaced by that the terminal device cancels the semi-statically configured UL transmission. Optionally, the operation of cancelling, by the terminal device, the UL transmission includes that the terminal device does not prepare for the UL transmission any more.

Optionally, in all the embodiments of the disclosure, the operation of sending, by the terminal device, the first UL transmission includes that the terminal device does not cancel sending the first UL transmission; or, the terminal device is not expected to cancel sending the first UL transmission.

### Situation A for collision mode 2

In some embodiments, the operation of performing, by the terminal device, communication based on the target mode includes one of the following situations or modes 7-1 to 7-5.

Mode 7-1: the terminal device sends the first UL transmission, and/or the terminal device does not receive the first DL transmission.

Mode 7-2: the terminal device does not send the first UL transmission, and/or the terminal device receives the first DL transmission.

Mode 7-3: when a time interval between an end position of a fourth time domain resource and the start position of the second time domain resource is less than a first duration, the terminal device sends the first UL transmission, and/or the terminal device does not receive the first DL transmission.

Mode 7-4: when the time interval between the end position of the fourth time domain resource and the start position of the second time domain resource is equal to or greater than the first duration, the terminal device does not send the first UL transmission, and/or the terminal device receives the first DL transmission.

Mode 7-5: the terminal device determines whether to send the first UL transmission or to receive the first DL transmission, based on implementation of the terminal device.

In the mode 7-1, if the terminal device receives dynamic scheduling of a DL transmission and dynamic scheduling of a UL transmission, here a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the terminal device sends the dynamically scheduled UL transmission, and/or the terminal device does not receive the dynamically scheduled DL transmission.

In the mode 7-1, priority of the UL transmission is higher than that of the DL transmission.

In an example, in case that T1 in FIG. 12 is less than the second duration, the terminal device sends the UL transmission on the second time domain resource (the UL slot n+9 of the terminal device) after influence of the TA is considered, or does not receive the DL transmission on the first time domain resource (the DL slot n+3 of the terminal device).

In an example, in case that T2 in FIG. 13 is less than the third duration, the terminal device sends the UL transmission on the second time domain resource (the UL slot n+6 of the terminal device), or does not receive the DL transmission on the first time domain resource (the DL slot n+3 of the terminal device).

In the mode 7-2, if the terminal device receives dynamic scheduling of a DL transmission and dynamic scheduling of a UL transmission, here a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the terminal device does not send the dynamically scheduled UL transmission, and/or the terminal device receives the dynamically scheduled DL transmission.

In the mode 7-2, priority of the DL transmission is higher than that of the UL transmission.

In an example, in case that T1 in FIG. 12 is less than the second duration, the terminal device does not send the UL transmission on the second time domain resource (the UL slot n+9 of the terminal device), or receives the DL transmission on the first time domain resource (the DL slot n+3 of the terminal device); and/or, the network device does not receive the UL transmission on the second time domain resource (the UL slot n+9 of the terminal device), or does not send the DL transmission on the first time domain resource (the DL slot n+3 of the terminal device).

In an example, in case that T2 in FIG. 13 is less than the third duration, the terminal device does not send the UL transmission on the second time domain resource (the UL slot n+6 of the terminal device), or receives the DL transmission on the first time domain resource (the DL slot n+3 of the terminal device); and/or, the network device does not receive the UL transmission on the second time domain resource (the UL slot n+6 of the terminal device), or does not send the DL transmission on the first time domain resource (the DL slot n+3 of the terminal device).

In the mode 7-3 and the mode 7-4, if the terminal device receives dynamic scheduling of a DL transmission and dynamic scheduling of a UL transmission, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, here a time interval between a last symbol of the first DCI for dynamically scheduling the DL transmission and the first symbol of time domain resources occupied by the UL transmission after influence of the TA is considered is less than the first duration, then the terminal device does not send the first UL transmission, and/or the terminal device receives the first DL transmission; otherwise, the terminal device sends the first UL transmission, and/or the terminal device does not receive the first DL transmission.

In the mode 7-3 and the mode 7-4, it may be considered that in a normal case, priority of the DL transmission is higher than that of the UL transmission. If the time interval between the end position of the fourth time domain resource and the start position of the second time domain resource is less than the first duration, it may be considered that the terminal device has begun to prepare for the UL transmission, then the priority of the UL transmission is higher than that of the DL transmission, the UL transmission cannot be cancelled, and the terminal device sends the UL transmission.

In an example, as shown in FIG. 19, assuming that T2 between the first time domain resource (the DL slot n+3 of the terminal device) and the second time domain resource (the UL slot n+6 of the terminal device) is less than the third duration, if a time interval T5 between a last symbol of the fourth time domain resource used by the first DCI from a DL link and a first symbol of the second time domain resource from a UL link is less than the first duration, the terminal device sends the UL transmission or does not receive the DL transmission; if the time interval T5 between the last symbol of the fourth time domain resource used by the first DCI from the DL link and the first symbol of the second time domain resource from the UL link is equal to or greater than the first duration, the terminal device does not send the UL transmission or receives the DL transmission.

In the mode 7-5, if the terminal device receives dynamic scheduling of a DL transmission and dynamic scheduling of a UL transmission, here a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the terminal device determines to send the dynamically scheduled UL transmission or receive the dynamically scheduled DL transmission, based on its own implementation.

In the mode 7-5, it may be considered that priority of the UL transmission or the DL transmission is determined by the terminal device itself.

### Situation B for collision mode 2

In some embodiments, the operation of performing, by the terminal device, communication based on the target mode includes one of the following situations or modes 8-1 to 8-3.

Mode 8-1: the terminal device sends the first UL transmission, and/or the terminal device does not receive the first DL transmission.

Mode 8-2: the terminal device does not send the first UL transmission, and/or the terminal device receives the first DL transmission.

Mode 8-3: the terminal device determines whether to send the first UL transmission or to receive the first DL transmission, based on implementation of the terminal device.

In the mode 8-1, if the terminal device is semi-statically configured with a DL transmission and a UL transmission, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the terminal device sends the semi-statically configured UL transmission, and/or the terminal device does not receive the semi-statically configured DL transmission.

In the mode 8-1, priority of the UL transmission is higher than that of the DL transmission.

In the mode 8-2, if the terminal device is semi-statically configured with a DL transmission and a UL transmission, here a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the terminal device does not send the semi-statically configured UL transmission, and/or the terminal device receives the semi-statically configured DL transmission.

In the mode 8-2, priority of the DL transmission is higher than that of the UL transmission.

In the mode 8-3, if the terminal device is semi-statically configured with a DL transmission and a UL transmission, here a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the terminal device determines to send the semi-statically configured UL transmission or receive the semi-statically configured DL transmission, based on its own implementation.

In the mode 8-3, it may be considered that priority of the UL transmission or the DL transmission is determined by the terminal device itself.

### Situation C for collision mode 2

In some embodiments, the operation of performing, by the terminal device, communication based on the target mode includes one of the following situations or modes 9-1 to 9-3.

Mode 9-1: the terminal device does not send the first UL transmission, and/or the terminal device receives the first DL transmission.

Mode 9-2: when a time interval between an end position of a fourth time domain resource and the start position of the second time domain resource is less than a first duration, the terminal device sends the first UL transmission, and/or the terminal device does not receive the first DL transmission.

Mode 9-3: when the time interval between the end position of the fourth time domain resource and the start position of the second time domain resource is equal to or greater than the first duration, the terminal device does not send the first UL transmission, and/or the terminal device receives the first DL transmission.

In the mode 9-1, if the terminal device receives dynamic scheduling of a DL transmission, and the terminal device is semi-statically configured with a UL transmission, here a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the terminal device does not send the semi-statically configured UL transmission, and/or the terminal device receives the dynamically scheduled DL transmission.

In the mode 9-1, priority of the DL transmission is higher than that of the UL transmission.

In the mode 9-2 and the mode 9-3, if the terminal device receives dynamic scheduling of a DL transmission, and the terminal device is semi-statically configured with a UL transmission, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, here a time interval between a last symbol of the first DCI for dynamically scheduling the DL transmission and the first symbol of time domain resources occupied by the UL transmission after influence of the TA is considered is less than the first duration, then the terminal device does not send the semi-statically configured UL transmission, and/or the terminal device receives the dynamically scheduled DL transmission; otherwise, the terminal device sends the semi-statically configured UL transmission, and/or the terminal device does not receive the dynamically scheduled DL transmission.

In the mode 9-2 and the mode 9-3, it may be considered that in a normal case, priority of the DL transmission is higher than that of the UL transmission. If the time interval between the end position of the fourth time domain resource and the start position of the second time domain resource is less than the first duration, it may be considered that the terminal device has begun to prepare for the UL transmission, then the priority of the UL transmission is higher than that of the DL transmission, the UL transmission cannot be cancelled, and the terminal device sends the UL transmission.

### Situation D for collision mode 2

In some embodiments, the operation of performing, by the terminal device, communication based on the target mode includes the following mode 10-1.

Mode 10-1: the terminal device sends the first UL transmission, and/or the terminal device does not receive the first DL transmission.

If the terminal device is semi-statically configured with a DL transmission, and the terminal device receives dynamic scheduling of a UL transmission, here a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the terminal device sends the dynamically scheduled first UL transmission, and/or the terminal device does not receive the semi-statically configured first DL transmission.

### Situation E for collision mode 2

In some embodiments, the operation of performing, by the terminal device, communication based on the target mode includes the following mode 11-1.

Mode 11-1: the terminal device does not send the first UL transmission, and/or the terminal device receives the first DL transmission.

If the terminal device is instructed to transmit an SSB, and the terminal device is semi-statically configured with a UL transmission or receives dynamic scheduling of a UL transmission, here a time interval between a last symbol of time domain resources occupied by the UL transmission after influence of the TA is considered and a first symbol of time domain resources occupied by the SSB is less than the third duration, or a time interval between a last symbol of time domain resources occupied by the SSB and a first symbol of time domain resources occupied by the UL transmission after influence of the TA is considered is less than the second duration, then the terminal device does not send semi-statically configured or the dynamically scheduled UL transmission, and/or the terminal device receives the SSB.

### Situation F for collision mode 2

In some embodiments, the operation of performing, by the terminal device, communication based on the target mode includes one of the following situations or modes 12-1 to 12-3.

Mode 12-1: the terminal device sends the first UL transmission, and/or the terminal device does not receive the first DL transmission.

Mode 12-2: the terminal device does not send the first UL transmission, and/or the terminal device receives the first DL transmission.

Mode 12-3: the terminal device determines whether to send the first UL transmission or to receive the first DL transmission, based on implementation of the terminal device.

In the mode 12-1, if the terminal device is semi-statically configured with a DL transmission or receives dynamic scheduling of a DL transmission, and the terminal device is triggered by a higher layer to perform a UL transmission on a valid RO, here a time interval between a last symbol of time domain resources occupied by the UL transmission on the valid RO after influence of the TA is considered and a first symbol of time domain resources occupied by the DL transmission is less than the third duration, or a time interval between a last symbol of time domain resources occupied by the DL transmission and a first symbol of time domain resources occupied by the UL transmission on the valid RO after influence of the TA is considered is less than the second duration, then the terminal device sends the UL transmission on the valid RO, and/or the terminal device does not receive the semi-statically configured or dynamically scheduled DL transmission.

In the mode 12-2, if the terminal device is semi-statically configured with a DL transmission or receives dynamic scheduling of a DL transmission, and the terminal device is triggered by a higher layer to perform a UL transmission on a valid RO, here a time interval between a last symbol of time domain resources occupied by the UL transmission on the valid RO after influence of the TA is considered and a first symbol of time domain resources occupied by the DL transmission is less than the third duration, or a time interval between a last symbol of time domain resources occupied by the DL transmission and a first symbol of time domain resources occupied by the UL transmission on the valid RO after influence of the TA is considered is less than the second duration, then the terminal device does not send the UL transmission on the valid RO, and/or the terminal device receives the semi-statically configured or dynamically scheduled DL transmission.

In the mode 12-3, if the terminal device is semi-statically configured with a DL transmission or receives dynamic scheduling of a DL transmission, and the terminal device is triggered by a higher layer to perform a UL transmission on a valid RO, here a time interval between a last symbol of time domain resources occupied by the UL transmission on the valid RO after influence of the TA is considered and a first symbol of time domain resources occupied by the DL transmission is less than the third duration, or a time interval between a last symbol of time domain resources occupied by the DL transmission and a first symbol of time domain resources occupied by the UL transmission on the valid RO after influence of the TA is considered is less than the second duration, then the terminal device determines to send the UL transmission on the valid RO or receive the DL transmission, based on its own implementation.

In some embodiments, in case of the collision mode 2, the operation of not receiving, by the terminal device, the first DL transmission includes the following operations.

The terminal device does not receive the first DL transmission on the first time domain resource.

Or, if the second time domain resource is prior to the first time domain resource, the terminal device does not receive a first DL channel or signal of the first DL transmission.

Or, if the first time domain resource is prior to the second time domain resource, the terminal device does not receive a last DL channel or signal of the first DL transmission.

In some embodiments, the operation of not sending, by the terminal device, the first UL transmission includes the following operations.

The terminal device does not send the first UL transmission on the second time domain resource.

Or, if the first time domain resource is prior to the second time domain resource, the terminal device does not send a first UL channel or signal of the first UL transmission.

Or, if the second time domain resource is prior to the first time domain resource, the terminal device does not send a last UL channel or signal of the first UL transmission.

In some embodiments, if the collision mode is the collision mode 2, the operation of not receiving, by the terminal device, the first DL transmission may include: the terminal device does not receive the first DL transmission on the first time domain resource, or the terminal device does not receive symbols of the first DL transmission located at the second duration, or the terminal device does not receive symbols of the first DL transmission located at the third duration.

In some embodiments, if the collision mode is the collision mode 2, the operation of not sending, by the terminal device, the first UL transmission may include: the terminal device does not send the first UL transmission on the second time domain resource, or the terminal device does not send symbols of the first UL transmission located at the second duration, or the terminal device does not send symbols of the first UL transmission located at the third duration.

Different collision modes and processing behaviors of the network device in different situations will be described below respectively.

As described above, the first time domain resource or the second time domain resource is a time domain resource calculated by the network device from the perspective of the terminal device, rather than a time domain resource for the network device to send the DL transmission actually or a time domain resource for the network device to receive the UL transmission actually. In order to explain this situation, FIG. 11 gives a schematic diagram of a scheduling time sequence in the NTN system. As shown in FIG. 11, assuming that a UL time unit and a DL time unit in the NTN network are aligned at a RP, a round-trip transmission latency Kmac between the network device and the RP is 2 slots, and a round-trip transmission latency between the terminal device and the RP, that is, a value of the TA is 4.5 slots, then the network device schedules the terminal device to receive the first DL transmission in a DL slot n+2 and send the first UL transmission in a UL slot n+7. In this example, the first time domain resource is the DL slot n+2 determined according to a DL slot of the terminal device, the second time domain resource is the UL slot n+7 determined according to a UL slot of the terminal device, the DL slot n+2 of the terminal device is overlapped with the UL slot n+7 of the terminal device in the time domain, and the third time domain resource includes the overlapped part, that is, the third time domain resource includes a second half of the DL slot n+2 of the terminal device, or the third time domain resource includes a first half of the UL slot n+7 of the terminal device. From the perspective of the network device, the first DL transmission should occur in a DL slot n+2 of the network device, the first UL transmission should occur in a UL slot n+7 of the network device, and the first DL transmission does not collide with the first UL transmission in the time domain.

In the NTN network, influence of the TA of the terminal device cannot be ignored due to a large transmission latency of a signal, therefore it becomes difficult for the network device to avoid the UL transmission of the terminal device from colliding with the DL transmission of the terminal device through scheduling. In other words, the network device cannot determine whether the first DL transmission and the first UL transmission scheduled by it may collide in the time domain.

Therefore, in some embodiments, the operation of performing, by the network device, communication based on the target mode includes the following operation.

The network device sends a first DL transmission and receives a first UL transmission.

If the network device may acquire TA information of the terminal device (for example, the terminal device reports its own TA information to the network device), the network device may calculate time domain positions of the first time domain resource and the second time domain resource determined from the perspective of the terminal device based on the TA information of the terminal device, thereby determining whether the first DL transmission on the first time domain resource collides with the first UL transmission on the second time domain resource in the time domain from the perspective of the terminal device. In this situation, processing behaviors of the network device may be shown as follows.

### Situation A for collision mode 1

In some embodiments, the operation of performing, by the network device, communication based on the target mode includes the following mode 13-1.

Mode 13-1: the network device receives the first UL transmission on a seventh time domain resource, and/or the network device does not send the first DL transmission on the seventh time domain resource.

The seventh time domain resource corresponds to the third time domain resource.

In some embodiments, the seventh time domain resource corresponding to the third time domain resource may refer to a correspondence between a time unit determined by the network device and a time unit determined by the terminal device that have the same number. For example, in the example of FIG. 11, the third time domain resource includes a second half of the DL slot n+2 of the terminal device, and the seventh time domain resource includes a second half of the DL slot n+2 of the network device; or, the third time domain resource includes a first half of the UL slot n+7 of the terminal device, and the seventh time domain resource includes a first half of the UL slot n+7 of the network device.

Here, it may be considered that priority of the UL transmission is higher than that of the DL transmission.

In the mode 13-1, if the network device sends dynamic scheduling of a DL transmission and dynamic scheduling of a UL transmission to the terminal device, here as to the terminal device, time domain resources occupied by the UL transmission after influence of the TA is considered are partially or completely overlapped with time domain resources occupied by the DL transmission, and the third time domain resource includes the overlapped part, then the network device receives the dynamically scheduled UL transmission on the seventh time domain resource, and/or the network device does not send the dynamically scheduled DL transmission on the seventh time domain resource.

In some embodiments, the operation of performing, by the network device, communication based on the target mode includes the following situations or modes 13-2 to 13-6.

Mode 13-2: the network device does not receive the first UL transmission on a seventh time domain resource, and/or the network device sends the first DL transmission on the seventh time domain resource.

Mode 13-3: when a time interval between an end position of a fourth time domain resource and a start position of the second time domain resource is less than a first duration, the network device receives the first UL transmission on the seventh time domain resource, and/or the network device does not send the first DL transmission on the seventh time domain resource.

Mode 13-4: when the time interval between the end position of the fourth time domain resource and the start position of the second time domain resource is equal to or greater than the first duration, the network device does not receive the first UL transmission on the seventh time domain resource, and/or the network device sends the first DL transmission on the seventh time domain resource.

Mode 13-5: when a time interval between the end position of the fourth time domain resource and a start position of the third time domain resource is less than the first duration, the network device receives the first UL transmission on the seventh time domain resource, and/or the network device does not send the first DL transmission on the seventh time domain resource.

Mode 13-6: when the time interval between the end position of the fourth time domain resource and the start position of the third time domain resource is equal to or greater than the first duration, the network device does not receive the first UL transmission on the seventh time domain resource, and/or the network device sends the first DL transmission on the seventh time domain resource.

The fourth time domain resource is a time domain resource for the terminal device to receive the first DCI, and the seventh time domain resource corresponds to the third time domain resource.

In the mode 13-2, if the network device sends dynamic scheduling of a DL transmission and dynamic scheduling of a UL transmission, and the terminal device receives dynamic scheduling of the DL transmission and dynamic scheduling of the UL transmission, here as to the terminal device, time domain resources occupied by the UL transmission after influence of the TA is considered are partially or completely overlapped with time domain resources occupied by the DL transmission, and the overlapped part is the third time domain resource of the terminal device, then the network device sends the dynamically scheduled DL transmission on the seventh time domain resource, and/or the terminal device does not receive the dynamically scheduled UL transmission on the seventh time domain resource.

In the mode 13-2, it may be considered that priority of the DL transmission is higher than that of the UL transmission.

In the mode 13-3 or the mode 13-4, the end position of the fourth time domain resource may be a position of the last symbol of the CORESET carrying the first DCI, and the start position of the second time domain resource may be a first symbol of the second time domain resource.

If the network device sends dynamic scheduling of a DL transmission and dynamic scheduling of a UL transmission, and the terminal device receives dynamic scheduling of the DL transmission and dynamic scheduling of the UL transmission, here as to the terminal device, time domain resources occupied by the UL transmission after influence of the TA is considered are partially or completely overlapped with time domain resources occupied by the DL transmission, and the overlapped part is the third time domain resource of the terminal device, then: if relative to the last symbol of the CORESET where the first DCI for dynamically scheduling the DL transmission is detected, a first symbol for transmitting the dynamically scheduled UL transmission after influence of the TA is considered is in the first duration, then the network device receives the dynamically scheduled UL transmission on the seventh time domain resource, and/or the network device does not send the dynamically scheduled DL transmission on the seventh time domain resource; otherwise, the network device does not receive the dynamically scheduled UL transmission on the seventh time domain resource, and/or the network device sends the dynamically scheduled DL transmission on the seventh time domain resource.

Here, it may be considered that in a normal case, priority of the DL transmission is higher than that of the UL transmission. If a time interval between an end position of the terminal device receiving the first DCI and a start position of the UL transmission of the terminal device after the TA is considered is less than the first duration, it may be considered that the terminal device has begun to prepare for the UL transmission, then the priority of the UL transmission is higher than that of the DL transmission, the UL transmission cannot be cancelled, the terminal device sends the UL transmission on the third time domain resource, and the network device receives the UL transmission on the seventh time domain resource; otherwise, it belongs to a normal case where the priority of the DL transmission is higher than that of the UL transmission, the UL transmission is allowed to be cancelled, the terminal device receives the DL transmission on the third time domain resource, and the network device sends the DL transmission on the seventh time domain resource.

In the mode 13-5 and the mode 13-6, if the network device sends dynamic scheduling of a DL transmission and dynamic scheduling of a UL transmission, and the terminal device receives dynamic scheduling of the DL transmission and dynamic scheduling of the UL transmission, here as to the terminal device, time domain resources occupied by the UL transmission after influence of the TA is considered are partially or completely overlapped with time domain resources occupied by the DL transmission, and the overlapped part is the third time domain resource of the terminal device, then: if relative to the last symbol of the CORESET where the first DCI for dynamically scheduling the DL transmission is detected by the terminal device, a first symbol of the third time domain resource of the terminal device is in the first duration, then the network device receives the dynamically scheduled UL transmission on the seventh time domain resource, to receive the UL transmission sent by the terminal device on the third time domain resource, and/or the network device does not send the dynamically scheduled DL transmission on the seventh time domain resource; otherwise, the network device does not receive the dynamically scheduled UL transmission on the seventh time domain resource, and/or the network device sends the dynamically scheduled DL transmission on the seventh time domain resource, such that the terminal device receives the DL transmission on the third time domain resource.

Here, it may be considered that in a normal case, priority of the DL transmission is higher than that of the UL transmission. If the time interval between the end position of the fourth time domain resource of the terminal device and the start position of the third time domain resource of the terminal device is less than the first duration, it may be considered that the terminal device has begun to prepare for the UL transmission, then the priority of the UL transmission is higher than that of the DL transmission, the UL transmission cannot be cancelled, the terminal device sends the UL transmission on the third time domain resource, and the network device receives the UL transmission sent by the terminal device on the third time domain resource, on the seventh time domain resource; otherwise, it belongs to a normal case where the priority of the DL transmission is higher than that of the UL transmission, the UL transmission is allowed to be cancelled, the network device sends the DL transmission on the seventh time domain resource, such that the terminal device receives the DL transmission on the third time domain resource.

In a mode 13-7, if the network device sends dynamic scheduling of a DL transmission and dynamic scheduling of a UL transmission, and the terminal device receives dynamic scheduling of the DL transmission and dynamic scheduling of the UL transmission, here as to the terminal device, time domain resources occupied by the UL transmission after influence of the TA is considered are partially or completely overlapped with time domain resources occupied by the DL transmission, then the network device sends the DL transmission and receives the UL transmission on the seventh time domain resource. It is thus able to meet requirements that the terminal device determines to send the dynamically scheduled UL transmission or receive the dynamically scheduled DL transmission on the third time domain resource, based on its own implementation.

In the mode 13-7, as to the terminal device, priority of the UL transmission or the DL transmission is determined by the terminal device itself, while as to the network device, the UL transmission and the DL transmission are performed simultaneously.

In some embodiments, the operation of performing, by the network device, communication based on the target mode includes the following mode 13-7.

Mode 13-7: the network device receives the first UL transmission on a seventh time domain resource, and the network device sends the first DL transmission on the seventh time domain resource. The seventh time domain resource corresponds to the third time domain resource.

### Situation B for collision mode 1

In some embodiments, the operation of performing, by the network device, communication based on the target mode includes one of the following situations or modes 14-1 to 14-3.

Mode 14-1: the network device receives the first UL transmission on a seventh time domain resource, and/or the network device does not send the first DL transmission on the seventh time domain resource.

Mode 14-2: the network device does not receive the first UL transmission on the seventh time domain resource, and/or the network device sends the first DL transmission on the seventh time domain resource.

Mode 14-3: the network device receives the first UL transmission on the seventh time domain resource, and the network device sends the first DL transmission on the seventh time domain resource.

In the mode 14-1, the terminal device is semi-statically configured with a DL transmission and a UL transmission, here as to the terminal device, time domain resources occupied by the semi-statically configured UL transmission after influence of the TA is considered are partially or completely overlapped with time domain resources occupied by the semi-statically configured DL transmission, and the overlapped part is the third time domain resource of the terminal device, then the network device receives the UL transmission on the seventh time domain resource, to receive the semi-statically configured UL transmission sent by the terminal device on the third time domain resource, and/or the network device does not send the DL transmission on the seventh time domain resource.

In the mode 14-1, it may be considered that priority of the UL transmission is higher than that of the DL transmission.

In the mode 14-2, the terminal device is semi-statically configured with a DL transmission and a UL transmission, here as to the terminal device, time domain resources occupied by the semi-statically configured UL transmission after influence of the TA is considered are partially or completely overlapped with time domain resources occupied by the semi-statically configured DL transmission, and the overlapped part is the third time domain resource of the terminal device, then the network device does not receive the UL transmission on the seventh time domain resource, and/or the network device sends the DL transmission on the seventh time domain resource, and the terminal device receives the DL transmission on the third time domain resource.

In the mode 14-2, it may be considered that priority of the DL transmission is higher than that of the UL transmission.

In the mode 14-3, the terminal device is semi-statically configured with a DL transmission and a UL transmission, here as to the terminal device, time domain resources occupied by the semi-statically configured UL transmission after influence of the TA is considered are partially or completely overlapped with time domain resources occupied by the semi-statically configured DL transmission, and the overlapped part is the third time domain resource of the terminal device, then the network device sends the DL transmission and receives the UL transmission on the seventh time domain resource. It is thus able to meet requirements that the terminal device determines to send the dynamically scheduled UL transmission or receive the dynamically scheduled DL transmission on the third time domain resource, based on its own implementation.

In the mode 14-3, as to the terminal device, priority of the UL transmission or the DL transmission is determined by the terminal device itself, while as to the network device, the UL transmission and the DL transmission are performed simultaneously.

### Situation C for collision mode 1

In some embodiments, the operation of performing, by the network device, communication based on the target mode includes one of the following situations or modes 15-1 to 15-5.

Mode 15-1: the network device does not receive the first UL transmission on a seventh time domain resource, and/or the network device sends the first DL transmission on the seventh time domain resource.

Mode 15-2: when a time interval between an end position of a fourth time domain resource and a start position of the second time domain resource is less than a first duration, the network device receives the first UL transmission on the seventh time domain resource, and/or the network device does not send the first DL transmission on the seventh time domain resource.

Mode 15-3: when the time interval between the end position of the fourth time domain resource and the start position of the second time domain resource is equal to or greater than the first duration, the network device does not receive the first UL transmission on the seventh time domain resource, and/or the network device sends the first DL transmission on the seventh time domain resource.

Mode 15-4: when a time interval between the end position of the fourth time domain resource and a start position of the third time domain resource is less than the first duration, the network device receives the first UL transmission on the seventh time domain resource, and/or the network device does not send the first DL transmission on the seventh time domain resource.

Mode 15-5: when the time interval between the end position of the fourth time domain resource and the start position of the third time domain resource is equal to or greater than the first duration, the network device does not receive the first UL transmission on the seventh time domain resource, and/or the network device sends the first DL transmission on the seventh time domain resource.

In the mode 15-1, the network device sends dynamic scheduling of a DL transmission, and the terminal device is semi-statically configured with a UL transmission, here as to the terminal device, time domain resources occupied by the semi-statically configured UL transmission after influence of the TA is considered are partially or completely overlapped with time domain resources occupied by the dynamically scheduled DL transmission, and the overlapped part is the third time domain resource of the terminal device, then the network device does not receive the UL transmission on the seventh time domain resource, and/or the network device sends the DL transmission on the seventh time domain resource, such that the terminal device receives the DL transmission on the third time domain resource.

In the mode 15-1, it may be considered that priority of the DL transmission is higher than that of the UL transmission.

In the mode 15-2 and the mode 15-3, the network device sends dynamic scheduling of a DL transmission, and the terminal device is semi-statically configured with a UL transmission, here as to the terminal device, time domain resources occupied by the semi-statically configured UL transmission after influence of the TA is considered are partially or completely overlapped with time domain resources occupied by the dynamically scheduled DL transmission, and the overlapped part is the third time domain resource of the terminal device, then: if relative to the last symbol of the CORESET where the first DCI for dynamically scheduling the DL transmission is detected, a first symbol of the semi-statically configured UL transmission after influence of the TA is considered is in the first duration, then the network device receives the semi-statically configured UL transmission on the seventh time domain resource, and/or the network device does not send the dynamically scheduled DL transmission on the seventh time domain resource; otherwise, the network device does not receive the semi-statically configured UL transmission on the seventh time domain resource, and/or the network device sends the dynamically scheduled DL transmission on the seventh time domain resource.

In the mode 15-4 and the mode 15-5, the network device sends dynamic scheduling of a DL transmission, and the terminal device is semi-statically configured with a UL transmission, here as to the terminal device, time domain resources occupied by the semi-statically configured UL transmission after influence of the TA is considered are partially or completely overlapped with time domain resources occupied by the dynamically scheduled DL transmission, and the overlapped part is the third time domain resource of the terminal device, then: if relative to the last symbol of the CORESET where the first DCI for dynamically scheduling the DL transmission is detected by the terminal device, a first symbol of the third time domain resource of the terminal device is in the first duration, then the network device receives the semi-statically configured UL transmission on the seventh time domain resource, to receive the UL transmission sent by the terminal device on the third time domain resource, and/or the network device does not send the dynamically scheduled DL transmission on the seventh time domain resource; otherwise, the network device does not receive the semi-statically configured UL transmission on the seventh time domain resource, and/or the network device sends the dynamically scheduled DL transmission on the seventh time domain resource, such that the terminal device receives the DL transmission on the third time domain resource.

### Situation D for collision mode 1

In some embodiments, the operation of performing, by the network device, communication based on the target mode includes the following mode 16-1.

Mode 16-1: the network device receives the first UL transmission on a seventh time domain resource, and/or the network device does not send the first DL transmission on the seventh time domain resource.

In the mode 16-1, the network device sends dynamic scheduling of a UL transmission to the terminal device, the terminal device receives dynamic scheduling of the UL transmission, and the terminal device is semi-statically configured with a DL transmission, here as to the terminal device, time domain resources occupied by the dynamically scheduled UL transmission after influence of the TA is considered are partially or completely overlapped with time domain resources occupied by the semi-statically configured DL transmission, and the overlapped part is the third time domain resource of the terminal device, then the network device receives the UL transmission on the seventh time domain resource, to receive the dynamically scheduled UL transmission sent by the terminal device on the third time domain resource, and/or the network device does not send the DL transmission on the seventh time domain resource.

### Situation E for collision mode 1

In some embodiments, the operation of performing, by the network device, communication based on the target mode includes the following mode 17-1.

Mode 17-1: the network device does not receive the first UL transmission on a seventh time domain resource, and/or the network device sends the first DL transmission on the seventh time domain resource.

In the mode 17-1, if the network device instructs the terminal device to transmit an SSB, and the terminal device is semi-statically configured with a UL transmission or receives dynamic scheduling of a UL transmission, here as to the terminal device, time domain resources occupied by the dynamically scheduled or semi-statically configured UL transmission after influence of the TA is considered are partially or completely overlapped with time domain resources occupied by transmission of the SSB, and the overlapped part is the third time domain resource of the terminal device, then the terminal device may not receive the dynamically scheduled or semi-statically configured UL transmission on the seventh time domain resource, and/or the network device sends the SSB on the seventh time domain resource, such that the terminal device receives the SSB on the third time domain resource.

In the mode 17-1, it may be considered that priority of the SSB is higher than that of the UL transmission.

### Situation F for collision mode 1

In some embodiments, the operation of performing, by the network device, communication based on the target mode includes one of the following situations or modes 18-1 to 18-3.

Mode 18-1: the network device receives the first UL transmission on a seventh time domain resource, and/or the network device does not send the first DL transmission on the seventh time domain resource.

Mode 18-2: the network device does not receive the first UL transmission on the seventh time domain resource, and/or the network device sends the first DL transmission on the seventh time domain resource.

Mode 18-3: the network device receives the first UL transmission on the seventh time domain resource, and the network device sends the first DL transmission on the seventh time domain resource.

In the mode 18-1, if the terminal device is semi-statically configured with a DL transmission or receives dynamic scheduling of a DL transmission, and the terminal device is triggered by a higher layer to perform a UL transmission on a valid RO, here as to the terminal device, time domain resources occupied by the dynamically scheduled or semi-statically configured DL transmission are partially or completely overlapped with time domain resources occupied by the UL transmission on the valid RO after influence of the TA is considered, and the overlapped part is the third time domain resource of the terminal device, then the network device receives the UL transmission on the valid RO sent by the terminal device on the third time domain resource, on the seventh time domain resource, and/or the network device does not send the DL transmission on the seventh time domain resource.

In the mode 18-2, if the terminal device is semi-statically configured with a DL transmission or receives dynamic scheduling of a DL transmission, and the terminal device is triggered by a higher layer to perform a UL transmission on a valid RO, here as to the terminal device, time domain resources occupied by the dynamically scheduled or semi-statically configured DL transmission are partially or completely overlapped with time domain resources occupied by the UL transmission on the valid RO after influence of the TA is considered, and the overlapped part is the third time domain resource of the terminal device, then the network device sends the DL transmission on the seventh time domain resource and/or the network device does not receive the UL transmission on the RO on the seventh time domain resource.

In the mode 18-3, if the terminal device is semi-statically configured with a DL transmission or receives dynamic scheduling of a DL transmission, and the terminal device is triggered by a higher layer to perform a UL transmission on a valid RO, here as to the terminal device, time domain resources occupied by the dynamically scheduled or semi-statically configured DL transmission are partially or completely overlapped with time domain resources occupied by the UL transmission on the valid RO after influence of the TA is considered, and the overlapped part is the third time domain resource of the terminal device, then the network device sends the DL transmission and receives the UL transmission on the seventh time domain resource. It is thus able to meet requirements that the terminal device determines to send the dynamically scheduled UL transmission or receive the dynamically scheduled DL transmission on the third time domain resource, based on its own implementation.

In some embodiments, the operation of not sending, by the network device, the first DL transmission on the seventh time domain resource includes the following operations.

The network device does not send the first DL transmission.

Or, the network device does not send a symbol of the first DL transmission located on the seventh time domain resource.

Or, the network device does not send a DL channel or signal of the first DL transmission including the seventh time domain resource.

An example that the network device does not send the symbol of the first DL transmission located on the seventh time domain resource is taken, the first DL transmission includes 4 symbols, here 3^{rd} and 4^{th} symbols are symbols on the seventh time domain resource, then the network device does not send the 3^{rd} and 4^{th} symbols, while still sends 1^{st} and 2^{nd} symbols.

An example that the network device does not send the DL channel or signal of the first DL transmission including the seventh time domain resource is taken, the first DL transmission includes 4 channels, here time domain resources of a 3^{rd} channel include the seventh time domain resource, then the network device does not send the 3^{rd} channel, while sends 1^{st}, 2^{nd} and 4^{th} channels.

In some embodiments, the operation of not receiving, by the network device, the first UL transmission on the seventh time domain resource includes the following operations.

The network device does not receive the first UL transmission.

Or, the network device does not receive a symbol of the first UL transmission located on the seventh time domain resource.

Or, the network device does not receive a UL channel or signal of the first UL transmission including the seventh time domain resource.

An example that the network device does not receive the symbol of the first UL transmission located on the seventh time domain resource is taken, the first UL transmission includes 4 symbols, here 3^{rd} and 4^{th} symbols are symbols on the seventh time domain resource, then the network device does not receive the 3^{rd} and 4^{th} symbols, while still receives 1^{st} and 2^{nd} symbols.

An example that the network device does not receive the UL channel or signal of the first UL transmission including the seventh time domain resource is taken, the first UL transmission includes 4 channels, here time domain resources of a 3^{rd} channel include the third time domain resource, then the network device does not receive the 3^{rd} channel, while receives 1^{st}, 2^{nd} and 4^{th} channels.

### Situation A for collision mode 2

In some embodiments, the operation of performing, by the network device, communication based on the target mode includes one of the following situations or modes 19-1 to 19-5.

Mode 19-1: the network device receives the first UL transmission, and/or the network device does not send the first DL transmission.

Mode 19-2: the network device does not receive the first UL transmission, and/or the network device sends the first DL transmission.

Mode 19-3: when a time interval between an end position of a fourth time domain resource and the start position of the second time domain resource is less than a first duration, the network device receives the first UL transmission, and/or the network device does not send the first DL transmission.

Mode 19-4: when the time interval between the end position of the fourth time domain resource and the start position of the second time domain resource is equal to or greater than the first duration, the network device does not receive the first UL transmission, and/or the network device sends the first DL transmission.

Mode 19-5: the network device receives the first UL transmission, and the network device sends the first DL transmission.

In the mode 19-1, if the network device sends dynamic scheduling of a DL transmission and dynamic scheduling of a UL transmission, and the terminal device receives dynamic scheduling of the DL transmission and dynamic scheduling of the UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device receives the dynamically scheduled UL transmission, and/or the network device does not send the dynamically scheduled DL transmission.

In the mode 19-2, if the network device sends dynamic scheduling of a DL transmission and dynamic scheduling of a UL transmission, and the terminal device receives dynamic scheduling of the DL transmission and dynamic scheduling of the UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device does not receive the dynamically scheduled UL transmission, and/or the network device sends the dynamically scheduled DL transmission.

In the mode 19-3 and the mode 19-4, if the network device sends dynamic scheduling of a DL transmission and dynamic scheduling of a UL transmission, and the terminal device receives dynamic scheduling of the DL transmission and dynamic scheduling of the UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, and here a time interval between a last symbol of the first DCI for dynamically scheduling the DL transmission and the first symbol of time domain resources occupied by the UL transmission after influence of the TA is considered is less than the first duration, then the network device does not receive the UL transmission, and/or the network device sends the DL transmission; otherwise, the network device receives the UL transmission, and/or the network device sends the DL transmission.

In the mode 19-5, if the network device sends dynamic scheduling of a DL transmission and dynamic scheduling of a UL transmission, and the terminal device receives dynamic scheduling of the DL transmission and dynamic scheduling of the UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device sends the DL transmission and receives the UL transmission. It is thus able to meet requirements that the terminal device determines to send the dynamically scheduled UL transmission or receive the dynamically scheduled DL transmission, based on its own implementation.

### Situation B for collision mode 2

In some embodiments, the operation of performing, by the network device, communication based on the target mode includes one of the following situations or modes 20-1 to 20-3.

Mode 20-1: the network device receives the first UL transmission, and/or the network device does not send the first DL transmission.

Mode 20-2: the network device does not receive the first UL transmission, and/or the network device sends the first DL transmission.

Mode 20-3: the network device receives the first UL transmission, and the network device sends the first DL transmission.

In the mode 20-1, the terminal device is semi-statically configured with a DL transmission and a UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device receives the semi-statically configured UL transmission, and/or the network device does not send the semi-statically configured DL transmission.

In the mode 20-2, the terminal device is semi-statically configured with a DL transmission and a UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device does not receive the semi-statically configured UL transmission, and/or the network device sends the semi-statically configured DL transmission.

In the mode 20-3, the terminal device is semi-statically configured with a DL transmission and a UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device sends the DL transmission and receives the UL transmission. It is thus able to meet requirements that the terminal device determines to send the semi-statically configured UL transmission or receive the semi-statically configured DL transmission, based on its own implementation.

### Situation C for collision mode 2

In some embodiments, the operation of performing, by the network device, communication based on the target mode includes one of the following situations or modes 21-1 to 21-3.

Mode 21-1: the network device does not receive the first UL transmission, and/or the network device sends the first DL transmission.

Mode 21-2: when a time interval between an end position of a fourth time domain resource and the start position of the second time domain resource is less than a first duration, the network device receives the first UL transmission, and/or the network device does not send the first DL transmission.

Mode 21-3: when the time interval between the end position of the fourth time domain resource and the start position of the second time domain resource is equal to or greater than the first duration, the network device does not receive the first UL transmission, and/or the network device sends the first DL transmission.

In the mode 21-1, the network device sends dynamic scheduling of a DL transmission, and the terminal device is semi-statically configured with a UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device does not receive the semi-statically configured UL transmission, and/or the network device sends the dynamically scheduled DL transmission.

In the mode 21-2 and the mode 21-3, the network device sends dynamic scheduling of a DL transmission, and the terminal device is semi-statically configured with a UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, and here a time interval between a last symbol of the first DCI for dynamically scheduling the DL transmission and the first symbol of time domain resources occupied by the UL transmission after influence of the TA is considered is less than the first duration, then the network device does not receive the UL transmission, and/or the network device sends the DL transmission; otherwise, the network device receives the UL transmission, and/or the network device sends the DL transmission.

### Situation D for collision mode 2

In some embodiments, the operation of performing, by the network device, communication based on the target mode includes the following mode 22-1.

Mode 22-1: the network device receives the first UL transmission, and/or the network device does not send the first DL transmission.

In the mode 22-1, the network device sends dynamic scheduling of a UL transmission to the terminal device, the terminal device receives dynamic scheduling of the UL transmission, and the terminal device is semi-statically configured with a DL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device receives the semi-statically configured UL transmission, and/or the network device does not send the semi-statically configured DL transmission.

### Situation E for collision mode 2

In some embodiments, the operation of performing, by the network device, communication based on the target mode includes the following mode 23-1.

Mode 23-1: the network device does not receive the first UL transmission, and/or the network device sends the first DL transmission.

In the mode 23-1, if the network device instructs the terminal device to transmit an SSB, and the terminal device is semi-statically configured with a UL transmission or receives dynamic scheduling of a UL transmission, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device does not receive the semi-statically configured UL transmission, and/or the network device sends the SSB.

### Situation F for collision mode 2

In some embodiments, the operation of performing, by the network device, communication based on the target mode includes one of the following situations or modes 24-1 to 24-3.

Mode 24-1: the network device receives the first UL transmission, and/or the network device does not send the first DL transmission.

Mode 24-2: the network device does not receive the first UL transmission, and/or the network device sends the first DL transmission.

Mode 24-3: the network device receives the first UL transmission, and the network device sends the first DL transmission.

In the mode 24-1, if the terminal device is semi-statically configured with a DL transmission or receives dynamic scheduling of a DL transmission, and the terminal device is triggered by a higher layer to perform a UL transmission on a valid RO, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device receives the UL transmission on the valid RO, and/or the network device does not send the semi-statically configured or dynamically scheduled DL transmission.

In the mode 24-2, if the terminal device is semi-statically configured with a DL transmission or receives dynamic scheduling of a DL transmission, and the terminal device is triggered by a higher layer to perform a UL transmission on a valid RO, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device does not receive the UL transmission on the valid RO, and/or the network device sends the DL transmission.

In the mode 24-3, if the terminal device is semi-statically configured with a DL transmission or receives dynamic scheduling of a DL transmission, and the terminal device is triggered by a higher layer to perform a UL transmission on a valid RO, here as to the terminal device, a time interval between a last symbol of time domain resources occupied by the UL transmission after influence of the TA is considered and a first symbol of time domain resources occupied by the DL transmission is less than the third duration, or a time interval between a last symbol of time domain resources occupied by the DL transmission and a first symbol of time domain resources occupied by the UL transmission after influence of the TA is considered is less than the second duration, then the network device sends the DL transmission and receives the UL transmission on the valid RO. It is thus able to meet requirements of the terminal device determining to send the UL transmission or receive the DL transmission, based on its own implementation.

In some embodiments, in case of the collision mode 2, the operation of not sending, by the network device, the first DL transmission includes the following operations.

The network device does not send the first DL transmission on the first time domain resource.

Or, if the second time domain resource is prior to the first time domain resource, the network device does not send a first DL channel or signal of the first DL transmission.

Or, if the first time domain resource is prior to the second time domain resource, the network device does not send a last DL channel or signal of the first DL transmission.

In some embodiments, in case of the collision mode 2, the operation of not receiving, by the network device, the first UL transmission includes the following operations.

The network device does not receive the first UL transmission on the second time domain resource.

Or, if the first time domain resource is prior to the second time domain resource, the network device does not receive a first UL channel or signal of the first UL transmission.

Or, if the second time domain resource is prior to the first time domain resource, the network device does not receive a last UL channel or signal of the first UL transmission.

In some embodiments, as to the network device or the terminal device, the target mode is determined based on at least one of the following information:
a preset rule;
configuration information of the network device;
a priority of a channel or signal included in the first DL transmission;
a priority of a channel or signal included in the first UL transmission;
the channel or signal included in the first DL transmission; or
the channel or signal included in the first UL transmission.

In some embodiments, the terminal device determines priorities between the dynamically scheduled UL transmission and the dynamically scheduled DL transmission according to the preset rule or a first configuration information of the network device.

An example that the target mode is based on the priority of the channel or signal included in the first DL transmission is taken, if the priority of the first DL transmission is low, a situation where the first DL transmission collides with the first UL transmission is the situation A, then the terminal device performs the mode 1-1, and the network device performs the mode 13-1.

An example that the target mode is based on the priority of the channel or signal included in the first UL transmission is taken, if the priority of the first UL transmission is low, a situation where the first DL transmission collides with the first UL transmission is the situation A, then the target mode used by the terminal device is any one of the mode 1-2, the mode 1-3, the mode 1-4, the mode 1-5 or the mode 1-6.

If the target mode is to be determined based on the channel or signal included in the first DL transmission, when the first DL transmission includes different channels or signals, corresponding target modes are different.

In an example, when the first DL transmission includes a PDSCH scheduled in a DCI format, the target mode used by the terminal device is the mode 1-1.

In an example, when the first DL transmission includes a CSI-RS scheduled in a DCI format, the target mode used by the terminal device is the mode 1-1.

If the target mode is to be determined based on the channel or signal included in the first UL transmission, when the first UL transmission includes different channels or signals, corresponding target modes are different.

In an example, when the first UL transmission includes one of a PDSCH, a PUCCH or a PRACH scheduled in a DCI format, behavior of the terminal device is any one of the mode 1-1, the mode 1-2, the mode 1-3, the mode 1-4, the mode 1-5 or the mode 1-6.

In an example, when the first UL transmission includes an SRS scheduled in a DCI format, the behavior of the terminal device is the mode 1-1, the mode 1-2 or the mode 1-7.

In an example, when the dynamically scheduled DL transmission includes a PDSCH scheduled in a DCI format, the behavior of the terminal device is the above mode 1-1; otherwise, the behavior of the terminal device is the above mode 1-2 or mode 1-3 or mode 1-5.

In an example, when the dynamically scheduled DL transmission includes a CSI-RS scheduled in a DCI format, the behavior of the terminal device is the above mode 1-2 or mode 1-3 or mode 1-5; otherwise, the behavior of the terminal device is the above mode 1-1.

In an example, when the dynamically scheduled UL transmission includes at least one of a PUSCH, a PUCCH or a PRACH scheduled in a DCI format, the behavior of the terminal device is the above mode 1-1 or mode 1-2 or mode 1-3.

In an example, when the dynamically scheduled UL transmission includes an SRS scheduled in a DCI format, the behavior of the terminal device is the above mode 1-1 or mode 1-2 or mode 1-5.

In an example, when the dynamically scheduled DL transmission includes a PDSCH scheduled in a DCI format and the dynamically scheduled UL transmission includes a PRACH scheduled in a DCI format, the behavior of the terminal device is the above mode 1-1.

In an example, when the dynamically scheduled DL transmission includes a CSI-RS scheduled in a DCI format and the dynamically scheduled UL transmission includes a PUSCH or a PUCCH scheduled in a DCI format, the behavior of the terminal device is the above mode 1-2 or mode 1-3.

In an example, when the semi-statically configured DL transmission includes a PDCCH in a Type-0/0A/1/2-PDCCH CSS configured by common higher-layer parameters, the behavior of the terminal device is the above mode 2-2.

In an example, when the semi-statically configured DL transmission includes a PDCCH configured by a higher layer, the behavior of the terminal device is the above mode 2-2; otherwise, the behavior of the terminal device is the above mode 2-1.

In an example, when the semi-statically configured UL transmission includes a PUCCH configured by a higher layer and the PUCCH is configured to carry a Scheduling Request (SR), the behavior of the terminal device is the above mode 2-1.

In an example, when the semi-statically configured DL transmission includes a PDCCH configured by a higher layer, the behavior of the terminal device is the above mode 2-2; otherwise, when the semi-statically configured UL transmission includes a PUCCH configured by a higher layer and the PUCCH is configured to carry an SR, the behavior of the terminal device is the above mode 2-1; otherwise, the behavior of the terminal device is the above mode 2-2.

In an example, when the semi-statically configured UL transmission includes at least one of a PUSCH or a PUCCH configured by higher-layer parameters, the behavior of the terminal device is the above mode 3-1.

In an example, when the semi-statically configured UL transmission includes an SRS configured by high-layer parameters, the behavior of the terminal device is the above mode 3-2.

In an example, when the dynamically scheduled DL transmission includes a CSI-RS scheduled in a DCI format, the behavior of the terminal device is the above mode 3-2.

An embodiment of the disclosure further provides a method for wireless communication, as shown in FIG. 20A, the method is applied to a terminal device and includes the following operation S2001A.

In operation S2001A, the terminal device sends TA of the terminal device to a network device, and the TA of the terminal device is used by the network device to schedule a first UL transmission.

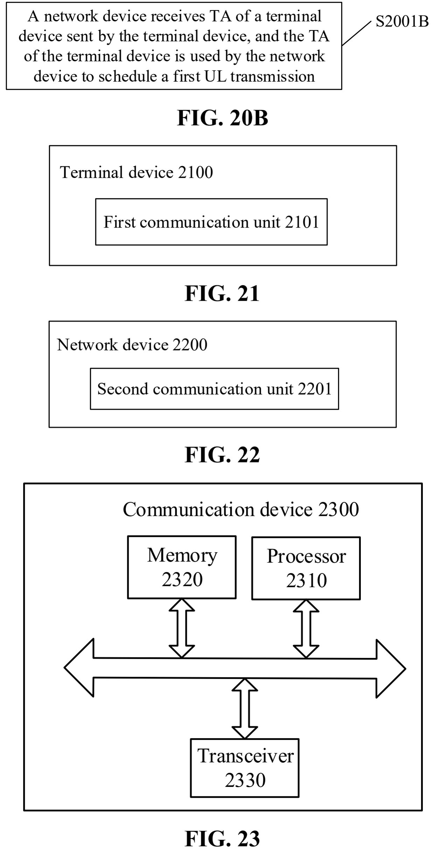

An embodiment of the disclosure further provides a method for wireless communication, as shown in FIG. 20B, the method is applied to a network device and includes the following operation S2001B.

In operation S2001B, the network device receives TA of a terminal device sent by the terminal device, and the TA of the terminal device is used by the network device to schedule a first UL transmission.

In the embodiments of the disclosure, the terminal device reports its own TA to the network device, such that when the network device schedules the first UL transmission, the network device determines the first time domain resource for the first UL transmission according to the TA of the terminal device, thereby avoiding the first DL transmission from colliding with the first UL transmission in the time domain.

In the embodiments of the disclosure, modes in which the first DL transmission collides with the first UL transmission in the time domain include the above collision mode 1 and/or collision mode 2.

It may be understood that descriptions of the collision mode 1 and the collision mode 2 may refer to descriptions of the above collision modes, which will not be elaborated here.

In some embodiments, the TA of the terminal device is determined based on at least one of the following information:
synchronization assistance information sent by the network device;
a TA command sent by the network device; or
GNSS positioning information of the terminal device.

In some embodiments, the unit of the TA sent by the terminal device includes at least one of:
a first sampling interval, a slot, or a symbol.

The first sampling interval is a sampling interval under a first subcarrier spacing. If the first subcarrier spacing is 15 kHz, the first sampling interval may be Ts, Ts = 1/(15000 * 2048) seconds. If the first subcarrier spacing is 480 kHz, the first sampling interval may be Tc, Tc = 1/(48000 * 4096) seconds. Size of the first subcarrier spacing may be pre-set, or may be configured by the network device, or may be agreed by a protocol.

The unit of the TA sent by the terminal device is the symbol, which may be understood as: value of the TA reported by the terminal device is N symbols, here N is a non-negative integer.

If the unit of the TA sent by the terminal device is the first sampling interval or the symbol, the value of the TA reported by the terminal device is relatively accurate, and the network device may achieve avoidance at the symbol level in scheduling.

If the unit of the TA sent by the terminal device is the slot, the network device may achieve avoidance at the slot level in scheduling.

In the embodiments of the disclosure, in the NTN network environment, the value of the TA of the terminal device may change with the movement of the satellite, the terminal device may send the TA to the network device based on the change in the value of the TA, or may send the TA to the network device based on a set period, such that the network device may obtain TA matched with the TA of the terminal device.

It should be noted that in the NTN network environment, the value of the TA of the terminal device may change with the movement of the satellite. If the network device wants to obtain an accurate value of the TA for scheduling, the network device requires the terminal device to report the value of the TA frequently, which may induce increase of the network overhead.

Based on the methods for wireless communication provided in the embodiments of the disclosure, when a compact terminal HD-UE that does not support characteristics of receiving and sending simultaneously is introduced into the NR-NTN system, then according to the methods for wireless communication provided in the embodiments of the disclosure, communication behaviors of the HD-UE in case of collision of different UL channels and DL channels may be regulated, such that the HD-UE may perform communication normally in the NR-NTN serving cell operated in the FDD mode, to achieve a better data transmission throughput, and improve communication reliability and efficiency.

Preferred implementations of the disclosure are described in detail as above with reference to the drawings; however, the disclosure is not limited to specific details in the above implementations. Multiple simple modifications may be made to the technical solutions of the disclosure in a range of the technical concept of the disclosure, and all of these simple modifications belong to the scope of protection of the disclosure. For example, various specific technical features described in the above specific implementations may be combined in any suitable manner without conflict, while various possible combinations will not be further explained in the disclosure to avoid unnecessary repetition. For another example, various different implementations of the disclosure may also be arbitrarily combined there-between, as long as such combinations do not violate the idea of the disclosure, and they should also be considered as contents disclosed in the disclosure. For another example, various embodiments described in the disclosure and/or technical features in various embodiments may be arbitrarily combined with the related art without conflict, and technical solutions obtained after combinations should also fall within the scope of protection of the disclosure.

It should also be understood that in various method embodiments of the disclosure, sizes of serial numbers of the above processes do not mean a sequence of execution, and the sequence of execution of each process should be determined by its function and internal logic, and should not constitute any limitation on implementation processes of the embodiments of the disclosure. Furthermore, in the embodiments of the disclosure, terms "DL", "UL" and "sidelink" represent a transmission direction of a signal or data, here "DL" represents that the transmission direction of the signal or data is a first direction sent from a station to UE of a cell, "UL" represents that the transmission direction of the signal or data is a second direction sent from UE of the cell to the station, and "sidelink" represents that the transmission direction of the signal or data is a third direction sent from UE1 to UE2. For example, a "DL signal" represents that the transmission direction of the signal is the first direction. Furthermore, in the embodiments of the disclosure, term "and/or" is only an association relationship describing associated objects, and represents that three relationships may exist. Specifically, A and/or B may represent three situations: i.e., existence of A alone, existence of both A and B, and existence of B alone. Furthermore, character "/" in the disclosure usually represents that anterior and posterior associated objects are in an "or" relationship.

FIG. 21 is a first schematic diagram of structural composition of a terminal device provided in an embodiment of the disclosure. As shown in FIG. 21, the terminal device 2100 includes a first communication unit 2101.

The first communication unit 2101 is configured to perform communication based on a target mode if collision of a first DL transmission with a first UL transmission in a time domain is determined according to a first time domain resource and a second time domain resource. The first time domain resource is used for the first DL transmission, the second time domain resource is used for the first UL transmission, and the second time domain resource is determined based on TA of the terminal device.

It may be understood that the terminal device further includes a storage unit, the storage unit is configured to store indication information indicating the first time domain resource and the second time domain resource.

In some embodiments, the collision of the first DL transmission with the first UL transmission in the time domain includes:
the first time domain resource is overlapped with the second time domain resource in the time domain, here a third time domain resource includes an overlapped part between the first time domain resource and the second time domain resource in the time domain.

In some embodiments, the first communication unit 2101 is further configured to:
send the first UL transmission on the third time domain resource; and/or
not receive the first DL transmission on the third time domain resource.

The first DL transmission is a DL transmission scheduled by first DCI, and the first UL transmission is a UL transmission scheduled by second DCI.

In some embodiments, the first communication unit 2101 is further configured to includes one of the following situations:
not sending the first UL transmission on the third time domain resource, and/or receiving the first DL transmission on the third time domain resource;
when a time interval between an end position of a fourth time domain resource and a start position of the second time domain resource is less than a first duration, sending the first UL transmission on the third time domain resource, and/or not receiving the first DL transmission on the third time domain resource;
when the time interval between the end position of the fourth time domain resource and the start position of the second time domain resource is equal to or greater than the first duration, not sending the first UL transmission on the third time domain resource, and/or receiving the first DL transmission on the third time domain resource;
when a time interval between the end position of the fourth time domain resource and a start position of the third time domain resource is less than the first duration, sending the first UL transmission on the third time domain resource, and/or not receiving the first DL transmission on the third time domain resource; or
when the time interval between the end position of the fourth time domain resource and the start position of the third time domain resource is equal to or greater than the first duration, not sending the first UL transmission on the third time domain resource, and/or receiving the first DL transmission on the third time domain resource.

The fourth time domain resource is used for transmission of the first DCI.

The first DL transmission is a DL transmission scheduled by the first DCI, and the first UL transmission is a UL transmission scheduled by second DCI.

Whether to send the first UL transmission or to receive the first DL transmission on the third time domain resource, is determined based on implementation of the terminal device. The first DL transmission is a DL transmission scheduled by first DCI, and the first UL transmission is a UL transmission scheduled by second DCI.

In some embodiments, the first communication unit 2101 is further configured for one of the following situations:
sending the first UL transmission on the third time domain resource, and/or not receiving the first DL transmission on the third time domain resource;
not sending the first UL transmission on the third time domain resource, and/or receiving the first DL transmission on the third time domain resource; or
determining whether to send the first UL transmission or to receive the first DL transmission on the third time domain resource, based on implementation of the terminal device.

The first DL transmission is a semi-statically configured DL transmission, and the first UL transmission is a semi-statically configured UL transmission.

In some embodiments, the first communication unit 2101 is further configured for one of the following situations:
not sending the first UL transmission on the third time domain resource, and/or receiving the first DL transmission on the third time domain resource;
when a time interval between an end position of a fourth time domain resource and a start position of the second time domain resource is less than a first duration, sending the first UL transmission on the third time domain resource, and/or not receiving the first DL transmission on the third time domain resource;
when the time interval between the end position of the fourth time domain resource and the start position of the second time domain resource is equal to or greater than the first duration, not sending the first UL transmission on the third time domain resource, and/or receiving the first DL transmission on the third time domain resource;
when a time interval between the end position of the fourth time domain resource and a start position of the third time domain resource is less than the first duration, sending the first UL transmission on the third time domain resource, and/or not receiving the first DL transmission on the third time domain resource; or
when the time interval between the end position of the fourth time domain resource and the start position of the third time domain resource is equal to or greater than the first duration, not sending the first UL transmission on the third time domain resource, and/or receiving the first DL transmission on the third time domain resource.

The fourth time domain resource is used for transmission of the first DCI.

The first DL transmission is a DL transmission scheduled by the first DCI, and the first UL transmission is a semi-statically configured UL transmission.

In some embodiments, the first communication unit 2101 is further configured to:
send the first UL transmission on the third time domain resource; and/or
not receive the first DL transmission on the third time domain resource.

The first DL transmission is a semi-statically configured DL transmission, and the first UL transmission is a UL transmission scheduled by second DCI.

In some embodiments, the first communication unit 2101 is further configured to:
not send the first UL transmission on the third time domain resource; and/or
receive the first DL transmission on the third time domain resource.

The first DL transmission is an SSB, and the first UL transmission is a UL transmission scheduled by second DCI or a semi-statically configured UL transmission.

In some embodiments, the first communication unit 2101 is further configured for one of the following situations:
sending the first UL transmission on the third time domain resource, and/or not receiving the first DL transmission on the third time domain resource;
not sending the first UL transmission on the third time domain resource, and/or receiving the first DL transmission on the third time domain resource; or
determining whether to send the first UL transmission or to receive the first DL transmission on the third time domain resource, based on implementation of the terminal device.

The first DL transmission is a DL transmission scheduled by first DCI or a semi-statically configured DL transmission, and the first UL transmission is a UL transmission on a RO.

In some embodiments, the fact that the third time domain resource includes the overlapped part between the first time domain resource and the second time domain resource in the time domain includes that:
the third time domain resource is the overlapped part between the first time domain resource and the second time domain resource in the time domain; or
the third time domain resource is a time unit including the overlapped part between the first time domain resource and the second time domain resource in the time domain.

In some embodiments, not receiving the first DL transmission on the third time domain resource includes:
not receiving the first DL transmission on the first time domain resource; or
not receiving a symbol of the first DL transmission located on the third time domain resource; or
not receiving a DL channel or signal of the first DL transmission including the third time domain resource.

In some embodiments, not sending the first UL transmission on the third time domain resource includes:
not sending the first UL transmission on the second time domain resource; or
not sending a symbol of the first UL transmission located on the third time domain resource; or
not sending a UL channel or signal of the first UL transmission including the third time domain resource.

In some embodiments, the collision of the first DL transmission with the first UL transmission in the time domain includes:
a time interval between an end position of the first time domain resource and a start position of the second time domain resource is less than a second duration; or
a time interval between an end position of the second time domain resource and a start position of the first time domain resource is less than a third duration.

In some embodiments, the first communication unit 2101 is further configured for one of the following situations:
sending the first UL transmission, and/or not receiving the first DL transmission;
not sending the first UL transmission, and/or receiving the first DL transmission;
when a time interval between an end position of a fourth time domain resource and the start position of the second time domain resource is less than a first duration, sending the first UL transmission, and/or not receiving the first DL transmission;
when the time interval between the end position of the fourth time domain resource and the start position of the second time domain resource is equal to or greater than the first duration, not sending the first UL transmission, and/or receiving the first DL transmission; or
determining whether to send the first UL transmission or to receive the first DL transmission, based on implementation of the terminal device.

The fourth time domain resource is used for transmission of the first DCI; the first DL transmission is a DL transmission scheduled by the first DCI, and the first UL transmission is a UL transmission scheduled by second DCI.

In some embodiments, the first communication unit 2101 is further configured for one of the following situations:
sending the first UL transmission, and/or not receiving the first DL transmission;
not sending the first UL transmission, and/or receiving the first DL transmission; or
determining whether to send the first UL transmission or to receive the first DL transmission, based on implementation of the terminal device.

The first DL transmission is a semi-statically configured DL transmission, and the first UL transmission is a semi-statically configured UL transmission.

In some embodiments, the first communication unit 2101 is further configured for one of the following situations:
not sending the first UL transmission, and/or receiving the first DL transmission;
when a time interval between an end position of a fourth time domain resource and the start position of the second time domain resource is less than a first duration, sending the first UL transmission, and/or not receiving the first DL transmission; or
when the time interval between the end position of the fourth time domain resource and the start position of the second time domain resource is equal to or greater than the first duration, not sending the first UL transmission, and/or receiving the first DL transmission.

The fourth time domain resource is used for transmission of the first DCI, the first DL transmission is a DL transmission scheduled by the first DCI, and the first UL transmission is a semi-statically configured UL transmission.

In some embodiments, the first communication unit 2101 is further configured to: send the first UL transmission, and/or not receive the first DL transmission. The first DL transmission is a semi-statically configured DL transmission, and the first UL transmission is a UL transmission scheduled by second DCI.

In some embodiments, the first communication unit 2101 is further configured to: not send the first UL transmission, and/or receive the first DL transmission. The first DL transmission is an SSB, and the first UL transmission is a UL transmission scheduled by second DCI or a semi-statically configured UL transmission.

In some embodiments, the first communication unit 2101 is further configured for one of the following situations:
sending the first UL transmission, and/or not receiving the first DL transmission;
not sending the first UL transmission, and/or receiving the first DL transmission; or
determining whether to send the first UL transmission or to receive the first DL transmission, based on implementation of the terminal device.

The first DL transmission is a DL transmission scheduled by first DCI or a semi-statically configured DL transmission, and the first UL transmission is a UL transmission on a RO.

In some embodiments, not receiving the first DL transmission includes:
not receiving the first DL transmission on the first time domain resource; or
if the second time domain resource is prior to the first time domain resource, not receiving a first DL channel or signal of the first DL transmission; or
if the first time domain resource is prior to the second time domain resource, not receiving a last DL channel or signal of the first DL transmission.

In some embodiments, not sending the first UL transmission includes:
not sending the first UL transmission on the second time domain resource; or
if the first time domain resource is prior to the second time domain resource, not sending a first UL channel or signal of the first UL transmission; or
if the second time domain resource is prior to the first time domain resource, not sending a last UL channel or signal of the first UL transmission.

In some embodiments, the first duration is determined based on a preparation time for UL transmission.

In some embodiments, the second duration is a length of a transition time for switching from receiving to sending.

And/or, the third duration is a length of a transition time for switching from sending to receiving.

In some embodiments, the DL transmission scheduled by the first DCI includes at least one of the following situations:
a PDSCH scheduled in a DCI format; or
a CSI-RS scheduled in the DCI format.

In some embodiments, the semi-statically configured DL transmission includes at least one of the following situations:
a PDCCH configured by a higher layer;
a PDSCH configured by the higher layer;
a CSI-RS configured by the higher layer; or
a DL PRS configured by the higher layer.

In some embodiments, the UL transmission scheduled by the second DCI includes at least one of the following situations:
a PUSCH scheduled in a DCI format;
a PUCCH scheduled in the DCI format;
a PRACH scheduled in the DCI format; or
an SRS scheduled in the DCI format.

In some embodiments, the semi-statically configured UL transmission includes at least one of the following situations:
an SRS configured by a higher layer;
a PUCCH configured by the higher layer; or
a PUSCH configured by the higher layer.

In some embodiments, the target mode is determined based on at least one of the following information:
a preset rule;
configuration information of a network device;
a priority of a channel or signal included in the first DL transmission;
a priority of a channel or signal included in the first UL transmission;
the channel or signal included in the first DL transmission; or
the channel or signal included in the first UL transmission.

In some embodiments, the TA of the terminal device is determined based on at least one of the following information:
synchronization assistance information sent by a network device;
a TA command sent by the network device; or
GNSS positioning information of the terminal device.

It may be understood that the terminal device may further include a first determination unit, the first determination unit is configured to determine the first time domain resource and the second time domain resource.

In the embodiments of the disclosure, the first communication unit in the terminal device is configured to send the TA of the terminal device to the network device.

The first communication unit in the terminal device may be implemented by a transceiver in the terminal device. The first determination unit in the terminal device may be implemented by a processor in the terminal device.

FIG. 22 is a first schematic diagram of structural composition of a network device provided in an embodiment of the disclosure. As shown in FIG. 22, the network device 2200 includes a second communication unit 2201.

The second communication unit 2201 is configured to:
send a first DL transmission and receive a first UL transmission; or
perform communication based on a target mode if the collision of the first DL transmission with the first UL transmission in a time domain is determined according to a first time domain resource and a second time domain resource.

The first time domain resource is a time domain resource for a terminal device to receive the first DL transmission, the second time domain resource is a time domain resource for the terminal device to send the first UL transmission, and the second time domain resource is determined based on TA of the terminal device.

It may be understood that the network device further includes a storage unit, the storage unit is configured to store indication information indicating the first time domain resource and the second time domain resource.

In some embodiments, the collision of the first DL transmission with the first UL transmission in the time domain includes:
the first time domain resource is overlapped with the second time domain resource in the time domain, here a third time domain resource includes an overlapped part between the first time domain resource and the second time domain resource in the time domain.

In some embodiments, the second communication unit 2201 is further configured to: receive the first UL transmission on a seventh time domain resource; and/or, not send the first DL transmission on the seventh time domain resource.

The seventh time domain resource corresponds to the third time domain resource, the first DL transmission is a DL transmission scheduled by first DCI, and the first UL transmission is a UL transmission scheduled by second DCI.

In some embodiments, the second communication unit 2201 is further configured for one of the following situations:
not receiving the first UL transmission on a seventh time domain resource, and/or sending the first DL transmission on the seventh time domain resource;
when a time interval between an end position of a fourth time domain resource and a start position of the second time domain resource is less than a first duration, receiving the first UL transmission on the seventh time domain resource, and/or not sending the first DL transmission on the seventh time domain resource;
when the time interval between the end position of the fourth time domain resource and the start position of the second time domain resource is equal to or greater than the first duration, not receiving the first UL transmission on the seventh time domain resource, and/or sending the first DL transmission on the seventh time domain resource;
when a time interval between the end position of the fourth time domain resource and a start position of the third time domain resource is less than the first duration, receiving the first UL transmission on the seventh time domain resource, and/or not sending the first DL transmission on the seventh time domain resource; or
when the time interval between the end position of the fourth time domain resource and the start position of the third time domain resource is equal to or greater than the first duration, not receiving the first UL transmission on the seventh time domain resource, and/or sending the first DL transmission on the seventh time domain resource.

The fourth time domain resource is a time domain resource for the terminal device to receive the first DCI, the seventh time domain resource corresponds to the third time domain resource, the first DL transmission is a DL transmission scheduled by the first DCI, and the first UL transmission is a UL transmission scheduled by second DCI.

In some embodiments, the second communication unit 2201 is further configured to receive the first UL transmission on a seventh time domain resource, and send the first DL transmission on the seventh time domain resource, here the seventh time domain resource corresponds to the third time domain resource, the first DL transmission is a DL transmission scheduled by first DCI, and the first UL transmission is a UL transmission scheduled by second DCI.

In some embodiments, the second communication unit 2201 is further configured for one of the following situations:
receiving the first UL transmission on a seventh time domain resource, and/or not sending the first DL transmission on the seventh time domain resource;
not receiving the first UL transmission on the seventh time domain resource, and/or sending the first DL transmission on the seventh time domain resource; or
receiving the first UL transmission on the seventh time domain resource, and sending the first DL transmission on the seventh time domain resource.

The seventh time domain resource corresponds to the third time domain resource, the first DL transmission is a semi-statically configured DL transmission, and the first UL transmission is a semi-statically configured UL transmission.

In some embodiments, the second communication unit 2201 is further configured for one of the following situations:
not receiving the first UL transmission on a seventh time domain resource, and/or sending the first DL transmission on the seventh time domain resource;
when a time interval between an end position of a fourth time domain resource and a start position of the second time domain resource is less than a first duration, receiving the first UL transmission on the seventh time domain resource, and/or not sending the first DL transmission on the seventh time domain resource;
when the time interval between the end position of the fourth time domain resource and the start position of the second time domain resource is equal to or greater than the first duration, not receiving the first UL transmission on the seventh time domain resource, and/or sending the first DL transmission on the seventh time domain resource;
when a time interval between the end position of the fourth time domain resource and a start position of the third time domain resource is less than the first duration, receiving the first UL transmission on the seventh time domain resource, and/or not sending the first DL transmission on the seventh time domain resource; or
when the time interval between the end position of the fourth time domain resource and the start position of the third time domain resource is equal to or greater than the first duration, not receiving the first UL transmission on the seventh time domain resource, and/or sending the first DL transmission on the seventh time domain resource.

The seventh time domain resource corresponds to the third time domain resource, the fourth time domain resource is a time domain resource for the terminal device to receive the first DCI, the first DL transmission is a DL transmission scheduled by first DCI, and the first UL transmission is a semi-statically configured UL transmission.

In some embodiments, the second communication unit 2201 is further configured to:
receive the first UL transmission on a seventh time domain resource; and/or
not send the first DL transmission on the seventh time domain resource.

The seventh time domain resource corresponds to the third time domain resource, the first DL transmission is a semi-statically configured DL transmission, and the first UL transmission is a UL transmission scheduled by second DCI.

In some embodiments, the second communication unit 2201 is further configured to:
not receive the first UL transmission on a seventh time domain resource; and/or
send the first DL transmission on the seventh time domain resource.

The seventh time domain resource corresponds to the third time domain resource, the first DL transmission is an SSB, and the first UL transmission is a UL transmission scheduled by second DCI or a semi-statically configured UL transmission.

In some embodiments, the second communication unit 2201 is further configured for one of the following situations:
receiving the first UL transmission on a seventh time domain resource, and/or not sending the first DL transmission on the seventh time domain resource;
not receiving the first UL transmission on the seventh time domain resource, and/or sending the first DL transmission on the seventh time domain resource; or
receiving the first UL transmission on the seventh time domain resource, and sending the first DL transmission on the seventh time domain resource.

The seventh time domain resource corresponds to the third time domain resource, the first DL transmission is a DL transmission scheduled by first DCI or a semi-statically configured DL transmission, and the first UL transmission is a UL transmission on a RO.

In some embodiments, the fact that the third time domain resource includes the overlapped part between the first time domain resource and the second time domain resource in the time domain includes that:
the third time domain resource is the overlapped part between the first time domain resource and the second time domain resource in the time domain; or
the third time domain resource is a time unit including the overlapped part between the first time domain resource and the second time domain resource in the time domain.

In some embodiments, not sending the first DL transmission on the seventh time domain resource includes:
not sending the first DL transmission on the first time domain resource; or
not sending a symbol of the first DL transmission located on the seventh time domain resource; or
not sending a DL channel or signal of the first DL transmission including the seventh time domain resource.

In some embodiments, not receiving the first UL transmission on the seventh time domain resource includes:
not receiving the first UL transmission on the second time domain resource; or
not receiving a symbol of the first UL transmission located on the seventh time domain resource; or
not receiving a UL channel or signal of the first UL transmission including the seventh time domain resource.

In some embodiments, the collision of the first DL transmission with the first UL transmission in the time domain includes:
a time interval between an end position of the first time domain resource and a start position of the second time domain resource is less than a second duration; or
a time interval between an end position of the second time domain resource and a start position of the first time domain resource is less than a third duration.

In some embodiments, the second communication unit 2201 is further configured for one of the following situations:
receiving the first UL transmission, and/or not sending the first DL transmission;
not receiving the first UL transmission, and/or sending the first DL transmission;
when a time interval between an end position of a fourth time domain resource and the start position of the second time domain resource is less than a first duration, receiving the first UL transmission, and/or not sending the first DL transmission;
when the time interval between the end position of the fourth time domain resource and the start position of the second time domain resource is equal to or greater than the first duration, not receiving the first UL transmission, and/or sending the first DL transmission; or
receiving the first UL transmission, and sending the first DL transmission.

The fourth time domain resource is a time domain resource for the terminal device to receive the first DCI, the first DL transmission is a DL transmission scheduled by the first DCI, and the first UL transmission is a UL transmission scheduled by second DCI.

In some embodiments, the second communication unit 2201 is further configured for one of the following situations:
receiving the first UL transmission, and/or not sending the first DL transmission;
not receiving the first UL transmission, and/or sending the first DL transmission; or
receiving the first UL transmission, and sending the first DL transmission.

The first DL transmission is a semi-statically configured DL transmission, and the first UL transmission is a semi-statically configured UL transmission.

In some embodiments, the second communication unit 2201 is further configured for one of the following situations:
not receiving the first UL transmission, and/or sending the first DL transmission;
when a time interval between an end position of a fourth time domain resource and the start position of the second time domain resource is less than a first duration, receiving the first UL transmission, and/or not sending the first DL transmission; or
when the time interval between the end position of the fourth time domain resource and the start position of the second time domain resource is equal to or greater than the first duration, not receiving the first UL transmission, and/or sending the first DL transmission.

The fourth time domain resource is a time domain resource for the terminal device to receive the first DCI, the first DL transmission is a DL transmission scheduled by the first DCI, and the first UL transmission is a semi-statically configured UL transmission.

In some embodiments, the second communication unit 2201 is further configured to:
receive the first UL transmission, and/or not send the first DL transmission.

The first DL transmission is a semi-statically configured DL transmission, and the first UL transmission is a UL transmission scheduled by second DCI.

In some embodiments, the second communication unit 2201 is further configured to:
not receive the first UL transmission, and/or send the first DL transmission.

The first DL transmission is an SSB, and the first UL transmission is a UL transmission scheduled by second DCI or a semi-statically configured UL transmission.

In some embodiments, the second communication unit 2201 is further configured for one of the following situations:
receiving the first UL transmission, and/or not sending the first DL transmission;
not receiving the first UL transmission, and/or sending the first DL transmission; or
receiving the first UL transmission, and sending the first DL transmission.

The first DL transmission is a DL transmission scheduled by first DCI or a semi-statically configured DL transmission, and the first UL transmission is a UL transmission on a RO.

In some embodiments, not sending the first DL transmission includes:
not sending the first DL transmission on the first time domain resource; or
if the second time domain resource is prior to the first time domain resource, not sending a first DL channel or signal of the first DL transmission; or
if the first time domain resource is prior to the second time domain resource, not sending a last DL channel or signal of the first DL transmission.

In some embodiments, not receiving the first UL transmission includes:
not receiving the first UL transmission on the second time domain resource; or
if the first time domain resource is prior to the second time domain resource, not receiving a first UL channel or signal of the first UL transmission; or
if the second time domain resource is prior to the first time domain resource, not receiving a last UL channel or signal of the first UL transmission.

In some embodiments, the first duration is determined based on a preparation time for UL transmission.

In some embodiments, the second duration is a length of a transition time for switching from receiving to sending by the terminal device.

And/or, the third duration is a length of a transition time for switching from sending to receiving by the terminal device.

In some embodiments, the DL transmission scheduled by the first DCI includes at least one of the following situations:
a PDSCH scheduled in a DCI format; or
a CSI-RS scheduled in the DCI format.

In some embodiments, the semi-statically configured DL transmission includes at least one of the following situations:
a PDCCH configured by a higher layer;
a PDSCH configured by the higher layer;
a CSI-RS configured by the higher layer; or
a DL PRS configured by the higher layer.

In some embodiments, the UL transmission scheduled by the second DCI includes at least one of the following situations:
a PUSCH scheduled in a DCI format;
a PUCCH scheduled in the DCI format;
a PRACH scheduled in the DCI format; or
an SRS scheduled in the DCI format.

In some embodiments, the semi-statically configured UL transmission includes at least one of the following situations:
an SRS configured by a higher layer;
a PUCCH configured by the higher layer; or
a PUSCH configured by the higher layer.

In some embodiments, the target mode is determined based on at least one of the following information:
a preset rule;
configuration information of the network device;
a priority of a channel or signal included in the first DL transmission;
a priority of a channel or signal included in the first UL transmission;
the channel or signal included in the first DL transmission; or
the channel or signal included in the first UL transmission.

In some embodiments, the TA of the terminal device is determined based on at least one of the following information:
synchronization assistance information sent by the network device;
a TA command sent by the network device; or
GNSS positioning information of the terminal device.

It may be understood that the network device may further include a second determination unit, the second determination unit is configured to determine the first time domain resource and the second time domain resource.

In the embodiments of the disclosure, the second communication unit in the network device is configured to receive the TA of the terminal device sent by the terminal device.

The second communication unit in the network device may be implemented by a transceiver in the network device. The second determination unit in the network device may be implemented by a processor in the network device.

It should be understood by those skilled in the art that relevant descriptions of the above terminal device or network device in the embodiments of the disclosure may be understood by referring to relevant descriptions of the methods for wireless communication in the embodiments of the disclosure.

FIG. 23 is a schematic structural diagram of a communication device 2300 provided in an embodiment of the disclosure. The communication device may be a terminal device or a network device. The communication device 2300 shown in FIG. 23 includes a processor 2310, and the processor 2310 may invoke and run a computer program from a memory, to implement the methods in the embodiments of the disclosure.

Optionally, as shown in FIG. 23, the communication device 2300 may further include a memory 2320. The processor 2310 may invoke and run the computer program from the memory 2320, to implement the methods in the embodiments of the disclosure.

The memory 2320 may be a separate device independent of the processor 2310, or may be integrated into the processor 2310.

Optionally, as shown in FIG. 23, the communication device 2300 may further include a transceiver 2330, and the processor 2310 may control the transceiver 2330 to communicate with other devices. Specifically, the processor 2310 may control the transceiver 2330 to send information or data to other devices, or to receive information or data sent by other devices.

The transceiver 2330 may include a transmitter and a receiver. The transceiver 2330 may further include antenna, and there may be one or more antennas.

Optionally, the communication device 2300 may specifically be the network device in the embodiments of the disclosure, and the communication device 2300 may implement corresponding flows implemented by the network device in each method in the embodiments of the disclosure, which will not be elaborated here for the sake of brevity.

Optionally, the communication device 2300 may specifically be the mobile terminal/terminal device in the embodiments of the disclosure, and the communication device 2300 may implement corresponding flows implemented by the mobile terminal/terminal device in each method in the embodiments of the disclosure, which will not be elaborated here for the sake of brevity.

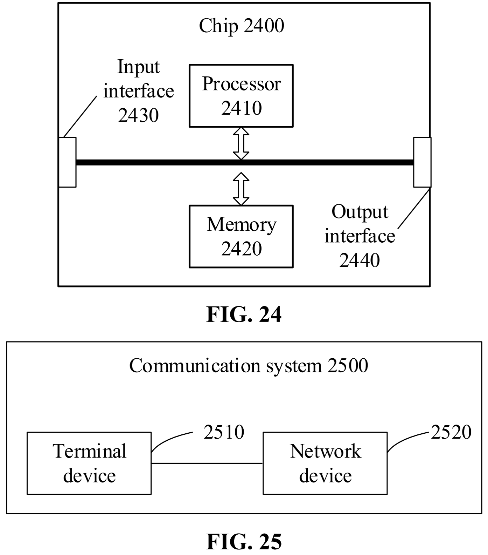

FIG. 24 is a schematic structural diagram of a chip according to an embodiment of the disclosure. The chip 2400 shown in FIG. 24 includes a processor 2410, and the processor 2410 may invoke and run a computer program from a memory, to implement the methods in the embodiments of the disclosure.

Optionally, as shown in FIG. 24, the chip 2400 may further include a memory 2420. The processor 2410 may invoke and run the computer program from the memory 2420, to implement the methods in the embodiments of the disclosure.

The memory 2420 may be a separate device independent of the processor 2410, or may be integrated into the processor 2410.

Optionally, the chip 2400 may further include an input interface 2430. The processor 2410 may control the input interface 2430 to communicate with other devices or chips, and specifically, the processor 2410 may control the input interface 2430 to acquire information or data sent by other devices or chips.

Optionally, the chip 2400 may further include an output interface 2440. The processor 2410 may control the output interface 2440 to communicate with other devices or chips, and specifically, the processor 2410 may control the output interface 2440 to output information or data to other devices or chips.

Optionally, the chip may be applied to the network device in the embodiments of the disclosure, and the chip may implement corresponding flows implemented by the network device in each method in the embodiments of the disclosure, which will not be elaborated here for the sake of brevity.

Optionally, the chip may be applied to the mobile terminal/terminal device in the embodiments of the disclosure, and the chip may implement corresponding flows implemented by the mobile terminal/terminal device in each method in the embodiments of the disclosure, which will not be elaborated here for the sake of brevity.

It should be understood that the chip mentioned in the embodiment of the disclosure may also be referred to as a system-level chip, a system chip, a chip system or a system on chip, etc.

FIG. 25 is a schematic block diagram of a communication system 2500 provided in an embodiment of the disclosure. As shown in FIG. 25, the communication system 2500 includes a terminal device 2510 and a network device 2520.

The terminal device 2510 may be configured to implement corresponding functions implemented by the terminal device in the above methods, and the network device 2520 may be configured to implement corresponding functions implemented by the network device in the above methods, which will not be elaborated here for the sake of brevity.

It should be understood that the processor in the embodiment of the disclosure may be an integrated circuit chip with a signal processing capability. During implementation, each operation in the above method embodiments may be completed by an integrated logical circuit in a form of hardware in the processor or instructions in a form of software. The above processor may be a general purpose processor, a Digital Signal Processor (DSP), an Application Specific Integrated Circuit (ASIC), a Field Programmable Gate Array (FPGA) or other programmable logical devices, a discrete gate or transistor logical device, and a discrete hardware component. Each method, operation and logical block diagram disclosed in the embodiments of the disclosure may be implemented or performed. The general purpose processor may be a microprocessor, or the processor may be any conventional processor, etc. Operations in the methods disclosed in combination with the embodiments of the disclosure may be directly embodied as being performed and completed by a hardware decoding processor, or performed and completed by a combination of hardware in the decoding processor and a software module. The software module may be located in a mature storage medium in this field such as a Random Access Memory (RAM), a flash memory, a Read-Only Memory (ROM), a Programmable ROM (PROM) or Electrically Erasable PROM (EEPROM), a register, etc. The storage medium is located in a memory, and the processor reads information in the memory, and completes the operations in the above methods in combination with the hardware thereof.

It may be understood that the memory in the embodiment of the disclosure may be a volatile memory or a non-volatile memory, or may include both the volatile and non-volatile memories. The non-volatile memory may be a ROM, a PROM, an Erasable PROM (EPROM), an EEPROM or a flash memory. The volatile memory may be a RAM, which is used as an external high-speed cache. Through an exemplary rather than limiting description, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory in the system and method described in the disclosure is intended to include, but is not limited to these memories and any other suitable types of memories.

It should be understood that the above memory is an exemplary rather than limiting description. For example, the memory in the embodiment of the disclosure may also be an SRAM, a DRAM, an SDRAM, a DDR SDRAM, an ESDRAM, an SLDRAM, a DR RAM, etc. That is, the memory in the embodiment of the disclosure is intended to include, but is not limited to these memories and any other suitable types of memories.

An embodiment of the disclosure further provides a computer-readable storage medium, the computer-readable storage medium is configured to store a computer program.

Optionally, the computer-readable storage medium may be applied to the network device in the embodiments of the disclosure, and the computer program enables a computer to perform corresponding flows implemented by the network device in each method in the embodiments of the disclosure, which will not be elaborated here for the sake of brevity.

Optionally, the computer-readable storage medium may be applied to the mobile terminal/terminal device in the embodiments of the disclosure, and the computer program enables a computer to perform corresponding flows implemented by the mobile terminal/terminal device in each method in the embodiments of the disclosure, which will not be elaborated here for the sake of brevity.

An embodiment of the disclosure further provides a computer program product, the computer program product includes computer program instructions.

Optionally, the computer program product may be applied to the network device in the embodiments of the disclosure, and the computer program instructions enable a computer to perform corresponding flows implemented by the network device in each method in the embodiments of the disclosure, which will not be elaborated here for the sake of brevity.

Optionally, the computer program product may be applied to the mobile terminal/terminal device in the embodiments of the disclosure, and the computer program instructions enable a computer to perform corresponding flows implemented by the mobile terminal/terminal device in each method in the embodiments of the disclosure, which will not be elaborated here for the sake of brevity.

An embodiment of the disclosure further provides a computer program.

Optionally, the computer program may be applied to the network device in the embodiments of the disclosure, and when the computer program is executed in a computer, the computer program enables the computer to perform corresponding flows implemented by the network device in each method in the embodiments of the disclosure, which will not be elaborated here for the sake of brevity.

Optionally, the computer program may be applied to the mobile terminal/terminal device in the embodiments of the disclosure, and when the computer program is executed in a computer, the computer program enables the computer to perform corresponding flows implemented by the mobile terminal/terminal device in each method in the embodiments of the disclosure, which will not be elaborated here for the sake of brevity.

It may be appreciated by those of ordinary skill in the art that the units and algorithm steps of each example described in combination with the embodiments disclosed in the disclosure may be implemented by electronic hardware or a combination of computer software and the electronic hardware. Whether these functions are performed in a hardware or software manner, depends on specific applications and design constraints of the technical solutions. Professionals may implement the described functions by using different methods for each specific application; however, such implementation should not be considered as going beyond the scope of the disclosure.

It may be clearly understood by those skilled in the art that specific operation processes of the above system, apparatus and unit may refer to corresponding processes in the foregoing method embodiments and will not be elaborated here, for the convenience and brevity of descriptions.

In several embodiments provided in the disclosure, it should be understood that the disclosed system, apparatus and method may be implemented in other manners. For example, the above apparatus embodiments are schematic only. For example, division of the units is only a logic function division, and there may be other division manners during an actual implementation. For example, multiple units or components may be combined or integrated into another system, or some features may be ignored or may not be performed. Furthermore, coupling or direct coupling or communicative connection between displayed or discussed components may be indirect coupling or communicative connection of the apparatus or the units implemented through some interfaces, and may be in electrical, mechanical or other forms.

The units described as separate components may be or may not be physically separated, and components displayed as units may be or may not be physical units, that is, they may be located at the same place, or may be distributed to multiple network units. Part or all of the units may be selected to achieve the purpose of the solutions in the embodiments according to actual requirements.

Furthermore, each functional unit in each embodiment of the disclosure may be integrated into a processing unit, or each unit may physically exist separately, or two or more units may be integrated into a unit.

If the function is implemented in a form of software functional unit and is sold or used as an independent product, the function may be stored in a computer-readable storage medium. Based on such understanding, the technical solutions of the disclosure substantially, or parts making contributions to the related art, or part of the technical solutions may be embodied in a form of software product, and the computer software product is stored in a storage medium, and includes several instructions configured to enable a computer device (which may be a personal computer, a server, or a network device, etc.) to perform all or part of operations of the method described in each embodiment of the disclosure. The foregoing storage medium includes various media capable of storing program codes, such as a U disk, a mobile hard disk, a ROM, a RAM, a magnetic disk, or an optical disk, etc.

The above descriptions are only specific implementations of the disclosure. However, the scope of protection of the disclosure is not limited thereto. Variations or replacements, which are easily conceived by any technician familiar with this technical field within the technical scope disclosed in the disclosure, should fall within the scope of protection of the disclosure. Therefore, the scope of protection of the disclosure shall be defined by the scope of protection of the claims.

## Claims

1. A method for wireless communication, comprising:
performing, by a terminal device, communication based on a target mode if collision of a first downlink (DL) transmission with a first uplink (UL) transmission in a time domain is determined by the terminal device according to a first time domain resource and a second time domain resource, wherein the first time domain resource is used for the first DL transmission, the second time domain resource is used for the first UL transmission, and the second time domain resource is determined based on Timing Advance (TA) of the terminal device.

2. The method of claim 1, wherein the collision of the first DL transmission with the first UL transmission in the time domain comprises:
the first time domain resource is overlapped with the second time domain resource in the time domain, wherein a third time domain resource comprises an overlapped part between the first time domain resource and the second time domain resource in the time domain.

3. The method of claim 2, wherein the first DL transmission is a DL transmission scheduled by first Downlink Control Information (DCI), the first UL transmission is a UL transmission scheduled by second DCI, and performing, by the terminal device, communication based on the target mode comprises:
sending, by the terminal device, the first UL transmission on the third time domain resource; and/or
not receiving, by the terminal device, the first DL transmission on the third time domain resource.

4. The method of claim 2, wherein the first DL transmission is a DL transmission scheduled by first Downlink Control Information (DCI), the first UL transmission is a UL transmission scheduled by second DCI, and performing, by the terminal device, communication based on the target mode comprises one of the following situations:
not sending, by the terminal device, the first UL transmission on the third time domain resource, and/or receiving, by the terminal device, the first DL transmission on the third time domain resource;
when a time interval between an end position of a fourth time domain resource and a start position of the second time domain resource is less than a first duration, sending, by the terminal device, the first UL transmission on the third time domain resource, and/or not receiving, by the terminal device, the first DL transmission on the third time domain resource;
when the time interval between the end position of the fourth time domain resource and the start position of the second time domain resource is equal to or greater than the first duration, not sending, by the terminal device, the first UL transmission on the third time domain resource, and/or receiving, by the terminal device, the first DL transmission on the third time domain resource;
when a time interval between the end position of the fourth time domain resource and a start position of the third time domain resource is less than the first duration, sending, by the terminal device, the first UL transmission on the third time domain resource, and/or not receiving, by the terminal device, the first DL transmission on the third time domain resource; or
when the time interval between the end position of the fourth time domain resource and the start position of the third time domain resource is equal to or greater than the first duration, not sending, by the terminal device, the first UL transmission on the third time domain resource, and/or receiving, by the terminal device, the first DL transmission on the third time domain resource,
wherein the fourth time domain resource is used for transmission of the first DCI.

5. The method of claim 2, wherein the first DL transmission is a DL transmission scheduled by first Downlink Control Information (DCI), the first UL transmission is a UL transmission scheduled by second DCI, and performing, by the terminal device, communication based on the target mode comprises:
determining, by the terminal device based on implementation of the terminal device, whether to send the first UL transmission or to receive the first DL transmission on the third time domain resource.

6. The method of claim 2, wherein the first DL transmission is a semi-statically configured DL transmission, the first UL transmission is a semi-statically configured UL transmission, and performing, by the terminal device, communication based on the target mode comprises one of the following situations:
sending, by the terminal device, the first UL transmission on the third time domain resource, and/or not receiving, by the terminal device, the first DL transmission on the third time domain resource;
not sending, by the terminal device, the first UL transmission on the third time domain resource, and/or receiving, by the terminal device, the first DL transmission on the third time domain resource; or
determining, by the terminal device based on implementation of the terminal device, whether to send the first UL transmission or to receive the first DL transmission on the third time domain resource.

7. The method of claim 2, wherein the first DL transmission is a DL transmission scheduled by first Downlink Control Information (DCI), the first UL transmission is a semi-statically configured UL transmission, and performing, by the terminal device, communication based on the target mode comprises one of the following situations:
not sending, by the terminal device, the first UL transmission on the third time domain resource, and/or receiving, by the terminal device, the first DL transmission on the third time domain resource;
when a time interval between an end position of a fourth time domain resource and a start position of the second time domain resource is less than a first duration, sending, by the terminal device, the first UL transmission on the third time domain resource, and/or not receiving, by the terminal device, the first DL transmission on the third time domain resource;
when the time interval between the end position of the fourth time domain resource and the start position of the second time domain resource is equal to or greater than the first duration, not sending, by the terminal device, the first UL transmission on the third time domain resource, and/or receiving, by the terminal device, the first DL transmission on the third time domain resource;
when a time interval between the end position of the fourth time domain resource and a start position of the third time domain resource is less than the first duration, sending, by the terminal device, the first UL transmission on the third time domain resource, and/or not receiving, by the terminal device, the first DL transmission on the third time domain resource; or
when the time interval between the end position of the fourth time domain resource and the start position of the third time domain resource is equal to or greater than the first duration, not sending, by the terminal device, the first UL transmission on the third time domain resource, and/or receiving, by the terminal device, the first DL transmission on the third time domain resource,
wherein the fourth time domain resource is used for transmission of the first DCI.

8. The method of claim 2, wherein the first DL transmission is a semi-statically configured DL transmission, the first UL transmission is a UL transmission scheduled by second Downlink Control Information (DCI), and performing, by the terminal device, communication based on the target mode comprises:
sending, by the terminal device, the first UL transmission on the third time domain resource; and/or
not receiving, by the terminal device, the first DL transmission on the third time domain resource.

9. The method of claim 2, wherein the first DL transmission is a Synchronization signal/Physical broadcast channel block (SS/PBCH block (SSB)), the first UL transmission is a UL transmission scheduled by second Downlink Control Information (DCI) or a semi-statically configured UL transmission, and performing, by the terminal device, communication based on the target mode comprises:
not sending, by the terminal device, the first UL transmission on the third time domain resource; and/or
receiving, by the terminal device, the first DL transmission on the third time domain resource.

10. The method of claim 2, wherein the first DL transmission is a DL transmission scheduled by first Downlink Control Information (DCI) or a semi-statically configured DL transmission, the first UL transmission is a UL transmission on a Random Access Channel transmission Occasion (RACH Occasion (RO)), and performing, by the terminal device, communication based on the target mode comprises one of the following situations:
sending, by the terminal device, the first UL transmission on the third time domain resource, and/or not receiving, by the terminal device, the first DL transmission on the third time domain resource;
not sending, by the terminal device, the first UL transmission on the third time domain resource, and/or receiving, by the terminal device, the first DL transmission on the third time domain resource; or
determining, by the terminal device, whether to send the first UL transmission or to receive the first DL transmission on the third time domain resource, based on implementation of the terminal device.

11. The method of any one of claims 2 to 10, wherein the third time domain resource comprising the overlapped part between the first time domain resource and the second time domain resource in the time domain comprises:
the third time domain resource is the overlapped part between the first time domain resource and the second time domain resource in the time domain; or
the third time domain resource is a time unit comprising the overlapped part between the first time domain resource and the second time domain resource in the time domain.

12. The method of any one of claims 2 to 11, wherein not receiving, by the terminal device, the first DL transmission on the third time domain resource comprises:
not receiving, by the terminal device, the first DL transmission on the first time domain resource; or
not receiving, by the terminal device, a symbol of the first DL transmission located on the third time domain resource; or
not receiving, by the terminal device, a DL channel or signal of the first DL transmission comprising the third time domain resource.

13. The method of any one of claims 2 to 11, wherein not sending, by the terminal device, the first UL transmission on the third time domain resource comprises:
not sending, by the terminal device, the first UL transmission on the second time domain resource; or
not sending, by the terminal device, a symbol of the first UL transmission located on the third time domain resource; or
not sending, by the terminal device, a UL channel or signal of the first UL transmission comprising the third time domain resource.

14. The method of claim 1, wherein the collision of the first DL transmission with the first UL transmission in the time domain comprises:
a time interval between an end position of the first time domain resource and a start position of the second time domain resource is less than a second duration; or
a time interval between an end position of the second time domain resource and a start position of the first time domain resource is less than a third duration.

15. The method of claim 14, wherein the first DL transmission is a DL transmission scheduled by first Downlink Control Information (DCI), the first UL transmission is a UL transmission scheduled by second DCI, and performing, by the terminal device, communication based on the target mode comprises one of the following situations:
sending, by the terminal device, the first UL transmission, and/or not receiving, by the terminal device, the first DL transmission;
not sending, by the terminal device, the first UL transmission, and/or receiving, by the terminal device, the first DL transmission;
when a time interval between an end position of a fourth time domain resource and the start position of the second time domain resource is less than a first duration, sending, by the terminal device, the first UL transmission, and/or not receiving, by the terminal device, the first DL transmission;
when the time interval between the end position of the fourth time domain resource and the start position of the second time domain resource is equal to or greater than the first duration, not sending, by the terminal device, the first UL transmission, and/or receiving, by the terminal device, the first DL transmission; or
determining, by the terminal device, whether to send the first UL transmission or to receive the first DL transmission, based on implementation of the terminal device,
wherein the fourth time domain resource is used for transmission of the first DCI.

16. The method of claim 14, wherein the first DL transmission is a semi-statically configured DL transmission, the first UL transmission is a semi-statically configured UL transmission, and performing, by the terminal device, communication based on the target mode comprises one of the following situations:
sending, by the terminal device, the first UL transmission, and/or not receiving, by the terminal device, the first DL transmission;
not sending, by the terminal device, the first UL transmission, and/or receiving, by the terminal device, the first DL transmission; or
determining, by the terminal device, whether to send the first UL transmission or to receive the first DL transmission, based on implementation of the terminal device.

17. The method of claim 14, wherein the first DL transmission is a DL transmission scheduled by first Downlink Control Information (DCI), the first UL transmission is a semi-statically configured UL transmission, and performing, by the terminal device, communication based on the target mode comprises one of the following situations:
not sending, by the terminal device, the first UL transmission, and/or receiving, by the terminal device, the first DL transmission;
when a time interval between an end position of a fourth time domain resource and the start position of the second time domain resource is less than a first duration, sending, by the terminal device, the first UL transmission, and/or not receiving, by the terminal device, the first DL transmission; or
when the time interval between the end position of the fourth time domain resource and the start position of the second time domain resource is equal to or greater than the first duration, not sending, by the terminal device, the first UL transmission, and/or receiving, by the terminal device, the first DL transmission,
wherein the fourth time domain resource is used for transmission of the first DCI.

18. The method of claim 14, wherein the first DL transmission is a semi-statically configured DL transmission, the first UL transmission is a UL transmission scheduled by second Downlink Control Information (DCI), and performing, by the terminal device, communication based on the target mode comprises:
sending, by the terminal device, the first UL transmission, and/or not receiving, by the terminal device, the first DL transmission.

19. The method of claim 14, wherein the first DL transmission is a Synchronization signal/Physical broadcast channel block (SS/PBCH block (SSB)), the first UL transmission is a UL transmission scheduled by second Downlink Control Information (DCI) or a semi-statically configured UL transmission, and performing, by the terminal device, communication based on the target mode comprises:
not sending, by the terminal device, the first UL transmission, and/or receiving, by the terminal device, the first DL transmission.

20. The method of claim 14, wherein the first DL transmission is a DL transmission scheduled by first Downlink Control Information (DCI) or a semi-statically configured DL transmission, the first UL transmission is a UL transmission on a Random Access Channel transmission Occasion (RACH Occasion (RO)), and performing, by the terminal device, communication based on the target mode comprises one of the following situations:
sending, by the terminal device, the first UL transmission, and/or not receiving, by the terminal device, the first DL transmission;
not sending, by the terminal device, the first UL transmission, and/or receiving, by the terminal device, the first DL transmission; or
determining, by the terminal device, whether to send the first UL transmission or to receive the first DL transmission, based on implementation of the terminal device.

21. The method of any one of claims 14 to 20, wherein not receiving, by the terminal device, the first DL transmission comprises:
not receiving, by the terminal device, the first DL transmission on the first time domain resource; or
if the second time domain resource is prior to the first time domain resource, not receiving, by the terminal device, a first DL channel or signal of the first DL transmission; or
if the first time domain resource is prior to the second time domain resource, not receiving, by the terminal device, a last DL channel or signal of the first DL transmission.

22. The method of any one of claims 14 to 20, wherein not sending, by the terminal device, the first UL transmission comprises:
not sending, by the terminal device, the first UL transmission on the second time domain resource; or
if the first time domain resource is prior to the second time domain resource, not sending, by the terminal device, a first UL channel or signal of the first UL transmission; or
if the second time domain resource is prior to the first time domain resource, not sending, by the terminal device, a last UL channel or signal of the first UL transmission.

23. The method of any one of claims 4, 7, 15 and 17, wherein the first duration is determined based on a preparation time for UL transmission.

24. The method of any one of claims 14 to 23, wherein the second duration is a length of a transition time for switching from receiving to sending; and/or
the third duration is a length of a transition time for switching from sending to receiving.

25. The method of any one of claims 3, 4, 5, 7, 10, 15, 17 and 20, wherein the DL transmission scheduled by the first DCI comprises at least one of the following situations:
a Physical Downlink Shared Channel (PDSCH) scheduled in a DCI format; or
a Channel Status Indicator Reference Signal (CSI-RS) scheduled in the DCI format.

26. The method of any one of claims 6, 8, 10, 16, 18 and 20, wherein the semi-statically configured DL transmission comprises at least one of the following situations:
a Physical Downlink Control Channel (PDCCH) configured by a higher layer;
a Physical Downlink Shared Channel (PDSCH) configured by the higher layer;
a Channel Status Indicator Reference Signal (CSI-RS) configured by the higher layer; or
a DL Positioning Reference Signal (PRS) configured by the higher layer.

27. The method of any one of claims 3, 4, 5, 8, 9, 15, 18 and 19, wherein the UL transmission scheduled by the second DCI comprises at least one of the following situations:
a Physical Uplink Shared Channel (PUSCH) scheduled in a DCI format;
a Physical Uplink Control Channel (PUCCH) scheduled in the DCI format;
a Physical Random Access Channel (PRACH) scheduled in the DCI format; or
a Sounding Reference Signal (SRS) scheduled in the DCI format.

28. The method of any one of claims 6, 7, 9, 16, 17 and 19, wherein the semi-statically configured UL transmission comprises at least one of the following situations:
a Sounding Reference Signal (SRS) configured by a higher layer;
a Physical Uplink Control Channel (PUCCH) configured by the higher layer; or
a Physical Uplink Shared Channel (PUSCH) configured by the higher layer.

29. The method of any one of claims 1 to 28, wherein the target mode is determined based on at least one of the following information:
a preset rule;
configuration information of a network device;
a priority of a channel or signal comprised in the first DL transmission;
a priority of a channel or signal comprised in the first UL transmission;
the channel or signal comprised in the first DL transmission; or
the channel or signal comprised in the first UL transmission.

30. The method of any one of claims 1 to 29, wherein the TA of the terminal device is determined based on at least one of the following information:
synchronization assistance information sent by a network device;
a TA command sent by the network device; or
Global Navigation Satellite System (GNSS) positioning information of the terminal device.

31. A method for wireless communication, comprising:
sending, by a network device, a first downlink (DL) transmission and receiving, by the network device, a first uplink (UL) transmission; or
performing, by the network device, communication based on a target mode if the collision of the first DL transmission with the first UL transmission in a time domain is determined by the network device according to a first time domain resource and a second time domain resource,
wherein the first time domain resource is a time domain resource for a terminal device to receive the first DL transmission, the second time domain resource is a time domain resource for the terminal device to send the first UL transmission, and the second time domain resource is determined based on Timing Advance (TA) of the terminal device.

32. The method of claim 31, wherein the collision of the first DL transmission with the first UL transmission in the time domain comprises:
the first time domain resource is overlapped with the second time domain resource in the time domain, wherein a third time domain resource comprises an overlapped part between the first time domain resource and the second time domain resource in the time domain.

33. The method of claim 32, wherein the first DL transmission is a DL transmission scheduled by first Downlink Control Information (DCI), the first UL transmission is a UL transmission scheduled by second DCI, and performing, by the network device, communication based on the target mode comprises:
receiving, by the network device, the first UL transmission on a seventh time domain resource; and/or
not sending, by the network device, the first DL transmission on the seventh time domain resource,
wherein the seventh time domain resource corresponds to the third time domain resource.

34. The method of claim 32, wherein the first DL transmission is a DL transmission scheduled by first Downlink Control Information (DCI), the first UL transmission is a UL transmission scheduled by second DCI, and performing, by the network device, communication based on the target mode comprises one of the following situations:
not receiving, by the network device, the first UL transmission on a seventh time domain resource, and/or sending, by the network device, the first DL transmission on the seventh time domain resource;
when a time interval between an end position of a fourth time domain resource and a start position of the second time domain resource is less than a first duration, receiving, by the network device, the first UL transmission on the seventh time domain resource, and/or not sending, by the network device, the first DL transmission on the seventh time domain resource;
when the time interval between the end position of the fourth time domain resource and the start position of the second time domain resource is equal to or greater than the first duration, not receiving, by the network device, the first UL transmission on the seventh time domain resource, and/or sending, by the network device, the first DL transmission on the seventh time domain resource;
when a time interval between the end position of the fourth time domain resource and a start position of the third time domain resource is less than the first duration, receiving, by the network device, the first UL transmission on the seventh time domain resource, and/or not sending, by the network device, the first DL transmission on the seventh time domain resource; or
when the time interval between the end position of the fourth time domain resource and the start position of the third time domain resource is equal to or greater than the first duration, not receiving, by the network device, the first UL transmission on the seventh time domain resource, and/or sending, by the network device, the first DL transmission on the seventh time domain resource,
wherein the fourth time domain resource is a time domain resource for the terminal device to receive the first DCI, and the seventh time domain resource corresponds to the third time domain resource.

35. The method of claim 32, wherein the first DL transmission is a DL transmission scheduled by first Downlink Control Information (DCI), the first UL transmission is a UL transmission scheduled by second DCI, and performing, by the network device, communication based on the target mode comprises:
receiving, by the network device, the first UL transmission on a seventh time domain resource, and sending the first DL transmission on the seventh time domain resource, wherein the seventh time domain resource corresponds to the third time domain resource.

36. The method of claim 32, wherein the first DL transmission is a semi-statically configured DL transmission, the first UL transmission is a semi-statically configured UL transmission, and performing, by the network device, communication based on the target mode comprises one of the following situations:
receiving, by the network device, the first UL transmission on a seventh time domain resource, and/or not sending, by the network device, the first DL transmission on the seventh time domain resource;
not receiving, by the network device, the first UL transmission on the seventh time domain resource, and/or sending, by the network device, the first DL transmission on the seventh time domain resource; or
receiving, by the network device, the first UL transmission on the seventh time domain resource, and sending the first DL transmission on the seventh time domain resource,
wherein the seventh time domain resource corresponds to the third time domain resource.

37. The method of claim 32, wherein the first DL transmission is a DL transmission scheduled by first Downlink Control Information (DCI), the first UL transmission is a semi-statically configured UL transmission, and performing, by the network device, communication based on the target mode comprises one of the following situations:
not receiving, by the network device, the first UL transmission on a seventh time domain resource, and/or sending, by the network device, the first DL transmission on the seventh time domain resource;
when a time interval between an end position of a fourth time domain resource and a start position of the second time domain resource is less than a first duration, receiving, by the network device, the first UL transmission on the seventh time domain resource, and/or not sending, by the network device, the first DL transmission on the seventh time domain resource;
when the time interval between the end position of the fourth time domain resource and the start position of the second time domain resource is equal to or greater than the first duration, not receiving, by the network device, the first UL transmission on the seventh time domain resource, and/or sending, by the network device, the first DL transmission on the seventh time domain resource;
when a time interval between the end position of the fourth time domain resource and a start position of the third time domain resource is less than the first duration, receiving, by the network device, the first UL transmission on the seventh time domain resource, and/or not sending, by the network device, the first DL transmission on the seventh time domain resource; or
when the time interval between the end position of the fourth time domain resource and the start position of the third time domain resource is equal to or greater than the first duration, not receiving, by the network device, the first UL transmission on the seventh time domain resource, and/or sending, by the network device, the first DL transmission on the seventh time domain resource,
wherein the fourth time domain resource is a time domain resource for the terminal device to receive the first DCI, and the seventh time domain resource corresponds to the third time domain resource.

38. The method of claim 32, wherein the first DL transmission is a semi-statically configured DL transmission, the first UL transmission is a UL transmission scheduled by second Downlink Control Information (DCI), and performing, by the network device, communication based on the target mode comprises:
receiving, by the network device, the first UL transmission on a seventh time domain resource; and/or
not sending, by the network device, the first DL transmission on the seventh time domain resource,
wherein the seventh time domain resource corresponds to the third time domain resource.

39. The method of claim 32, wherein the first DL transmission is a Synchronization signal/Physical broadcast channel block (SS/PBCH block (SSB)), the first UL transmission is a UL transmission scheduled by second Downlink Control Information (DCI) or a semi-statically configured UL transmission, and performing, by the network device, communication based on the target mode comprises:
not receiving, by the network device, the first UL transmission on a seventh time domain resource; and/or
sending, by the network device, the first DL transmission on the seventh time domain resource,
wherein the seventh time domain resource corresponds to the third time domain resource.

40. The method of claim 32, wherein the first DL transmission is a DL transmission scheduled by first Downlink Control Information (DCI) or a semi-statically configured DL transmission, the first UL transmission is a UL transmission on a Random Access Channel transmission Occasion (RACH Occasion (RO)), and performing, by the network device, communication based on the target mode comprises one of the following situations:
receiving, by the network device, the first UL transmission on a seventh time domain resource, and/or not sending, by the network device, the first DL transmission on the seventh time domain resource;
not receiving, by the network device, the first UL transmission on the seventh time domain resource, and/or sending, by the network device, the first DL transmission on the seventh time domain resource; or
receiving, by the network device, the first UL transmission on the seventh time domain resource, and sending the first DL transmission on the seventh time domain resource,
wherein the seventh time domain resource corresponds to the third time domain resource.

41. The method of any one of claims 32 to 40, wherein the third time domain resource comprising the overlapped part between the first time domain resource and the second time domain resource in the time domain comprises:
the third time domain resource is the overlapped part between the first time domain resource and the second time domain resource in the time domain; or
the third time domain resource is a time unit comprising the overlapped part between the first time domain resource and the second time domain resource in the time domain.

42. The method of any one of claims 33, 34, 36, 37, 38 and 40, wherein not sending, by the network device, the first DL transmission on the seventh time domain resource comprises:
not sending, by the network device, the first DL transmission; or
not sending, by the network device, a symbol of the first DL transmission located on the seventh time domain resource; or
not sending, by the network device, a DL channel or signal of the first DL transmission comprising the seventh time domain resource.

43. The method of any one of claims 34, 36, 37 and 40, wherein not receiving, by the network device, the first UL transmission on the seventh time domain resource comprises:
not receiving, by the network device, the first UL transmission; or
not receiving, by the network device, a symbol of the first UL transmission located on the seventh time domain resource; or
not receiving, by the network device, a UL channel or signal of the first UL transmission comprising the seventh time domain resource.

44. The method of claim 31, wherein the collision of the first DL transmission with the first UL transmission in the time domain comprises:
a time interval between an end position of the first time domain resource and a start position of the second time domain resource is less than a second duration; or
a time interval between an end position of the second time domain resource and a start position of the first time domain resource is less than a third duration.

45. The method of claim 44, wherein the first DL transmission is a DL transmission scheduled by first Downlink Control Information (DCI), the first UL transmission is a UL transmission scheduled by second DCI, and performing, by the network device, communication based on the target mode comprises one of the following situations:
receiving, by the network device, the first UL transmission, and/or not sending, by the network device, the first DL transmission;
not receiving, by the network device, the first UL transmission, and/or sending, by the network device, the first DL transmission;
when a time interval between an end position of a fourth time domain resource and the start position of the second time domain resource is less than a first duration, receiving, by the network device, the first UL transmission, and/or not sending, by the network device, the first DL transmission;
when the time interval between the end position of the fourth time domain resource and the start position of the second time domain resource is equal to or greater than the first duration, not receiving, by the network device, the first UL transmission, and/or sending, by the network device, the first DL transmission; or
receiving, by the network device, the first UL transmission, and sending the first DL transmission,
wherein the fourth time domain resource is a time domain resource for the terminal device to receive the first DCI.

46. The method of claim 44, wherein the first DL transmission is a semi-statically configured DL transmission, the first UL transmission is a semi-statically configured UL transmission, and performing, by the network device, communication based on the target mode comprises one of the following situations:
receiving, by the network device, the first UL transmission, and/or not sending, by the network device, the first DL transmission;
not receiving, by the network device, the first UL transmission, and/or sending, by the network device, the first DL transmission; or
receiving, by the network device, the first UL transmission, and sending, by the network device, the first DL transmission.

47. The method of claim 44, wherein the first DL transmission is a DL transmission scheduled by first Downlink Control Information (DCI), the first UL transmission is a semi-statically configured UL transmission, and performing, by the network device, communication based on the target mode comprises one of the following situations:
not receiving, by the network device, the first UL transmission, and/or sending, by the network device, the first DL transmission;
when a time interval between an end position of a fourth time domain resource and the start position of the second time domain resource is less than a first duration, receiving, by the network device, the first UL transmission, and/or not sending, by the network device, the first DL transmission; or
when the time interval between the end position of the fourth time domain resource and the start position of the second time domain resource is equal to or greater than the first duration, not receiving, by the network device, the first UL transmission, and/or sending, by the network device, the first DL transmission,
wherein the fourth time domain resource is a time domain resource for the terminal device to receive the first DCI.

48. The method of claim 44, wherein the first DL transmission is a semi-statically configured DL transmission, the first UL transmission is a UL transmission scheduled by second Downlink Control Information (DCI), and performing, by the network device, communication based on the target mode comprises:
receiving, by the network device, the first UL transmission, and/or not sending, by the network device, the first DL transmission.

49. The method of claim 44, wherein the first DL transmission is a Synchronization signal/Physical broadcast channel block (SS/PBCH block (SSB)), the first UL transmission is a UL transmission scheduled by second Downlink Control Information (DCI) or a semi-statically configured UL transmission, and performing, by the network device, communication based on the target mode comprises:
not receiving, by the network device, the first UL transmission, and/or sending, by the network device, the first DL transmission.

50. The method of claim 44, wherein the first DL transmission is a DL transmission scheduled by first Downlink Control Information (DCI) or a semi-statically configured DL transmission, the first UL transmission is a UL transmission on a Random Access Channel transmission Occasion (RACH Occasion (RO)), and performing, by the network device, communication based on the target mode comprises one of the following situations:
receiving, by the network device, the first UL transmission, and/or not sending, by the network device, the first DL transmission;
not receiving, by the network device, the first UL transmission, and/or sending, by the network device, the first DL transmission; or
receiving, by the network device, the first UL transmission, and sending, by the network device, the first DL transmission.

51. The method of any one of claims 44 to 50, wherein not sending, by the network device, the first DL transmission comprises:
not sending, by the network device, the first DL transmission on the first time domain resource; or
if the second time domain resource is prior to the first time domain resource, not sending, by the network device, a first DL channel or signal of the first DL transmission; or
if the first time domain resource is prior to the second time domain resource, not sending, by the network device, a last DL channel or signal of the first DL transmission.

52. The method of any one of claims 44 to 50, wherein not receiving, by the network device, the first UL transmission comprises:
not receiving, by the network device, the first UL transmission on the second time domain resource; or
if the first time domain resource is prior to the second time domain resource, not receiving, by the network device, a first UL channel or signal of the first UL transmission; or
if the second time domain resource is prior to the first time domain resource, not receiving, by the network device, a last UL channel or signal of the first UL transmission.

53. The method of any one of claims 34, 37, 45 and 47, wherein the first duration is determined based on a preparation time for UL transmission.

54. The method of any one of claims 44 to 53, wherein the second duration is a length of a transition time for switching from receiving to sending by the terminal device; and/or
the third duration is a length of a transition time for switching from sending to receiving by the terminal device.

55. The method of any one of claims 33, 34, 35, 37, 40, 45, 47 and 50, wherein the DL transmission scheduled by the first DCI comprises at least one of the following situations:
a Physical Downlink Shared Channel (PDSCH) scheduled in a DCI format; or
a Channel Status Indicator Reference Signal (CSI-RS) scheduled in the DCI format.

56. The method of any one of claims 36, 38, 40, 46, 48 and 50, wherein the semi-statically configured DL transmission comprises at least one of the following situations:
a Physical Downlink Control Channel (PDCCH) configured by a higher layer;
a Physical Downlink Shared Channel (PDSCH) configured by the higher layer;
a Channel Status Indicator Reference Signal (CSI-RS) configured by the higher layer; or
a DL Positioning Reference Signal (PRS) configured by the higher layer.

57. The method of any one of claims 33, 34, 35, 38, 39, 45, 48 and 49, wherein the UL transmission scheduled by the second DCI comprises at least one of the following situations:
a Physical Uplink Shared Channel (PUSCH) scheduled in a DCI format;
a Physical Uplink Control Channel (PUCCH) scheduled in the DCI format;
a Physical Random Access Channel (PRACH) scheduled in the DCI format; or
a Sounding Reference Signal (SRS) scheduled in the DCI format.

58. The method of any one of claims 36, 37, 39, 46, 47 and 49, wherein the semi-statically configured UL transmission comprises at least one of the following situations:
a Sounding Reference Signal (SRS) configured by a higher layer;
a Physical Uplink Control Channel (PUCCH) configured by the higher layer; or
a Physical Uplink Shared Channel (PUSCH) configured by the higher layer.

59. The method of any one of claims 31 to 58, wherein the target mode is determined based on at least one of the following information:
a preset rule;
configuration information of the network device;
a priority of a channel or signal comprised in the first DL transmission;
a priority of a channel or signal comprised in the first UL transmission;
the channel or signal comprised in the first DL transmission; or
the channel or signal comprised in the first UL transmission.

60. The method of any one of claims 31 to 59, wherein the TA of the terminal device is determined based on at least one of the following information:
synchronization assistance information sent by the network device;
a TA command sent by the network device; or
Global Navigation Satellite System (GNSS) positioning information of the terminal device.

61. A terminal device, comprising:
a first communication unit, configured to perform communication based on a target mode if collision of a first downlink (DL) transmission with a first uplink (UL) transmission in a time domain is determined according to a first time domain resource and a second time domain resource, wherein the first time domain resource is used for the first DL transmission, the second time domain resource is used for the first UL transmission, and the second time domain resource is determined based on Timing Advance (TA) of the terminal device.

62. A network device, comprising:
a second communication unit, configured to:
send a first downlink (DL) transmission and receive a first uplink (UL) transmission; or
perform communication based on a target mode if the collision of the first DL transmission with the first UL transmission in a time domain is determined according to a first time domain resource and a second time domain resource,
wherein the first time domain resource is a time domain resource for a terminal device to receive the first DL transmission, the second time domain resource is a time domain resource for the terminal device to send the first UL transmission, and the second time domain resource is determined based on Timing Advance (TA) of the terminal device.

63. A terminal device, comprising: a processor and a memory, wherein the memory is configured to store a computer program, and the processor is configured to invoke and run the computer program stored in the memory, to perform the method of any one of claims 1 to 30.

64. A network device, comprising: a processor and a memory, wherein the memory is configured to store a computer program, and the processor is configured to invoke and run the computer program stored in the memory, to perform the method of any one of claims 31 to 60.

65. A chip, comprising: a processor, configured to invoke and run a computer program from a memory, to cause a device mounted with the chip to perform the method of any one of claims 1 to 30 or the method of any one of claims 31 to 60.

66. A computer-readable storage medium, configured to store a computer program, wherein execution of the computer program causes a computer to perform the method of any one of claims 1 to 30 or the method of any one of claims 31 to 60.

67. A computer program product, comprising computer program instructions, wherein execution of the computer program instructions causes a computer to perform the method of any one of claims 1 to 30 or the method of any one of claims 31 to 60.

68. A computer program, wherein execution of the computer program causes a computer to perform the method of any one of claims 1 to 30 or the method of any one of claims 31 to 60.
